(19) Europäisches Patentamt
European Patent Office
Office européen des brevets

(11) EP 4 410 855 A1

(12) EUROPEAN PATENT APPLICATION
published in accordance with Art. 153(4) EPC

(43) Date of publication:
**07.08.2024 Bulletin 2024/32**

(21) Application number: **22876009.6**

(22) Date of filing: **22.09.2022**

(51) International Patent Classification (IPC):
***C08F 290/12*** (2006.01) ***G01J 1/04*** (2006.01)
***C08F 2/44*** (2006.01) ***G02B 5/02*** (2006.01)

(52) Cooperative Patent Classification (CPC):
**C08F 2/44; C08F 290/12; G01J 1/04; G02B 5/02**

(86) International application number:
**PCT/JP2022/035284**

(87) International publication number:
**WO 2023/054142 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021159034**

(71) Applicant: **FUJIFILM Corporation**
**Tokyo 106-8620 (JP)**

(72) Inventors:
- **OI, Shota**
**Haibara-gun, Shizuoka 421-0396 (JP)**
- **ARAYAMA, Kyohei**
**Haibara-gun, Shizuoka 421-0396 (JP)**
- **TAKISHITA, Hirotaka**
**Haibara-gun, Shizuoka 421-0396 (JP)**

(74) Representative: **HGF**
**HGF Limited**
**1 City Walk**
**Leeds LS11 9DX (GB)**

# (54) COMPOSITION, RESIN, FILM AND OPTICAL SENSOR

(57) Provided are a composition containing particles having a refractive index of 2.0 or more and an average primary particle diameter of 200 nm or less, a film-forming component, and a solvent, in which the film-forming component includes two or more kinds of resins, or includes one or more kinds of resins and one or more kinds of polymerizable monomers, and at least one kind of the resins includes a resin a having a partial structure represented by Formula (1); a film formed of the composition; an optical sensor; and a resin including at least one repeating unit selected from a repeating unit represented by Formula (1-1) or a repeating unit represented by Formula (1-2).

EP 4 410 855 A1

## Description

### BACKGROUND OF THE INVENTION

1. Field of the Invention

The present invention relates to a composition containing particles having a high refractive index, a resin, a film, and an optical sensor.

2. Description of the Related Art

Titanium oxide is particles having a high refractive index. Attempts to use such particles having a high refractive index for a light scattering film or the like have been studied.
On the other hand, Patent Literature 1 discloses an invention relating to an antiglare coating composition containing a polyfunctional unsaturated double bond-containing monomer, an unsaturated double bond-containing acrylic copolymer, and fine particles having an average particle diameter of 0.1 to 10.0 μm and a refractive index of 1.34 to 1.75.

3. Citation List

Patent Literature

Patent Literature 1: JP2019-070714A

### SUMMARY OF THE INVENTION

In recent years, there has been an increasing demand for a film which appropriately blocks visible light and has high light scattering properties. In order to increase light scattering properties of the film, a method of using particles having a high refractive index has been known.
However, it has been found that, in a case where a film is formed of a composition containing particles having a high refractive index, it tends to be difficult for a curing reaction to reach a deep portion of the film.
In addition, according to an investigation by the present inventor, it has been found that there is room for further improvement in curing properties of the antiglare coating composition disclosed in JP2019-070714A.
Accordingly, an object of the present invention is to provide a composition having excellent curing properties. Another object of the present invention is to provide a resin, a film, and an optical sensor.
As a result of thorough investigation under the above-described circumstances, the present inventor has found that the object of the present invention can be achieved by using a composition described below, thereby completing the present invention. The present invention provides the following.

<1> A composition comprising:

particles having a refractive index of 2.0 or more and an average primary particle diameter of 200 nm or less;
a film-forming component; and
a solvent,
in which the film-forming component includes two or more kinds of resins, or includes one or more kinds of resins and one or more kinds of polymerizable monomers, and
at least one kind of the resins includes a resin a having a partial structure represented by Formula (1),

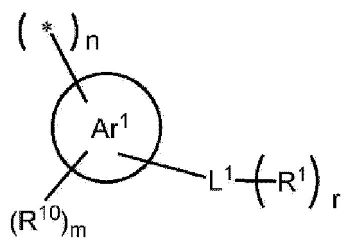

(1)

in Formula (1), $Ar^1$ represents an aromatic ring, $L^1$ represents a single bond or an (r+1)-valent linking group, $R^1$ represents an ethylenically unsaturated bond-containing group, $R^{10}$ represents a substituent, * represents a bonding site, n represents 1 or 2, m represents 0 or an integer of 1 or more, and r represents an integer of 1 or more,
provided that in a case where m is 2 or more, m pieces of $R^{10}$'s may be the same or different from each other, and in a case where r is 2 or more, r pieces of $R^1$'s may be the same or different from each other.

<2> The composition according to <1>,
in which an ethylenically unsaturated bond-containing group value of the resin a is 0.1 to 2.0 mmol/g.
<3> The composition according to <1> or <2>,

in which the film-forming component includes a resin as a dispersant of the particles and a resin as a binder, and at least one selected from the resin as a dispersant of the particles or the resin as a binder is the resin a.

<4> The composition according to <3>,
in which the film-forming component includes 40 to 250 parts by mass of the resin as a binder with respect to 100 parts by mass of the resin as a dispersant of the particles.
<5> The composition according to any one of <1> to <4>,

in which the film-forming component includes a resin having a structure in which a plurality of polymer chains are bonded to a tri- or higher valent linking group and a resin having a repeating unit having a graft chain, and at least one selected from the resin having a structure in which a plurality of polymer chains are bonded to a tri- or higher valent linking group or the resin having a repeating unit having a graft chain is the resin a.

<6> The composition according to <5>,
in which the graft chain includes a polyester structural repeating unit.
<7> The composition according to any one of <1> to <6>,

in which the resin a is a resin including at least one repeating unit selected from a repeating unit represented by Formula (1-1) or a repeating unit represented by Formula (1-2),

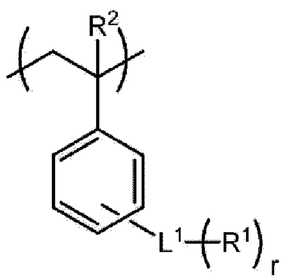
(1-1)

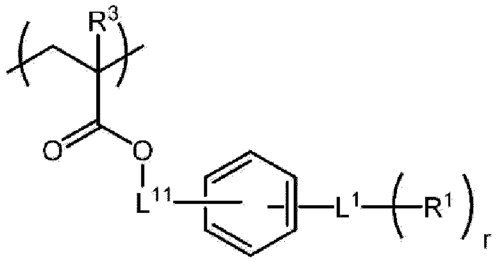
(1-2)

in the formulae, $L^1$ represents a single bond or an (r+1)-valent linking group,
$R^1$ represents an ethylenically unsaturated bond-containing group,
$R^2$ and $R^3$ each independently represent a hydrogen atom or an alkyl group,
$L^{11}$ represents a single bond or a divalent linking group, and
r represents an integer of 1 or more,
provided that in a case where r is 2 or more, r pieces of $R^1$'s may be the same or different from each other.

<8> The composition according to any one of <1> to <7>,
in which a weight-average molecular weight of the resin a is 8,000 to 120,000.
<9> The composition according to any one of <1> to <8>,
in which an acid value of the resin a is 20 to 200 mgKOH/g.
<10> The composition according to any one of <1> to <9>,
in which, in a case where a film having a thickness of 8 μm is formed by heating the composition at 200°C for 5 minutes, a phase-separated structure of a first phase containing the particles and a second phase having a lower content of the particles than the first phase is formed in the film.

<11> The composition according to <10>,
in which the phase-separated structure is a sea-island structure or a co-continuous phase structure.
<12> The composition according to any one of <1> to <11>,
in which the average primary particle diameter of the particles is 100 nm or less.
<13> The composition according to any one of <1> to <12>,
in which the particles are inorganic particles.
<14> The composition according to <13>,
in which the inorganic particles include at least one selected from titanium oxide particles, strontium titanate particles, barium titanate particles, zinc oxide particles, magnesium oxide particles, zirconium oxide particles, aluminum oxide particles, aluminum hydroxide particles, barium sulfate particles, or zinc sulfide particles.
<15> A resin comprising:

at least one repeating unit selected from a repeating unit represented by Formula (1-1) or a repeating unit represented by Formula (1-2),

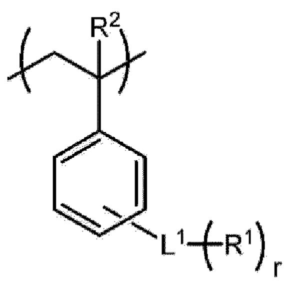

(1-1)

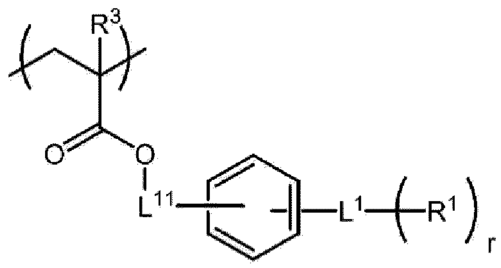

(1-2)

in the formulae, $L^1$ represents a single bond or an (r+1)-valent linking group,
$R^1$ represents an ethylenically unsaturated bond-containing group,
$R^2$ and $R^3$ each independently represent a hydrogen atom or an alkyl group,
$L^{11}$ represents a single bond or a divalent linking group, and
r represents an integer of 1 or more,
provided that in a case where r is 2 or more, r pieces of $R^1$'s may be the same or different from each other.

<16> A film formed of the composition according to any one of <1> to <14>.
<17> An optical sensor comprising:
the film according to <16>.

According to the present invention, it is possible to provide a composition having excellent curing properties. In addition, it is possible to provide a resin, a film, and an optical sensor.

## BRIEF DESCRIPTION OF THE DRAWINGS

Fig. 1 is a schematic diagram showing an embodiment of an optical sensor according to the present invention.
Fig. 2 is a schematic diagram showing another embodiment of the optical sensor according to the present invention.

## DESCRIPTION OF THE PREFERRED EMBODIMENTS

Hereinafter, the details of the present invention will be described.
The following description regarding configuration requirements has been made based on a representative embodiment of the present invention. However, the present invention is not limited to the embodiment.
In the present specification, numerical ranges represented by "to" include numerical values before and after "to" as lower limit values and upper limit values.
In the present specification, unless specified as a substituted group or as an unsubstituted group, a group (atomic group) denotes not only a group (atomic group) having no substituent but also a group (atomic group) having a substituent. For example, "alkyl group" denotes not only an alkyl group having no substituent (unsubstituted alkyl group)

but also an alkyl group having a substituent (substituted alkyl group).

In the present specification, "(meth)acrylate" represents acrylate or methacrylate, "(meth)acryl" represents acryl and methacryl, "(meth)allyl" represents allyl and methallyl, and "(meth)acryloyl" represents acryloyl and methacryloyl.

In the present specification, in a chemical formula, Me represents a methyl group, Et represents an ethyl group, Pr represents a propyl group, Bu represents a butyl group, and Ph represents a phenyl group.

In the present specification, unless specified otherwise, "exposure" denotes not only exposure using light but also drawing using a corpuscular beam such as an electron beam or an ion beam. Examples of the light used for exposure include an actinic ray or radiation, for example, a bright light spectrum of a mercury lamp, a far ultraviolet ray represented by excimer laser, an extreme ultraviolet ray (EUV light), an X-ray, or an electron beam.

In the present specification, a weight-average molecular weight and a number-average molecular weight are defined as values in terms of polystyrene measured by gel permeation chromatography (GPC). In the present specification, the weight-average molecular weight (Mw) and the number-average molecular weight (Mn) can be obtained, for example, by using HLC-8220GPC (manufactured by Tosoh Corporation), using a column in which TOSOH TSK gel Super HZM-H, TOSOH TSK gel Super HZ4000, and TOSOH TSK gel Super HZ2000 are linked to each other, and using tetrahydrofuran as a developing solvent.

In the present specification, a value of refractive index is a value of refractive index with refractive index to light at a wavelength of 589 nm at 23°C, unless otherwise specified.

<Composition>

The composition according to the embodiment of the present invention is a composition containing particles having a refractive index of 2.0 or more and an average primary particle diameter of 200 nm or less, a film-forming component, and a solvent,

in which the film-forming component includes two or more kinds of resins, or includes one or more kinds of resins and one or more kinds of polymerizable monomers, and
at least one kind of the resins includes a resin a having a partial structure represented by Formula (1).

The composition according to the embodiment of the present invention contains, as the film-forming component, two or more kinds of resins, or one or more kinds of resins and one or more kinds of polymerizable monomers, in which at least one kind of the resins includes a resin a having a partial structure represented by Formula (1). Since the above-described resin a has the partial structure represented by Formula (1), it is presumed that the resins a are easily brought into contact with each other at the time of film formation due to $\pi$-$\pi$ interaction between aromatic rings, and thus a curing reaction of the resin a easily proceeds. In addition, it is presumed that, in a case where the resin a has the partial structure represented by Formula (1), a curing reaction between the resin a and film-forming components other than the resin a can also be promoted, and thus the curing reaction can easily reach a deep portion of the film during the film formation. Therefore, the composition according to the embodiment of the present invention has excellent curing properties. Since the composition according to the embodiment of the present invention has excellent curing properties, for example, in a case where a pattern is formed by a photolithography method using the composition according to the embodiment of the present invention, occurrence of undercut can be suppressed. In addition, by using the composition according to the embodiment of the present invention, a film having excellent adhesiveness to a support can also be formed.

In general, in a case where a composition containing particles having a high refractive index is cured by exposure to light, exposure light is scattered by the particles, and thus the exposure light tends to be less likely to reach the deep portion (support side) of the film. Therefore, particularly in the deep portion of the film, the curing reaction during exposure tends to be low. In a case where the curing reaction of the deep portion of the film is insufficient, the undercut is likely to occur in the obtained film, or the adhesiveness to the support is likely to be insufficient. However, in the composition according to the embodiment of the present invention, even in a case where the film is cured by exposure to light, the curing reaction in the deep portion of the film can proceed sufficiently. Therefore, it is particularly effective in a case where the composition according to the embodiment of the present invention is a photocurable composition. In a case where the composition according to the embodiment of the present invention is used as a photocurable composition, it is preferable that the composition according to the embodiment of the present invention further contains a photopolymerization initiator (preferably, a photoradical polymerization initiator).

In addition, since the composition according to the embodiment of the present invention contains the particles having a refractive index of 2.0 or more and the above-described film-forming component, in a case where a film is formed of the composition according to the embodiment of the present invention, a phase-separated structure of a first phase containing the particles and a second phase having a lower content of the particles than the first phase can also be formed in the film. In addition, since the above-described resin a has the partial structure represented by Formula (1), it is presumed that the resins a easily are brought into contact with each other during the film formation due to the

$\pi$-$\pi$ interaction between the aromatic rings, $\pi$-$\pi$ interaction between the aromatic ring and the ethylenically unsaturated bond-containing group, or the like, and thus aggregation of the resins a is appropriately promoted and the above-described phase-separated structure is easily formed. It is considered that, by forming such a phase-separated structure in the film, a bias can be generated at a position where the particles are present in the film, and the first phase which is a region having a high refractive index and the second phase which is a region having a low refractive index are mixed in the film. Since light scattering occurs between these two phases, the film obtained from the composition according to the embodiment of the present invention has excellent light scattering properties.

In addition, the film formed of the composition according to the embodiment of the present invention also has excellent heat resistance. It is presumed that this is because a strong network is formed by the above-described resin a in the film, and thus a change in dispersion state of the particles in the film due to heating can be suppressed.

In addition, the composition according to the embodiment of the present invention also has excellent storage stability. Many particles having a refractive index of 2.0 or more generally have a large specific gravity, but in the composition according to the embodiment of the present invention, since the particles having a relatively small particle diameter with an average primary particle diameter of 200 nm or less are used as the particles having a refractive index of 2.0 or more, sedimentation of the particles in the composition including a solvent can be suppressed, and as a result, excellent storage stability can be obtained.

In the composition according to the embodiment of the present invention, in a case where the composition is heated at 200°C for 5 minutes to form a film having a thickness of 8 $\mu$m, it is preferable that a phase-separated structure between a first phase including the particles and a second phase with a lower content of the particles than the first phase is formed in the film. By forming such a phase-separated structure in the film, the light scattering properties can be improved, and angle dependence of the scattered light can be reduced.

A base material of the first phase and the second phase is the film-forming component or a cured substance derived from the film-forming component. In addition, mere aggregates of the above-described particles are one form of the particles, and the mere aggregates of the above-described particles themselves are not the first phase. The above-described first phase is a phase in which the above-described particles are present in the film-forming component or the cured substance derived from the film-forming component. In addition, it is sufficient that the second phase has a lower content of the above-described particles than the first phase, and the second phase may not substantially contain the above-described particles. For the reason that it is easy to obtain more excellent light scattering properties, it is preferable that the second phase does not substantially include the above-described particles.

The formation of the phase-separated structure between the first phase and the second phase in the film can be observed using a scanning electron microscope (SEM), a transmission electron microscope (TEM), or an optical microscope. For example, the composition is applied to a support such as a glass substrate and heated at 200°C for 5 minutes to form a film having a thickness of 4 $\mu$m, and then a cross section of the obtained film in a thickness direction is observed using a scanning electron microscope (SEM), a transmission electron microscope (TEM), or an optical microscope. As a result, it is possible to investigate whether or not the phase-separated structure between the first phase and the second phase is formed in the film.

In addition, for example, in a case where the composition includes a polymerizable compound and a photopolymerization initiator as a film-forming component, exposure for curing the polymerizable compound may be performed before the heating.

The above-described formation of the phase-separated structure can be achieved by appropriately changing the type of the resin or the polymerizable monomer used in the film-forming component.

Examples of one aspect thereof include a method of using, as the film-forming component, a first resin and a second resin having low compatibility with the first resin. In a case where such a film-forming component is used, a phase-separated structure between a phase containing the first resin as a main component and a phase containing the second resin as a main component can be formed during film formation. For example, in a case where one of the first resin or the second resin is a resin as a dispersant of the particles and the other is a binder resin, many particles can be unevenly distributed in the phase including the resin as a dispersant as a main component.

In addition, examples of another aspect thereof include a method of using, as the film-forming component, a first resin and a polymerizable monomer having low compatibility with the first resin. In a case where such a film-forming component is used, a phase-separated structure between a phase including the first resin as a main component and a phase containing a cured substance derived from the polymerizable monomer as a main component can be formed during film formation.

In addition, examples of still another aspect thereof include a method in which the type of the resin or the polymerizable monomer used in the film-forming component is appropriately changed, and the film-forming component is spinodally decomposed during film formation to form a phase-separated structure between the first phase and the second phase.

The phase-separated structure in the above-described film preferably has a phase interface isotropically present in the film, and for example, more preferably a sea-island structure or a co-continuous phase structure. By forming these

phase-separated structures, light can be effectively scattered between the first phase and the second phase, and particularly excellent light scattering properties can be easily obtained. The sea-island structure is a structure formed by a sea region which is a continuous region and an island region which is a discontinuous region. In the sea-island structure, the second phase may form the sea and the first phase may form the island, or the first phase may form the sea and the second phase may form the island. The case where the first phase forms the sea and the second phase forms the island is preferable from the viewpoint of transmittance. The case where the first phase forms the island and the second phase forms the sea is preferable from the viewpoint of angle dependence. In addition, the co-continuous phase structure is a network structure in which the first phase and the second phase each form a continuous phase structure intrusive to each other.

In a case where the composition according to the embodiment of the present invention is heated at 200°C for 5 minutes to form a film having a thickness of 8 μm, from the viewpoint of reducing wavelength dependence of light scattering, the maximum value of transmittance of the film with respect to light in a wavelength range of 400 to 700 nm is preferably 80% or less, more preferably 70% or less, still more preferably 60% or less, and particularly preferably 50% or less. The lower limit of the maximum value of the above-described transmittance is preferably 1% or more, more preferably 5% or more, still more preferably 10% or more, even more preferably 15% or more, and particularly preferably 20% or more.

In addition, the maximum value of transmittance of the above-described film with respect to light in 400 to 1000 nm is preferably 80% or less, more preferably 75% or less, still more preferably 70% or less, even more preferably 60% or less, and particularly preferably 50% or less. The lower limit of the maximum value of the above-described transmittance is preferably 1% or more, more preferably 5% or more, still more preferably 10% or more, even more preferably 15% or more, and particularly preferably 20% or more.

The average value of a difference in refractive index between the phases in the above-described film is preferably 0.1 or more, more preferably 0.2 or more, still more preferably 0.3 or more, and particularly preferably 0.4 or more.

The haze of the above-described film based on JIS K 7136 is preferably 30% to 100%. The upper limit is preferably 99% or less, more preferably 95% or less, and still more preferably 90% or less. The lower limit is preferably 35% or more, more preferably 40% or more, and still more preferably 50% or more.

The formation of the film having such spectral characteristics can be achieved by appropriately adjusting a shape of the phase-separated structure, a refractive index of the particles, an abundance of the particles in the film, a degree of uneven distribution of the particles in the film, and the like. In this case, it is better to be a higher refractive index of the particles, abundance of the particles, and degree of uneven distribution of the particles.

A concentration of solid contents of the composition according to the embodiment of the present invention is preferably 5% to 80% by mass. The upper limit is preferably 75% by mass or less and more preferably 70% by mass or less. The lower limit is preferably 10% by mass or more, more preferably 15% by mass or more, and still more preferably 20% by mass or more.

Hereinafter, each of the components used in the composition according to the embodiment of the present invention will be described.

«Particles P1 (particles having refractive index of 2.0 or more and average primary particle diameter of 200 nm or less)»

The composition according to the embodiment of the present invention includes particles (hereinafter, also referred to as particles P1) having a refractive index of 2.0 or more and an average primary particle diameter of 200 nm or less.

The average primary particle diameter of the particles P1 is 200 nm or less, and from the viewpoint of storage stability of the composition, is preferably 100 mn or less. In addition, from the viewpoint of the storage stability of the composition and light scattering properties of a film to be obtained, the average primary particle diameter of the particles P1 is preferably 5 nm to 100 nm, more preferably 10 nm to 100 nm, still more preferably 20 nm to 100 nm, even more preferably 30 nm to 100 nm, even still more preferably 40 nm to 100 nm, and particularly preferably 50 nm to 100 nm.

In the present specification, the average primary particle diameter of particles is a value measured by the following method. That is, the primary particle diameter of the particles can be obtained by observing the particles with a transmission electron microscope (TEM) and observing a portion (primary particle) where the particles do not aggregate. A particle size distribution of the particles can be obtained by photographing a transmission electron micrograph of the primary particles using a transmission electron microscope and measuring a particle size distribution with an image processing device using the micrograph. In the present specification, the average primary particle diameter of the particles refers to the number average particle size calculated from the particle size distribution. In the present specification, an electron microscope (H-7000, manufactured by Hitachi, Ltd.) is used as the transmission electron microscope, and a LUZEX AP (manufactured by Nireco Corporation) is used as the image processing device.

The refractive index of the particles P1 is 2.0 or more, preferably 2.2 or more and more preferably 2.4 or more. The upper limit of the refractive index of the particles P1 is not particularly limited, but may be 5 or less or 4 or less.

The refractive index of particles is a value measured by the following method. First, a dispersion liquid is prepared using the particles, a resin (dispersant) having a known refractive index, and propylene glycol monomethyl ether acetate. Next, the prepared dispersion liquid and a resin having a known refractive index are mixed with each other to prepare coating liquids in which the concentrations of the particles is 10% by mass, 20% by mass, 30% by mass, and 40% by mass with respect to the total solid content of the coating liquids. Using each of the coating liquids, a film having a thickness of 300 nm is formed on a silicon wafer, and the refractive index of the obtained film is measured by ellipsometry (LAMBDA ACE RE-3300, manufactured by SCREEN Holdings Co., Ltd.). Next, the refractive index corresponding to the concentration of the particles is plotted on a graph to derive the refractive index of the particles.

The specific gravity of the particles P1 is preferably 1 to 7 $g/cm^3$. The upper limit is preferably 6 $g/cm^3$ or less and more preferably 5 $g/cm^3$ or less. The lower limit of the specific gravity is not particularly limited, but may be 1.5 $g/cm^3$ or more or 2 $g/cm^3$ or more.

In the present specification, the specific gravity of particles is a value measured by the following method. First, 50 g of particles are put into a 100 mL volumetric flask. Subsequently, 100 mL of water is weighed using another 100 mL graduated cylinder. Thereafter, first, the weighed water is put into the volumetric flask to the extent that the particles are immersed, and then ultrasonic waves are applied to the volumetric flask to allow the particles and water to blend in. Next, additional water is added thereto until the marked line of the volumetric flask is reached, and the specific gravity is calculated as 50 g/(volume of water remaining in volumetric flask).

The particles P1 are preferably transparent or white particles. In addition, the particles P1 are preferably inorganic particles. Specific examples of the type of the inorganic particles include titanium oxide particles, strontium titanate particles, barium titanate particles, zinc oxide particles, magnesium oxide particles, zirconium oxide particles, aluminum oxide particles, barium sulfate particles, and zinc sulfide particles. The inorganic particles used as the particles P1 are preferably particles having a titanium atom and more preferably titanium oxide particles.

In the titanium oxide particles, the content (purity) of titanium dioxide ($TiO_2$) is preferably 70% by mass or more, more preferably 80% by mass or more, and still more preferably 85% by mass or more. In the titanium oxide particles, the content of lower titanium oxide represented by $Ti_nO_{2n-1}$ (n represents a number of 2 to 4), titanium nitride, or the like is preferably 30% by mass or less, more preferably 20% by mass or less, and still more preferably 15% by mass or less.

The titanium oxide may be rutile type titanium oxide or anatase type titanium oxide. From the viewpoint of colorability and the temporal stability of the dispersion liquid or the composition, rutile type titanium oxide is preferable. In particular, rutile type titanium oxide has a small change in color difference and excellent colorability even under heating. In addition, the rutile transformation rate of the titanium oxide is preferably 95% or more and more preferably 99% or more.

As rutile type titanium oxide, a known titanium oxide can be used. As a method of manufacturing rutile type titanium oxide, two methods including a sulfuric acid method and a chlorine method are present, and a titanium oxide manufactured using any one of the methods can be suitably used. Here, the sulfuric acid method refers to a manufacturing method including: dissolving ilmenite ore or titanium slug as a raw material in concentrated sulfuric acid to separate iron as iron sulfate; hydrolyzing the separated solution to obtain a precipitate of hydroxide; and calcinating the precipitate at a high temperature to extract rutile type titanium oxide. In addition, the chlorine method refers to a manufacturing method including: causing synthetic rutile or natural rutile as a raw material to react with chlorine gas or carbon at a high temperature of approximately 1,000°C to synthesize of titanium tetrachloride; and oxidizing the titanium tetrachloride at a high temperature to extract rutile type titanium oxide. It is preferable that rutile type titanium oxide is obtained using the chlorine method.

As the specific surface area of titanium oxide particles, a value measured using a Brunauer, Emmett, Teller (BET) method is preferably 10 to 400 $m^2/g$, more preferably 10 to 200 $m^2/g$, still more preferably 10 to 150 $m^2/g$, particularly preferably 10 to 40 $m^2/g$, and most preferably 10 to 20 $m^2/g$. The pH of titanium oxide is preferably 6 to 8. The oil absorption of titanium oxide is preferably 10 to 60 (g/100 g) and more preferably 10 to 40 (g/100 g).

In the titanium oxide particles, the total content of $Fe_2O_3$, $Al_2O_3$, $SiO_2$, $Nb_2O_5$, and $Na_2O$ is preferably 0.1% by mass or less, more preferably 0.05% by mass or less, still more preferably 0.02% by mass or less, and particularly preferably substantially 0% by mass.

The shape of the titanium oxide particles is not particularly limited. Examples of the shape of titanium oxide include an isotropic shape (for example, a spherical shape and a polyhedral shape), an anisotropic shape (for example, a needle shape, a rod shape, and a plate shape), and an unstructured shape. The hardness (Mohs hardness) of titanium oxide particles is preferably 5 to 8 and more preferably 7 to 7.5.

The inorganic particles such as the titanium oxide particles may be surface-treated with a surface treatment agent such as an organic compound. Examples of the surface treatment agent used for the surface treatment of the titanium oxide include polyol, aluminum oxide, aluminum hydroxide, silica (silicon oxide), water-containing silica, alkanolamine, stearic acid, organosiloxane, zirconium oxide, hydrogen dimethicone, a silane coupling agent, and a titanate coupling agent. In particular, a silane coupling agent is preferable. The surface treatment may be performed using one surface treatment agent alone or a combination of two or more surface treatment agents.

It is also preferable that the inorganic particles such as the titanium oxide particles are covered with a basic

metal oxide or a basic metal hydroxide. Examples of the basic metal oxide or the basic metal hydroxide include a metal compound including magnesium, zirconium, cerium, strontium, antimony, barium, calcium, or the like.

In addition, as the titanium oxide particles, titanium oxide particles described in "Titanium Oxide - Physical Properties and Applied Technology, Manabu Kiyono, pp. 13 to 45, June 25, 1991, published by Gihodo Shuppan Co., Ltd.) can also be suitably used.

As the particles P1, a commercially available product can be preferably used. The commercially available product may be used as it is or may be used after a classification treatment. Examples of the commercially available product of titanium oxide particles include:

products manufactured by ISHIHARA SANGYO KAISHA, LTD. such as trade name TIPAQUE R-550, R-580, R-630, R-670, R-680, R-780, R-780-2, R-820, R-830, R-850, R-855, R-930, R-980, CR-50, CR-50-2, CR-57, CR-58, CR-58-2, CR-60, CR-60-2, CR-63, CR-67, CR-Super 70, CR-80, CR-85, CR-90, CR-90-2, CR-93, CR-95, CR-953, CR-97, PF-736, PF-737, PF-742, PF-690, PF-691, PF-711, PF-739, PF-740, PC-3, S-305, CR-EL, PT-301, PT-401M, PT-401L, PT-501A, PT-501R, UT771, TTO-51, TTO-80A, TTO-S-2, A-220, MPT-136, MPT-140, or MPT-141;
products manufactured by Sakai Chemical Industry Co., Ltd. such as trade names R-3L, R-5N, R-7E, R-11P, R-21, R-25, R-32, R-42, R-44, R-45M, R-62N, R-310, R-650, SR-1, D-918, GTR-100, FTR-700, TCR-52, A-110, A-190, SA-1, SA-1L, STR-100A-LP, STR-100C-LP, or TCA-123E;
products manufactured by TAYCA Corporation such as trade name JR, JRNC, JR-301, JR-403, JR-405, JR-600A, JR-600E, JR-603, JR-605, JR-701, JR-800, JR-805, JR-806, JR-1000, MT-01, MT-05, MT-10EX, MT-100S, MT-100TV, MT-100Z, MT-100AQ, MT-100WP, MT-100SA, MT-100HD, MT-150EX, MT-150W, MT-300HD, MT-500B, MT-500SA, MT-500HD, MT-600B, MT-600SA, MT-700B, MT-700BS, MT-700HD, or MT-700Z;
products manufactured by Titan Kogyo Ltd. such as trade name KR-310, KR-380, KR-380N, or ST-485SA15;
products manufactured by Fuji Titanium Industry Co., Ltd. such as trade name TR-600, TR-700, TR-750, TR-840, or TR-900; and
products manufactured by Shiraishi Calcium Kaisha Ltd. such as trade name Brilliant 1500. In addition, titanium oxide particles described in paragraphs 0025 to 0027 of JP2015-067794A can also be used.

Examples of a commercially available product of strontium titanate particles include SW-100 (manufactured by Titan Kogyo Ltd.). Examples of a commercially available product of barium sulfate particles include BF-1L (manufactured by Sakai Chemical Industry Co., Ltd.). Examples of a commercially available product of zinc oxide particles include Zincox Super F-1 (manufactured by Hakusui Chemical Co., Ltd.). Examples of a commercially available product of zirconium oxide particles include Z-NX (manufactured by Taiyo Koko Co., Ltd.) and Zirconeo-Cp (manufactured by ITEC Co., Ltd.).

The content of the particles P1 in the total solid content of the composition is preferably 5 to 90% by mass. The upper limit is preferably 85% by mass or less, more preferably 80% by mass or less, and still more preferably 70% by mass or less. The lower limit is preferably 6% by mass or more, more preferably 10% by mass or more, and still more preferably 15% by mass or more.

The composition according to the embodiment of the present invention may contain only one kind of the particles P1 or two or more kinds of the particles P1. In a case where only one kind of the particles P1 is included, more excellent storage stability is easily obtained. In addition, in a case where two or more kinds of the particles P1 are contained, the angle dependence of light scattering can be further reduced. In a case where two or more kinds of the particles P1 are contained, the total content thereof is preferably within the above-described range.

«Particles P2»

The composition according to the embodiment of the present invention can contain particles (hereinafter, also referred to as particles P2) having a refractive index of less than 2.0, an average primary particle diameter of 500 nm or more, and a specific gravity smaller than that of the particles P1. In a case where the composition according to the embodiment of the present invention contains P2 in addition to P1, scattering occurs between the particles P1 and the particles P2, so that light irradiated to the film can be efficiently scattered and transmitted. Therefore, by using such a composition, a film having more excellent light scattering properties can be formed.

The average primary particle diameter of the particles P2 is 500 nm or more, preferably 500 nm to 6000 nm, more preferably 500 nm to 5000 nm, still more preferably 500 nm or more and less than 3000 nm, even more preferably 500 nm to 2500 nm, even still more preferably 500 nm to 2000 nm, particularly preferably 500 nm to 1500 nm, and most preferably 500 nm to 1000 nm.

The refractive index of the particles P2 is less than 2.0, preferably 1.9 or less, more preferably 1.8 or less, and particularly preferably 1.7 or less. The lower limit of the refractive index of the particles P2 is not particularly limited, and may be 1.0 or more or 1.1 or more.

For the reason that a film having excellent light scattering properties is easily obtained, the difference between the refractive index of the particles P1 and the refractive index of the particles P2 is preferably 0.5 or more, more preferably 0.7 or more, and still more preferably 0.9 or more. In a case where the composition according to the embodiment of the present invention contain two or more kinds of the particles P1, in calculating the difference in refractive index described above, the mass average value of the refractive indexes of two or more kinds of the particles P1 is used as the value of the refractive index of the particles P1. The same applies to a case where the composition according to the embodiment of the present invention contains two or more kinds of the particles P2.

The specific gravity of the particles P2 is preferably 2.5 g/$cm^3$ or less, more preferably 2.4 g/$cm^3$ or less, still more preferably 2.2 g/$cm^3$ or less, and particularly preferably 2.0 g/$cm^3$ or less. The lower limit of the specific gravity of the particles P2 is not particularly limited, but may be 0.5 g/$cm^3$ or more or 0.9 g/$cm^3$ or more.

The particles P2 are preferably transparent or white particles. Examples of the particles P2 include inorganic particles and resin particles. Examples of the type of the inorganic particles include silica particles, hollow titanium oxide particles, and hollow zirconia particles. Among these, silica particles are preferable. Examples of a commercially available product of the inorganic particles include Sylysia series manufactured by FUJI SILYSIA CHEMICAL LTD. (for example, Sylysia 310P and the like) and Seahostar series manufactured by NIPPON SHOKUBAI CO., LTD. (for example, Seahostar KE-S250).

Examples of the resin particles include particles consisting of a synthetic resin such as a (meth)acrylic resin, a styrene resin, a polyamide resin, a polyimide resin, a polyolefin resin, a polyurethane resin, a polyurea resin, a polyester resin, a melanin resin, and a silicone resin, and particles consisting of a natural polymer such as chitin, chitosan, cellulose, crosslinked starch, and crosslinked cellulose. Among these, the synthetic resin particles are preferably used because they have advantages such as easy control of particle size.

As a method of producing the resin particles, in a case of a relatively hard resin such as polymethylmethacrylate (PMMA), fine particles can be formed according to a crushing method, but a method of producing resin particles according to an emulsification and suspension polymerization method is preferable from the viewpoint of ease of controlling the particle diameter, and precision. The method of producing the resin particles is described in detail in "Ultrafine Particles and Materials" edited by Materials Science Society of Japan, published by SHOKABO Co., Ltd., published in 1993, "Manufacturing & Application of Microspheres & Powders" supervised by Haruma Kawaguchi, published by CMC Publishing Co., Ltd., published in 2005, and the like.

The resin particles are also available as commercially available products, and examples thereof include MX-40T, MX-80H3wT, MX-150, MX-180TA, MX-300, MX-500, MX-1000, MX-1500H, MR-2HG, MR-7HG, MR-10HG, MR-3GSN, MR-5GSN, MR-7G, MR-10G, MR-5C, and MR-7GC (all manufactured by Soken Chemical & Engineering Co., Ltd., acrylic resin particles); SX-130H, SX-350H, and SX-500H (all manufactured by Soken Chemical & Engineering Co., Ltd., styrene resin particles); MBX-5, MBX-8, MBX-12, MBX-15, MBX-20, MB20X-5, MB30X-5, MB30X-8, MB30X-20, SBX-6, SBX-8, SBX-12, and SBX-17 (all manufactured by Sekisui Plastics Co., Ltd., acrylic resin particles); CHEMIPEARL W100, W200, W300, W308, W310, W400, W401, W405, W410, W500, WF640, W700, W800, W900, W950, and WP100 (all manufactured by Mitsui Chemicals, Inc., polyolefin resin particles); Tospearl 120 (manufactured by Momentive Performance Technologies, silicone resin particles); and Optbeads 2000M (manufactured by Nissan Chemical Corporation, melanin resin particles).

The particles P2 are also preferably hollow particles. The hollow particles refer to particles having voids in which no material constituting the particles exists inside a surface of the particles. The size, shape, and number of voids are not particularly limited. The hollow particles may have an outer shell structure have a void in the central portion, or a structure in which a plurality of fine voids are dispersed inside the particles.

The void ratio of the hollow particles is preferably 1% to 90%. The lower limit of the void ratio is preferably 5% or more and more preferably 10% or more. The upper limit of the void ratio is preferably 85% or less and more preferably 80% or less. The void ratio of the hollow particles refers to a proportion of the volume occupied by the voids to the total volume of the hollow particles. The void ratio of the hollow particles can be obtained by observing hollow particles using a transmission electron microscope, measuring an outer diameter and a void diameter, and calculating "the proportion of the volume occupied by the void to the total volume" according to the following expression.

$$\text{Expression: } \{(\text{Void diameter})^3/(\text{Outer diameter})^3\} \times 100\%$$

More specific examples thereof include a method in which 100 hollow particles observed by a transmission electron microscope are optionally selected, equivalent circle diameters of an outer and a void of each of these hollow particles are measured to obtain the outer diameter and the void diameter, and a void ratio is calculated according to the above expression and an average value thereof is determined as the void ratio. In addition, in a case where a material of a shell of the particles (refractive index thereof) is known and it is known that the particles are hollow, the void ratio can be also be known from the measurement of the refractive index of the particles.

The shape of the hollow particles is preferably spherical, but may be a shape other than the spherical shape, such as an amorphous shape.

The hollow particles may be hollow particles formed of an inorganic material (hereinafter, also referred to as hollow inorganic particles), or may be hollow particles formed of a resin material (hereinafter, also referred to as hollow resin particles).

Examples of the material constituting the hollow resin particles include a (meth)acrylic resin, a styrene resin, a polyamide resin, a polyimide resin, a polyolefin resin, a polyurethane resin, a polyurea resin, a polyester resin, a silicone resin, and a melanin resin. Among these, a (meth)acrylic resin or a styrene resin is preferable, and a (meth)acrylic resin is more preferable. Examples of a method for manufacturing the hollow resin particles include a method of containing a forming agent in the resin particles and foaming the forming agent, a method of encapsulating a volatile substance in the resin particles and gasifying the volatile substance to be expanded, a method of melting the resin particles and injecting a gas such as air into the resin particles, and a method (hereinafter, also referred to as a solvent removal method) in which a polymerizable monomer and a non-polymerizable solvent are mixed and polymerized to obtain resin particles encompassing the solvent, and the solvent is removed.

The hollow inorganic particles are preferably hollow silica particles. That is, the hollow inorganic particles are preferably silica particles having a void in the central portion. Specific examples of the hollow silica particles include hollow particles described in JP2013-237593A, WO2007/060884A, and the like.

A content of the particles P2 in the total solid content of the composition is preferably 1% to 70% by mass. The upper limit is preferably 60% by mass or less and more preferably 50% by mass or less. The lower limit is preferably 2% by mass or more, more preferably 5% by mass or more, and still more preferably 10% by mass or more. The composition according to the embodiment of the present invention may contain only one kind of the particles P2 or two or more kinds of the particles P2. In a case where only one kind of the particles P2 is included, more excellent storage stability is easily obtained. In addition, in a case where two or more kinds of the particles P2 are contained, the angle dependence of light scattering can be further reduced. In a case where two or more kinds of the particles P2 are contained, the total content thereof is preferably within the above-described range.

The total content of the particles P1 and the particles P2 in the total solid content of the composition is preferably 30% by mass or more, more preferably 35% by mass or more, and still more preferably 40% by mass or more. The upper limit is preferably 90% by mass or less, more preferably 80% by mass or less, and still more preferably 70% by mass or less.

With regard to the proportion of the particles P1 and the particles P2 in the composition, it is preferable that the particles P1 is 20 to 500 parts by mass with respect to 100 parts by mass of the particles P2. The upper limit is preferably 450 parts by mass or less, more preferably 400 parts by mass or less, and still more preferably 300 parts by mass or less. The lower limit is preferably 25 parts by mass or more, more preferably 30 parts by mass or more, and still more preferably 35 parts by mass or more.

<<Film-forming component>>

The composition according to the embodiment of the present invention contain a film-forming component. The film-forming component used in the present invention includes two or more kinds of resins, or includes one or more kinds of resins and one or more kinds of polymerizable monomers. At least one kind of the resins includes a resin a having a partial structure represented by Formula (1) (hereinafter, also referred to as a resin a).

[Resin]

The film-forming component includes a resin. It is preferable that the resin includes a resin as a dispersant of the above-described particles P1 and a resin as a binder, and at least one selected from the resin as a dispersant or the resin as a binder is the resin a.

In a case where both of the resin as a dispersant and the resin as a binder are the resin a, the curing properties are favorable, and an effect of improving the undercut, heat resistance, and tape peeling resistance is further increased. In the case where the resin a is a binder and a resin b described later is a dispersant, phase separation property is enhanced by aggregation due to interaction between the phase-separated resins, and the light scattering properties are improved. In addition, in a case where the resin b described later is a binder and the resin a is a dispersant, the phase separation property is enhanced by aggregation due to interaction between the dispersants, and the light scattering properties are improved.

In a case where the film-forming component includes the resin as a dispersant and the resin as a binder, it is preferable that the film-forming component includes 30 to 250 parts by mass of the resin as a binder with respect to 100 parts by mass of the resin as a dispersant. The lower limit is preferably 40 parts by mass or more and more preferably 50 parts by mass or more. The upper limit is preferably 225 parts by mass or less and more preferably 200 parts by

mass or less.

In addition, a content of the dispersant in the composition is preferably 5 to 150 parts by mass with respect to 100 parts by mass of the above-described particles P1. The upper limit is preferably 140 parts by mass or less, more preferably 125 parts by mass or less, and still more preferably 100 parts by mass or less. The lower limit is preferably 10 parts by mass or more, more preferably 15 parts by mass or more, and still more preferably 25 parts by mass or more.

In addition, the resin as a binder preferably has low compatibility with the resin as a dispersant for the particles. By using such resins in combination, it is easy to form the phase-separated structure between the above-described first phase and the above-described second phase in the film formed of the composition, and it is easy to improve the light scattering properties of the obtained film.

It is preferable that the film-forming component includes a resin having a structure in which a plurality of polymer chains are bonded to a tri- or higher valent linking group (hereinafter, also referred to as a resin A1) and a resin having a repeating unit having a graft chain (hereinafter, also referred to as a resin A2), in which at least one selected from the resin A1 or the resin A2 is the resin a. In a case where the composition according to the embodiment of the present invention contains such a film-forming component, the above-described phase-separated structure can be formed in the film during the film formation, and thus a film having excellent light scattering properties can be formed. In a case where at least one selected from the resin A1 or the resin A2 is the resin a, aggregation of the resins a is appropriately promoted during the film formation, the sizes of the first phase and the second phase can be appropriately grown, and the formation of the phase-separated structure can be further promoted. Therefore, a film having more excellent light scattering properties can be formed.

Both the resin A1 and the resin A2 may be the resins a, or one of the resin A1 or the resin A2 may be the resin a and the other may be the resin b described later.

In a case where both the resin A1 and the resin A2 are the resins a, the curing properties are favorable, and the effect of improving the undercut, heat resistance, and tape peeling resistance is further increased. In a case where the resin A1 is the resin a and the resin b described later is the resin A2, the phase separation property is improved and the light scattering properties are improved. In a case where the resin A2 is the resin a and the resin b described later is the resin A1, the phase separation property is improved and the light scattering properties are improved.

From the reason that it is easy to form the above-described phase-separated structure in the film during the film formation, it is preferable that one of the resin A1 or the resin A2 is a dispersant and the other is a binder described later, and it is more preferable that the resin A1 is a dispersant and the resin A2 is a binder.

Examples of preferred combinations of the resin A1 and the resin A2 include a combination of a resin in which, in the resin A1, the polymer chains bonded to the tri- or higher valent linking group are a polymer chain including a repeating unit of at least one type of structure selected from a poly(meth)acrylic structure or a polystyrene structure and a resin in which the graft chain of the resin A2 is a graft chain including a polyester structural repeating unit. In a case where such resins A1 and A2 are used in combination, the phase-separated structure of the first phase and the second phase described above is easily formed in the film during the film formation, and the light scattering properties of the obtained film are easily improved.

The resin a may be a random polymer or a block polymer.

A content of the resin in the total solid content of the composition is preferably 0.1% to 60% by mass. The lower limit is preferably 1% by mass or more and more preferably 5% by mass or more. The upper limit is preferably 50% by mass or less and more preferably 45% by mass or less.

In addition, the film-forming component preferably includes 40 to 250 parts by mass of the resin (resin A2) having a repeating unit having a graft chain with respect to 100 parts by mass of the resin (resin A1) having a structure in which a plurality of polymer chains are bonded to a tri- or higher valent linking group. The lower limit is preferably 50 parts by mass or more and more preferably 60 parts by mass or more. The upper limit is preferably 225 parts by mass or less and more preferably 200 parts by mass or less.

In addition, the total content of the resin (resin A1) having a structure in which a plurality of polymer chains are bonded to a tri- or higher valent linking group and the resin (resin A2) having a repeating unit having a graft chain in the total amount of the resins contained in the composition is preferably 50% by mass or more, more preferably 80% by mass or more, and still more preferably 90% by mass or more.

Next, the resin a will be described.

(Resin a)

The resin a is a resin having a partial structure represented by Formula (1).

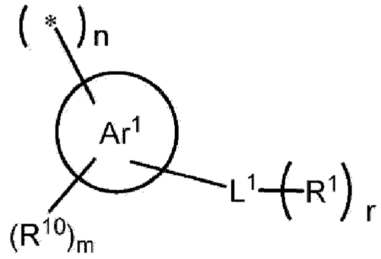

(1)

In Formula (1), $Ar^1$ represents an aromatic ring, $L^1$ represents a single bond or an (r+1)-valent linking group, $R^1$ represents an ethylenically unsaturated bond-containing group, $R^{10}$ represents a substituent, * represents a bonding site, n represents 1 or 2, m represents 0 or an integer of 1 or more, and r represents an integer of 1 or more,

provided that in a case where m is 2 or more, m pieces of $R^{10}$'s may be the same or different from each other, and in a case where r is 2 or more, r pieces of $R^1$'s may be the same or different from each other.

Examples of the aromatic ring represented by $Ar^1$ in Formula (1) include an aromatic hydrocarbon ring and an aromatic heterocyclic ring, and an aromatic hydrocarbon ring is preferable. Examples of a heteroatom included in the aromatic heterocyclic ring include a nitrogen atom, a sulfur atom, and an oxygen atom. The aromatic heterocyclic ring is preferably a 5-membered ring or a 6-membered ring.

The aromatic ring represented by $Ar^1$ may be a fused ring, but is preferably a monocyclic aromatic ring.

Specific examples of the aromatic hydrocarbon ring include a benzene ring, a naphthalene ring, an anthracene ring, and a fluorene ring.

Specific examples of the aromatic heterocyclic ring include a pyrrole ring, a furan ring, a thiophene ring, a pyridine ring, an imidazole ring, a pyrazole ring, an oxazole ring, a thiazole ring, a pyridazine ring, a pyrimidine ring, a pyrazine ring, an indole ring, an isoindole ring, a benzimidazole ring, a benzoxazole ring, a benzothiazole ring, a benzotriazole ring, a quinoline ring, an isoquinoline ring, a quinazoline ring, a quinoxaline ring.

The aromatic ring represented by $Ar^1$ is preferably a benzene ring.

Examples of the substituent represented by $R^{10}$ in Formula (1) include groups exemplified in a substituent T described later, and an alkyl group, an aryl group, a heteroaryl group, or a halogen atom is preferable.

Examples of the (r+1)-valent linking group represented by $L^1$ in Formula (1) include an aliphatic hydrocarbon group, -O-, -CO-, -COO-, -OCO-, -CONH-, -NHCO-, -NH-, -S-, and a group formed by a combination of two or more of these groups. The number of carbon atoms in the aliphatic hydrocarbon group is preferably 1 to 30, more preferably 1 to 20, and still more preferably 1 to 15. The alkylene group may be linear, branched, or cyclic. The aliphatic hydrocarbon group may have a substituent. Examples of the substituent include a halogen atom, a hydroxy group, an amino group, and a thiol group, and a hydroxy group is preferable.

The (r+1)-valent represented by $L^1$ is preferably a group represented by Formula (L-1).

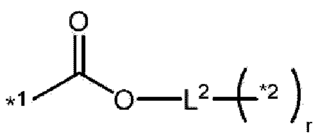

(L-1)

In the formula, $*^1$ is a bonding site to $Ar^1$, $*^2$ is a bonding site to $R^1$, $L^2$ represents an (r+1)-valent linking group, and r represents an integer of 1 or more.

The (r+1)-valent linking group represented by $L^2$ is preferably a group including an aliphatic hydrocarbon group.

Examples of a preferred aspect of the (r+1)-valent linking group represented by $L^2$ include an aspect in which $L^2$ is an aliphatic hydrocarbon group.

In addition, examples of another preferred aspect of the (r+1)-valent linking group represented by $L^2$ include an aspect in which two or more aliphatic hydrocarbon groups are bonded to each other through -O-, -CO-, -COO-, -OCO-, -CONH-, -NHCO-, -NH-, or -S-.

Examples of the ethylenically unsaturated bond-containing group represented by $R^1$ in Formula (1) include a vinyl group, a styrene group, a maleimide group, a (meth)allyl group, a (meth)acryloyl group, a (meth)acryloyloxy group,

and a (meth)acryloylamide group; and a (meth)acryloyl group, a (meth)acryloyloxy group, or a (meth)acryloylamide group is preferable, a (meth)acryloyloxy group is more preferable, and an acryloyloxy group is still more preferable.

n in Formula (1) represents 1 or 2, and is preferably 1.

Examples of the resin including a partial structure in which n in Formula (1) is 1 include a resin including a repeating unit represented by Formula (1-1) and a resin including a repeating unit represented by Formula (1-2), which will be described later.

Examples of the resin including a partial structure in which n in Formula (1) is 2 include a resin including a repeating unit having a structure shown below.

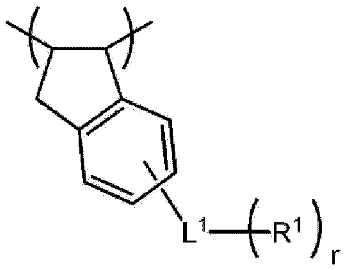

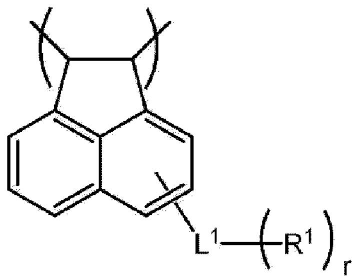

m in Formula (1) represents 0 or an integer of 1 or more, and is preferably 0, 1, or 2, more preferably 0 or 1, and still more preferably 0.

r in Formula (1) represents an integer of 1 or more, and is preferably 1 or 2 and more preferably 2.

Examples of the above-described substituent T include the following groups:

a halogen atom (for example, a fluorine atom, a chlorine atom, a bromine atom, and an iodine atom), an alkyl group (preferably an alkyl group having 1 to 30 carbon atoms), an alkenyl group (preferably an alkenyl group having 2 to 30 carbon atoms), an alkynyl group (preferably an alkynyl group having 2 to 30 carbon atoms), an aryl group (preferably an aryl group having 6 to 30 carbon atoms), a heteroaryl group (preferably a heteroaryl group having 1 to 30 carbon atoms), an amino group (preferably an amino group having 0 to 30 carbon atoms), an alkoxy group (preferably an alkoxy group having 1 to 30 carbon atoms), an aryloxy group (preferably an aryloxy group having 6 to 30 carbon atoms), a heteroaryloxy group (preferably a heteroaryloxy group having 1 to 30 carbon atoms), an acyl group (preferably an acyl group having 2 to 30 carbon atoms), an alkoxycarbonyl group (preferably an alkoxycarbonyl group having 2 to 30 carbon atoms), an aryloxycarbonyl group (preferably an aryloxycarbonyl group having 7 to 30 carbon atoms), a heteroaryloxycarbonyl group (preferably a heteroaryloxycarbonyl group having 2 to 30 carbon atoms), an acyloxy group (preferably an acyloxy group having 2 to 30 carbon atoms), an acylamino group (preferably an acylamino group having 2 to 30 carbon atoms), an aminocarbonylamino group (preferably an aminocarbonylamino group having 2 to 30 carbon atoms), an alkoxycarbonylamino group (preferably an alkoxycarbonylamino group having 2 to 30 carbon atoms), an aryloxycarbonylamino group (preferably an aryloxycarbonylamino group having 7 to 30 carbon atoms), a sulfamoyl group (preferably a sulfamoyl group having 0 to 30 carbon atoms), a sulfamoylamino group (preferably a sulfamoylamino group having 0 to 30 carbon atoms), a carbamoyl group (preferably a carbamoyl group having 1 to 30 carbon atoms), an alkylthio group (preferably an alkylthio group having 1 to 30 carbon atoms), an arylthio group (preferably an arylthio group having 6 to 30 carbon atoms), a heteroarylthio group (preferably a heteroarylthio group having 1 to 30 carbon atoms), an alkylsulfonyl group (preferably an alkylsulfonyl group having 1 to 30 carbon atoms), an alkylsulfonylamino group (preferably an alkylsulfonylamino group having 1 to 30 carbon atoms), an arylsulfonyl group (preferably an arylsulfonyl group having 6 to 30 carbon atoms), an arylsulfonylamino group (preferably an arylsulfonylamino group having 6 to 30 carbon atoms), a heteroarylsulfonyl group (preferably a heteroarylsulfonyl group having 1 to 30 carbon atoms), a heteroarylsulfonylamino group (preferably a heteroarylsulfonylamino group having 1 to 30 carbon atoms), an alkylsulfinyl group (preferably an alkylsulfinyl group having 1 to 30 carbon atoms), an arylsulfinyl group (preferably an arylsulfinyl group having 6 to 30 carbon atoms), a heteroarylsulfinyl group (preferably a heteroarylsulfinyl group having 1 to 30 carbon atoms), a ureide group (preferably a ureide group having 1 to 30 carbon atoms), a hydroxy group, a nitro group, a carboxy group, a sulfo group, a phosphoric acid group, a carboxylic acid amide group, a sulfonamide group, an imide group, a phosphino group, a mercapto group, a cyano group, an alkylsulfino group, an arylsulphino group, an arylazo group, a heteroarylazo group, a phosphinyl group, a phosphinyloxy group, a phosphinylamino group, a silyl group, a hydradino group, and an imino group. In a case where the above-described groups can be further substituted, the groups may further have a substituent.

The resin a is preferably at least one repeating unit selected from a repeating unit represented by Formula (1-1) or a repeating unit represented by Formula (1-2). The repeating unit represented by Formula (1-1) and the repeating unit represented by Formula (1-2) are repeating units including the partial structure represented by Formula (1) described above.

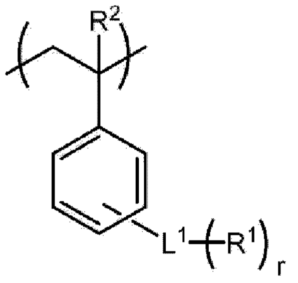

(1-1)

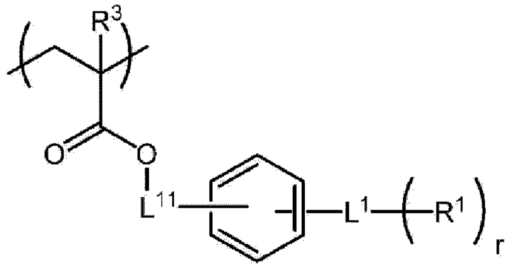

(1-2)

In the formulae, $L^1$ represents a single bond or an (r+1)-valent linking group,

$R^1$ represents an ethylenically unsaturated bond-containing group,
$R^2$ and $R^3$ each independently represent a hydrogen atom or an alkyl group,
$L^{11}$ represents a single bond or a divalent linking group, and
r represents an integer of 1 or more,
provided that in a case where r is 2 or more, r pieces of $R^1$'s may be the same or different from each other.

$L^1$, $R^1$, and r in Formula (1-1) and Formula (1-2) have the same meanings as $L^1$, $R^1$, and r in Formula (1).
The number of carbon atoms in the alkyl group represented by $R^2$ in Formula (1-1) is preferably 1 to 10, more preferably 1 to 5, and still more preferably 1 to 3. The alkyl group may be linear, branched, or cyclic, but is preferably linear. $R^2$ is preferably a hydrogen atom or a methyl group and more preferably a hydrogen atom.
The number of carbon atoms in the alkyl group represented by $R^3$ in Formula (1-2) is preferably 1 to 10, more preferably 1 to 5, and still more preferably 1 to 3. The alkyl group may be linear, branched, or cyclic, but is preferably linear. $R^3$ is preferably a hydrogen atom or a methyl group and more preferably a methyl group.
Examples of the divalent linking group represented by $L^{11}$ in Formula (1-2) include an alkylene group, an arylene group, -O-, -CO-, -COO-, -OCO-, -CONH-, -NHCO-, -NH-, -S-, and a group formed by a combination of two or more of these groups. The number of carbon atoms in the alkylene group preferably is 1 to 30, more preferably 1 to 20, and still more preferably 1 to 15. The alkylene group may be linear, branched, or cyclic. The number of carbon atoms in the arylene group is preferably 6 to 30, more preferably 6 to 20, and still more preferably 6 to 10. The alkylene group and the arylene group may have a substituent. Examples of the substituent include groups in the description of the substituent T described above.
The divalent linking group represented by $L^{11}$ is preferably a group including an alkylene group.
It is also preferable that the resin a has an acid group. Examples of the acid group include a carboxy group, a sulfo group, and a phosphoric acid group, and a carboxy group is preferable.
The resin a also preferably includes a partial structure represented by Formula (2).

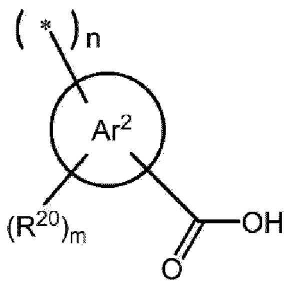

(2)

In Formula (2), $Ar^2$ represents an aromatic ring, $R^{20}$ represents a substituent, * represents a bonding site, n represents an integer of 1 or more, and m represents 0 or an integer of 1 or more, provided that in a case where m is 2 or more, m pieces of $R^{10}$'s may be the same or different from each other.
$Ar^2$, $R^{20}$, n, and m in Formula (2) have the same meanings as $Ar^1$, $R^{10}$, n, and m in Formula (1).
In a case where the resin a includes the partial structure represented by Formula (2), it is preferable that the resin a is a resin including at least one repeating unit selected from a repeating unit represented by Formula (2-1) or a

repeating unit represented by Formula (2-2).

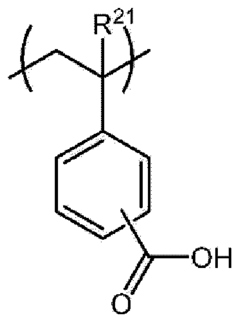

(2-1)

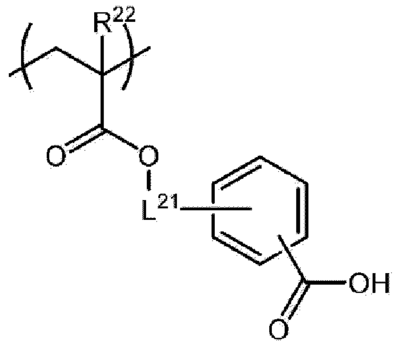

(2-2)

In the formulae, $R^{21}$ and $R^{22}$ each independently represent a hydrogen atom or an alkyl group. $L^{21}$ represents a single bond or a divalent linking group.

Details of $R^{21}$ in Formula (2-1) are the same as the contents described in $R^2$ in Formula (1-1), and a preferred range thereof is also the same.

Details of $R^{22}$ in Formula (2-2) are the same as the contents described in $R^3$ in Formula (1-2), and a preferred range thereof is also the same.

Details of $L^{21}$ in Formula (2-2) are the same as the contents described in $L^{11}$ in Formula (1-2), and a preferred range thereof is also the same.

The resin a may further include a repeating unit represented by Formula (3-1). According to the aspect, the heat resistance and the tape peeling resistance can be further improved.

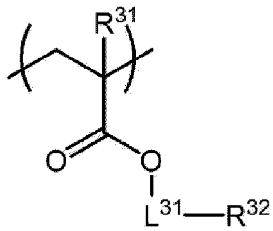

(3-1)

In the formula, $R^{31}$ represents a hydrogen atom or an alkyl group,

$L^{31}$ represents a single bond or a divalent linking group, and
$R^{32}$ represents an alkyl group or an aryl group.

The number of carbon atoms in the alkyl group represented by $R^{31}$ in Formula (3-1) is preferably 1 to 10, more preferably 1 to 5, and still more preferably 1 to 3. The alkyl group may be linear, branched, or cyclic, but is preferably linear. $R^3$ is preferably a hydrogen atom or a methyl group and more preferably a methyl group.

Examples of the divalent linking group represented by $L^{31}$ in Formula (3-1) include an alkylene group, an arylene group, -O-, -CO-, -COO-, -OCO-, -CONH-, -NHCO-, -NH-, -S-, and a group formed by a combination of two or more of these groups. The number of carbon atoms in the alkylene group preferably is 1 to 30, more preferably 1 to 20, and still more preferably 1 to 15. The alkylene group may be linear, branched, or cyclic. The number of carbon atoms in the arylene group is preferably 6 to 30, more preferably 6 to 20, and still more preferably 6 to 10.

$L^{31}$ is preferably a single bond or an alkylene group and more preferably an alkylene group.

$R^{32}$ in Formula (3-1) represents an alkyl group or an aryl group, and an aryl group is preferable.

The number of carbon atoms in the alkyl group represented by $R^{32}$ is preferably 1 to 30, more preferably 1 to 20, and still more preferably 1 to 15. The alkyl group may be linear, branched, or cyclic.

The number of carbon atoms in the aryl group represented by $R^{32}$ is preferably 6 to 30, more preferably 6 to 20, and still more preferably 6 to 10.

Examples of the resin a include the resin (resin A1) having a structure in which a plurality of polymer chains are bonded to a tri- or higher valent linking group, the resin (resin A2) having a repeating unit having a graft chain, a random polymer, and a block polymer, and the resin (resin A1) having a structure in which a plurality of polymer chains are bonded to a tri- or higher valent linking group or the resin (resin A2) having a repeating unit having a graft chain is preferable.

-Resin (resin A1) having structure in which plurality of polymer chains are bonded to tri- or higher valent linking group-

In a case where the resin a is a resin having a structure in which a plurality of polymer chains are bonded to a tri- or higher valent linking group, it is preferable that the polymer chains bonded to the tri- or higher valent linking group include the partial structure represented by Formula (1) described above, and it is more preferable to include the repeating unit represented by Formula (1-1) or Formula (1-2) described above. The resin having a structure in which a plurality of polymer chains are bonded to a tri- or higher valent linking group may be used as a binder or a dispersant. It is preferable to use as a dispersant.

In a case where the resin a is a resin having a structure in which a plurality of polymer chains are bonded to a tri- or higher valent linking group, the resin a is preferably a resin having a structure represented by Formula (SP-1).

$$\left[ A^1 - Y^1 \right]_n Z^1 \left[ Y^2 - P^1 \right]_m \qquad \text{(SP-1)}$$

In the formula, $Z^1$ represents an (m+n)-valent linking group,

$Y^1$ and $Y^2$ each independently represent a single bond or a linking group,
$A^1$ represents a group including a functional group selected from a heterocyclic group, an acid group, a group having a basic nitrogen atom, a urea group, a urethane group, a group having a coordinating oxygen atom, a hydrocarbon group having 4 or more carbon atoms, an alkoxysilyl group, an epoxy group, an isocyanate group, and a hydroxy group,
$P^1$ represents a polymer chain having the partial structure represented by Formula (1) described above,
n represents 1 to 20, m represents 2 to 20, and m + n is 3 to 21,
provided that n pieces of $Y^1$'s or $A^1$'s may be the same or different from each other, and m pieces of $Y^2$'s or $P^1$'s may be the same or different from each other.

In Formula (SP-1), n represents 1 to 20, and is preferably 1 to 10, more preferably 1 to 6, and still more preferably 1 to 4. The lower limit of n can be 2 or more or 3 or more.

In Formula (SP-1), m represents 2 to 20, and is preferably 2 to 10, more preferably 2 to 6, and still more preferably 2 to 4.

In Formula (SP-1), m + n is 3 to 21, preferably 3 to 12, more preferably 3 to 10, and still more preferably 3 to 6. The lower limit of m + n can be 4 or more or 5 or more.

In Formula (SP-1), $A^1$ represents a group including the above-described functional group. As the functional group included in $A^1$, a heterocyclic group, an acid group, a group having a basic nitrogen atom, a hydrocarbon group having 4 or more carbon atoms, or a hydroxy group is preferable, and an acid group is more preferable. Examples of the acid group include a carboxy group, a sulfo group, and a phosphoric acid group, and a carboxy group is preferable.

It is sufficient that at least one of the above-described functional group is included in one $A^1$, and two or more substituents may be included in one $A^1$. $A^1$ preferably includes 1 to 10 of the above-described substituents, and more preferably includes 1 to 6 of the above-described substituents. In addition, as the group including the above-described functional group, which is represented by $A^1$, a group which is formed by the above-described functional group and a linking group including 1 to 200 carbon atoms, 0 to 20 nitrogen atoms, 0 to 100 oxygen atoms, 1 to 400 hydrogen atoms, and 0 to 40 sulfur atoms being bonded to each other can be used. Examples thereof include a group which is formed by one or more acid groups being bonded through a chain-like saturated hydrocarbon group having 1 to 10 carbon atoms, a cyclic saturated hydrocarbon group having 3 to 10 carbon atoms, or an aromatic hydrocarbon group having 5 to 10 carbon atoms. The chain-like saturated hydrocarbon group, the cyclic saturated hydrocarbon group, and the aromatic hydrocarbon group may further have a substituent. Examples of the substituent include an alkyl group having 1 to 20 carbon atoms, an aryl group having 6 to 16 carbon atoms, a hydroxy group, a carboxy group, an amino group, a sulfonamide group, an N-sulfonylamide group, an acyloxy group having 1 to 6 carbon atoms, an alkoxy group having 1 to 20 carbon atoms, a halogen atom, an alkoxycarbonyl group having 2 to 7 carbon atoms, a cyano group, a carbonic acid ester group, and an ethylenically unsaturated bond-containing group. In addition, the above-described functional

group itself may be $A^1$.

A chemical formula weight of $A^1$ is preferably 30 to 2,000. The upper limit is preferably 1,000 or less and more preferably 800 or less. The lower limit is preferably 50 or more and more preferably 100 or more.

In Formula (SP-1), $Z^1$ represents an (m+n)-valent linking group. Examples of the (m+n)-valent linking group include a group composed of 1 to 100 carbon atoms, 0 to 10 nitrogen atoms, 0 to 50 oxygen atoms, 1 to 200 hydrogen atoms, and 0 to 20 sulfur atoms. Examples of the (m+n)-valent linking group also include a group (which may form a ring structure) composed of the following structural unit or a combination of two or more the following structural units. In the formulae, * represents a bonding site.

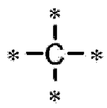 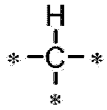 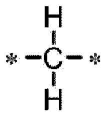 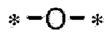 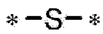 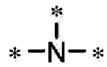 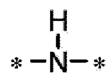 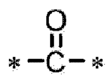 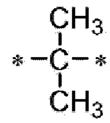

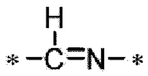 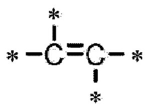 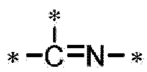 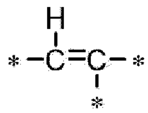 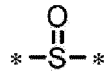 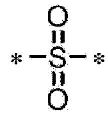 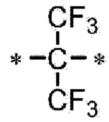

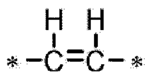 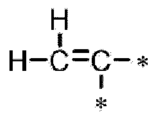 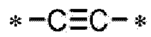 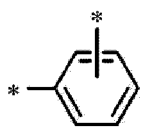 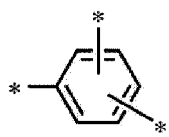

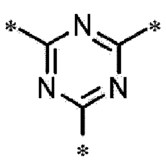 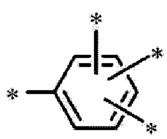 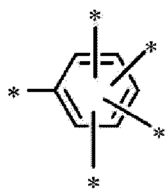 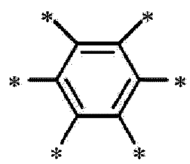

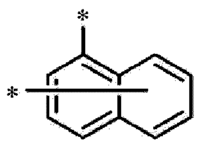 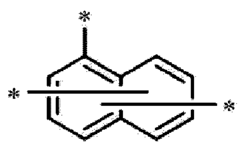 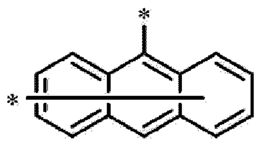

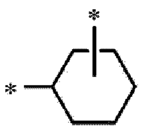 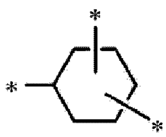 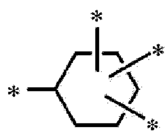 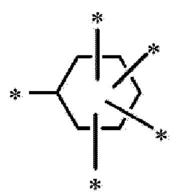 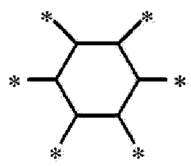

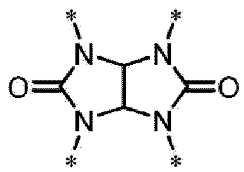 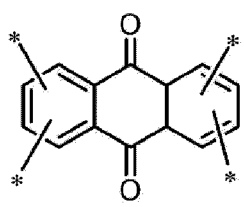 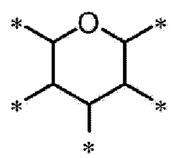

The (m+n)-valent linking group may have a substituent. Examples of the substituent include an alkyl group having 1 to 20 carbon atoms, an aryl group having 6 to 16 carbon atoms, a hydroxy group, an amino group, a carboxy group, a sulfonamide group, an N-sulfonylamide group, an acyloxy group having 1 to 6 carbon atoms, an alkoxy group having 1 to 20 carbon atoms, a halogen atom, an alkoxycarbonyl group having 2 to 7 carbon atoms, a cyano group, a

carbonic acid ester group, and an ethylenically unsaturated bond-containing group.

It is preferable that the (m+n)-valent linking group represented by $Z^1$ is a group represented by any one of Formulae (Z-1) to (Z-4).

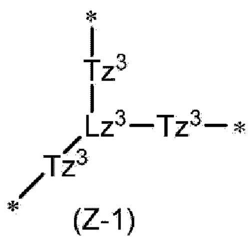

(Z-1)

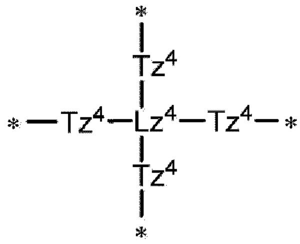

(Z-2)

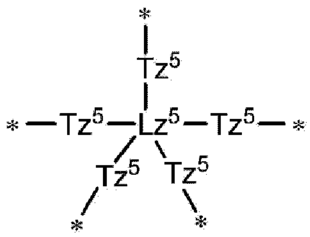

(Z-3)

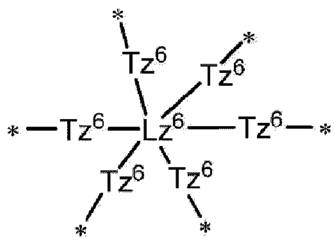

(Z-4)

In Formula (Z-1), $Lz^3$ represents a trivalent group, $Tz^3$ represents a single bond or a divalent linking group, and three $Tz^3$'s may be the same or different from each other.

In Formula (Z-2), $Lz^4$ represents a tetravalent group, $Tz^4$ represents a single bond or a divalent linking group, and four $Tz^4$'s may be the same or different from each other.

In Formula (Z-3), $Lz^5$ represents a pentavalent group, $Tz^5$ represents a single bond or a divalent linking group, and five $Tz^5$'s may be the same or different from each other.

In Formula (Z-4), $Lz^6$ represents a hexavalent group, $Tz^6$ represents a single bond or a divalent linking group, and six $Tz^6$'s may be the same or different from each other.

In the above formulae, * represents a bonding site.

Examples of the divalent linking group represented by $Tz^3$ to $Tz^6$ include an alkylene group, an arylene group, a heterocyclic group, -O-, -CO-, -COO-, -OCO-, -NR-, -CONR-, - NRCO-, -S-, -SO-, $-SO_2-$, and a linking group formed by linking two or more of these groups. Here, R's each independently represent a hydrogen atom, an alkyl group, or an aryl group.

The number of carbon atoms in the alkyl group and in the alkylene group is preferably 1 to 30. The upper limit is more preferably 25 or less and still more preferably 20 or less. The lower limit is more preferably 2 or more and still more preferably 3 or more. The alkyl group and the alkylene group may be linear, branched, or cyclic.

The number of carbon atoms in the aryl group and in the arylene group is preferably 6 to 20 and more preferably 6 to 12.

The heterocyclic group is preferably a 5-membered ring or a 6-membered ring. A heteroatom included in the heterocyclic group is preferably an oxygen atom, a nitrogen atom, or a sulfur atom. The number of heteroatoms included in the heterocyclic group is preferably 1 to 3.

The alkylene group, the arylene group, the heterocyclic group, the alkyl group, and the aryl group may be unsubstituted or may have a substituent. Examples of the substituent include groups in the description of the substituent T described above.

Examples of the trivalent group represented by $Lz^3$ include a group obtained by removing one hydrogen atom from the above-described divalent linking group. Examples of the tetravalent group represented by $Lz^4$ include a group obtained by removing two hydrogen atoms from the above-described divalent linking group. Examples of the pentavalent group represented by $Lz^5$ include a group obtained by removing three hydrogen atoms from the above-described divalent linking group. Examples of the hexavalent group represented by $Lz^6$ include a group obtained by removing four hydrogen atoms from the above-described divalent linking group. The trivalent to hexavalent group represented by $Lz^3$ to $Lz^6$ may have a substituent. Examples of the substituent include groups in the description of the substituent T described above.

A chemical formula weight of $Z^1$ is preferably 20 to 3,000. The upper limit is preferably 2,000 or less and more

preferably 1,500 or less. The lower limit is preferably 50 or more and more preferably 100 or more. In a case where the chemical formula weight of $Z^1$ is within the above-described range, the dispersibility of the pigment in the composition can be improved. The chemical formula weight of $Z^1$ is a value calculated from the structural formula.

Specific examples of the (m+n)-valent linking group can be found in paragraphs 0043 to 0055 of JP2014-177613A, the content of which is incorporated herein by reference.

In Formula (SP-1), $Y^1$ and $Y^2$ each independently represent a single bond or a linking group. Examples of the linking group include a group composed of 1 to 100 carbon atoms, 0 to 10 nitrogen atoms, 0 to 50 oxygen atoms, 1 to 200 hydrogen atoms, and 0 to 20 sulfur atoms. The above-described group may further have the above-described substituent. Specific examples of the linking group represented by $Y^1$ and $Y^2$ include a group composed of one of the following structural units or a combination of two or more of the structural units.

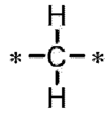 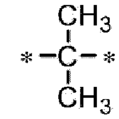 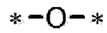 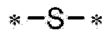 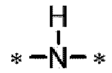 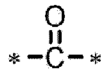 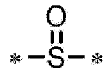 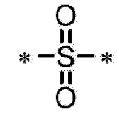

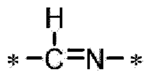 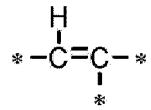 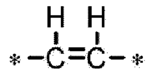 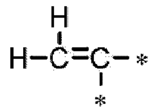 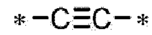

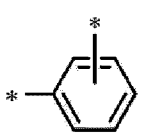 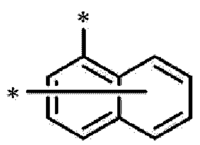 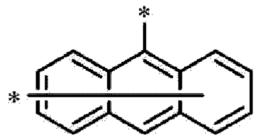 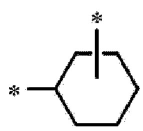

It is preferable that $Y^1$ and $Y^2$ are a group including a sulfur atom.

In Formula (SP-1), $P^1$ represents a polymer chain having the partial structure represented by Formula (1) described above. The polymer chain represented by $P^1$ is preferably a polymer chain including a repeating unit of at least one type of structure selected from a poly(meth)acrylic structure or a polystyrene structure. In addition, the polymer chain represented by $P^1$ is more preferably a polymer chain including at least one repeating unit selected from the repeating unit represented by Formula (1-1) or the repeating unit represented by Formula (1-2) described above. The repeating unit represented by Formula (1-1) is a polystyrene structural repeating unit, and the repeating unit represented by Formula (1-2) is a poly(meth)acrylic structural repeating unit. Hereinafter, the repeating unit represented by Formula (1-1) and the repeating unit represented by Formula (1-2) will also be collectively referred to as a repeating unit (1).

In addition, a content of the repeating unit (1) in all repeating units constituting $P^1$ is preferably 10% to 80% by mass. The upper limit is preferably 75% by mass or less and more preferably 70% by mass or less. The lower limit is preferably 15% by mass or more and more preferably 20% by mass or more.

The polymer chain represented by $P^1$ may include a repeating unit having an acid group, but from the viewpoint of dispersibility, it is preferable to not include the repeating unit having an acid group. In addition, the repeating unit having an acid group is preferably at least one repeating unit selected from the repeating unit represented by Formula (2-1) or the repeating unit represented by Formula (2-2) described above. Hereinafter, the repeating unit represented by Formula (2-1) and the repeating unit represented by Formula (2-2) will also be collectively referred to as a repeating unit (2).

A content of the repeating unit having an acid group in all repeating units constituting $P^1$ is preferably 0% to 90% by mass. The upper limit is preferably 85% by mass or less and more preferably 80% by mass or less. The lower limit can be 1% by mass or more, and can also be 10% by mass or more.

In addition, a content of the repeating unit (2) in all repeating units constituting $P^1$ is preferably 0% to 90% by mass. The upper limit is preferably 85% by mass or less and more preferably 80% by mass or less. The lower limit can be 1% by mass or more, and can also be 10% by mass or more.

It is also preferable that the polymer chain represented by $P^1$ further includes the repeating unit represented by Formula (3-1) described above. According to this aspect, the heat resistance and the tape peeling resistance can be further improved. In addition, a content of the repeating unit represented by Formula (3-1) in all repeating units constituting $P^1$ is preferably 10% to 90% by mass. The upper limit is preferably 85% by mass or less and more preferably 80% by mass or less. The lower limit is preferably 15% by mass or more and more preferably 20% by mass or more.

A weight-average molecular weight of the polymer chain represented by $P^1$ is preferably 1,000 or more and more preferably 1,500 to 50,000. The upper limit is preferably 30,000 or less and more preferably 10,000 or less. The

lower limit is preferably 1,800 or more and more preferably 2,000 or more. The weight-average molecular weight of $P^1$ is a value calculated from the weight-average molecular weight of a raw material used for introducing into the polymer chain.

-Resin (resin A2) having repeating unit having graft chain-

In a case where the resin a is a resin having a repeating unit having a graft chain, it is preferable that the resin a is a resin including a repeating unit having a graft chain and a repeating unit having the partial structure represented by Formula (1) described above. The resin having a repeating unit having a graft chain may be used as a binder or a dispersant. It is preferable to use as a binder.

In the present specification, the graft chain means a polymer chain branched and extended from the main chain of the repeating unit. The length of the graft chain is not particularly limited, and in a case where the graft chain is longer, a steric repulsion effect is enhanced, and thus it is possible to improve dispersibility of the particles and facilitate the formation of the phase-separated structure. As the graft chain, the number of atoms excluding the hydrogen atoms is preferably 40 to 10,000, the number of atoms excluding the hydrogen atoms is more preferably 50 to 2,000, and the number of atoms excluding the hydrogen atoms is still more preferably 60 to 500.

The graft chain preferably includes a repeating unit having at least one structure selected from a polyether structure, a polyester structure, a poly(meth)acrylic structure, a polystyrene structure, a polyurethane structure, a polyurea structure, or a polyamide structure, more preferably includes a repeating unit having at least one structure selected from a polyether structure, a polyester structure, a poly(meth)acrylic structure, or a polystyrene structure, still more preferably includes a polyether structural repeating unit or a polyester structural repeating unit, and particularly preferably includes a polyester structural repeating unit.

Examples of the polyester structural repeating unit include a repeating unit having a structure represented by Formula (G-1), Formula (G-4), or Formula (G-5). Examples of the polyether structural repeating unit include a repeating unit having a structure represented by Formula (G-2). Examples of the poly(meth)acrylic structural repeating unit include a repeating unit having a structure represented by Formula (G-3). Examples of the polystyrene structural repeating unit include a repeating unit having a structure represented by Formula (G-6).

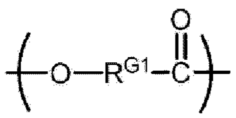
(G-1)

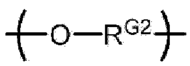
(G-2)

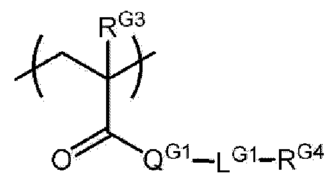
(G-3)

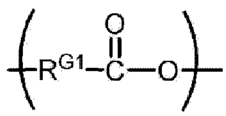
(G-4)

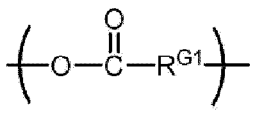
(G-5)

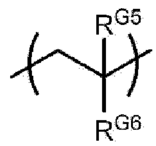
(G-6)

In the formulae, $R^{G1}$ and $R^{G2}$ each independently represent an alkylene group. The alkylene group represented by $R^{G1}$ and $R^{G2}$ is not particularly limited, but is preferably a linear or branched alkylene group having 1 to 20 carbon atoms, more preferably a linear or branched alkylene group having 2 to 16 carbon atoms, and still more preferably a linear or branched alkylene group having 3 to 12 carbon atoms.

In the formulae, $R^{G3}$ represents a hydrogen atom or a methyl group, $Q^{G1}$ represents -O- or -NH-, $L^{G1}$ represents a single bond or a divalent linking group, and $R^{G4}$ represents a hydrogen atom or a substituent.

Examples of the divalent linking group represented by $L^{G1}$ include an alkylene group (preferably an alkylene group having 1 to 12 carbon atoms), an alkyleneoxy group (preferably an alkyleneoxy group having 1 to 12 carbon atoms), an oxyalkylenecarbonyl group (preferably an oxyalkylenecarbonyl group having 1 to 12 carbon atoms), an arylene group (preferably an arylene group having 6 to 20 carbon atoms), -NH-, -SO-, $-SO_2-$, -CO-, -O-, -COO-, OCO-, -S-, and a group formed by a combination of two or more of these groups.

Examples of the substituent represented by $R^{G4}$ include a hydroxy group, a carboxy group, an alkyl group, an aryl group, a heterocyclic group, an alkoxy group, an aryloxy group, a heterocyclic oxy group, an alkylthioether group, an arylthioether group, a heterothioether group, an ethylenically unsaturated bond-containing group, an epoxy group,

an oxetanyl group, and a blocked isocyanate group.

$R^{G5}$ represents a hydrogen atom or a methyl group and $R^{G6}$ represents an aryl group. The number of carbon atoms in the aryl group represented by $R^{G6}$ is preferably 6 to 30, more preferably 6 to 20, and still more preferably 6 to 12. The aryl group represented by $R^{G6}$ may have a substituent. Examples of the substituent include a hydroxy group, a carboxy group, an alkyl group, an aryl group, a heterocyclic group, an alkoxy group, an aryloxy group, a heterocyclic oxy group, an alkylthioether group, an arylthioether group, a heterothioether group, an ethylenically unsaturated bond-containing group, an epoxy group, an oxetanyl group, and a blocked isocyanate group.

A terminal structure of the graft chain is not particularly limited. The terminal structure may be a hydrogen atom or a substituent. Examples of the substituent include an alkyl group, an aryl group, a heteroaryl group, an alkoxy group, an aryloxy group, a heteroaryloxy group, an alkylthioether group, an arylthioether group, and a heteroarylthioether group. Among these, from the viewpoint of improvement of the dispersibility of the particles and ease of formation of the phase-separated structure during the film formation, a group having a steric repulsion effect is preferable, and an alkyl group or alkoxy group having 5 to 24 carbon atoms is preferable. The alkyl group and the alkoxy group may be linear, branched, or cyclic, and are preferably linear or branched.

The graft chain preferably has a structure represented by Formula (G-1a), Formula (G-2a), Formula (G-3a), Formula (G-4a), Formula (G-5a), or Formula (G-6a), and more preferably has a structure represented by Formula (G-1a), Formula (G-4a), or Formula (G-5a).

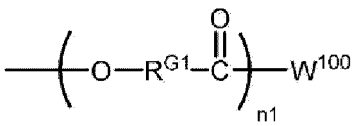

(G-1a)

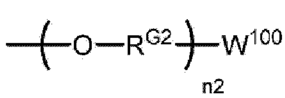

(G-2a)

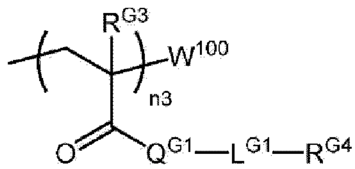

(G-3a)

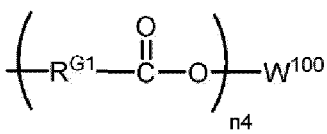

(G-4a)

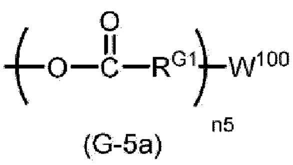

(G-5a)

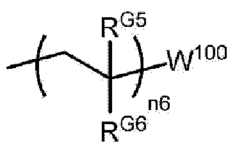

(G-6a)

In the formulae, $R^{G1}$ and $R^{G2}$ each independently represent an alkylene group, $R^{G3}$ represents a hydrogen atom or a methyl group, $Q^{G1}$ represents -O- or -NH-, $L^{G1}$ represents a single bond or a divalent linking group, $R^{G4}$ represents a hydrogen atom or a substituent, $R^{G5}$ represents a hydrogen atom or a methyl group, $R^{G6}$ represents an aryl group, $W^{100}$ represents a hydrogen atom or a substituent, and n1 to n6 each independently represent an integer of 2 or more. $R^{G1}$ to $R^{G6}$, $Q^{G1}$, and $L^{G1}$ have the same meanings as $R^{G1}$ to $R^{G6}$, $Q^{G1}$, and $L^{G1}$ described in Formulae (G-1) to (G-6), and preferred ranges thereof are also the same.

In Formulae (G-1a) to (G-6a), it is preferable that $W^{100}$ represents a substituent. Examples of the substituent include an alkyl group, an aryl group, a heteroaryl group, an alkoxy group, an aryloxy group, a heteroaryloxy group, an alkylthioether group, an arylthioether group, and a heteroarylthioether group. Among these, from the viewpoint of improvement of the dispersibility of the particles and ease of formation of the phase-separated structure during the film formation, a group having a steric repulsion effect is preferable, and an alkyl group or alkoxy group having 5 to 24 carbon atoms is preferable. The alkyl group and the alkoxy group may be linear, branched, or cyclic, and are preferably linear or branched.

In Formulae (G-1a) to (G-6a), n1 to n6 each are preferably an integer of 2 to 100, more preferably an integer of 2 to 80, and still more preferably an integer of 8 to 60.

In Formula (G-1a), in a case where n1 is 2 or more, a plurality of $R^{G1}$'s in each repeating unit may be the same or different from each other. In a case where $R^{G1}$ includes two or more kinds of repeating units different from each other, the arrangement of the repeating units is not particularly limited, and may be performed in any of a random manner, an alternative manner, and a blocked manner. The same applies to Formulae (G-2a) to (G-6a). In addition, the graft chain also preferably has a structure which is represented by Formula (G-1a), Formula (G-4a), or Formula (G-5a) and includes two or more repeating units having different $R^{G1}$'s.

Examples of the repeating unit having a graft chain include a repeating unit represented by Formula (G-100).

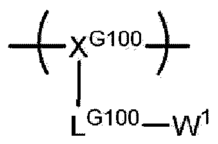

(G-100)

In the formula, $X^{G100}$ represents a trivalent linking group, $L^{G100}$ represents a single bond or a divalent linking group, and $W^1$ represents a graft chain.
Examples of the trivalent linking group represented by $X^{G100}$ include a poly(meth)acrylic linking group, a polyalkyleneimine-based linking group, a polyester-based linking group, a polyurethane-based linking group, a polyurea-based linking group, a polyamide-based linking group, a polyether-based linking group, and a polystyrene-based linking group; a poly(meth)acrylic linking group or a polyalkyleneimine-based linking group is preferable, and a poly(meth)acrylic linking group is more preferable.
Examples of the divalent linking group represented by $L^{G100}$ include an alkylene group (preferably an alkylene group having 1 to 12 carbon atoms), an arylene group (preferably an arylene group having 6 to 20 carbon atoms), -NH-, -SO-, $-SO_2-$, -CO-, -O-, -COO-, -OCO-, -S-, and a group formed by a combination of two or more of these groups.
Examples of the graft chain represented by $W^1$ include the graft chains described above.
The repeating unit having a graft chain is preferably a repeating unit represented by Formula (G-101).

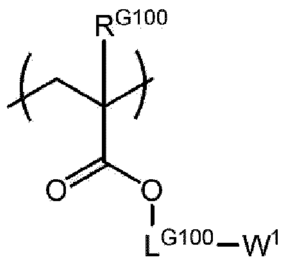

(G-101)

In the formula, $R^G$ represents a hydrogen atom or an alkyl group, $L^{G100}$ represents a single bond or a divalent linking group, and $W^1$ represents a graft chain.
$L^{G100}$ and $W^1$ in Formula (G-101) have the same meanings as $L^{G100}$ and $W^1$ in Formula (G-100).
The number of carbon atoms in the alkyl group represented by $R^{G100}$ in Formula (G-101) is preferably 1 to 10, more preferably 1 to 5, and still more preferably 1 to 3. The alkyl group may be linear, branched, or cyclic, but is preferably linear. $R^{G100}$ is preferably a hydrogen atom or a methyl group and more preferably a methyl group.
A weight-average molecular weight of the repeating unit having a graft chain is preferably 1,000 or more, more preferably 1,000 to 10,000, and still more preferably 1,000 to 7,500. In the present specification, the weight-average molecular weight of the repeating unit having a graft chain is a value calculated from the weight-average molecular weight of the raw material monomer used for the polymerization of the repeating unit. For example, the repeating unit having a graft chain can be formed by polymerizing a macromonomer. Here, the macromonomer means a polymer compound in which a polymerizable group is introduced at a polymer terminal. In a case where the repeating unit having a graft chain is formed using a macromonomer, the weight-average molecular weight of the macromonomer corresponds to the repeating unit having a graft chain.
In the case where the resin a is the resin including a repeating unit having a graft chain, a content of the repeating unit having a graft chain in the total mass of the resin a is preferably 1% to 90% by mass. The upper limit is preferably 80% by mass or less, more preferably 70% by mass or less, still more preferably 75% by mass or less, and even more preferably 60% by mass or less. The lower limit is preferably 5% by mass or more and more preferably 10% by mass or more.
In a case where the resin a is the resin having a repeating unit having a graft chain, it is preferable that the resin a further includes a repeating unit having the partial structure represented by Formula (1) described above, in addition to the repeating unit having a graft chain.

The repeating unit having the partial structure represented by Formula (1) is preferably the repeating unit represented by the above-mentioned Formula (1-1) or the repeating unit represented by Formula (1-2) described above (the repeating unit (1)). In addition, a content of the repeating unit (1) in the total mass of the resin a is preferably 1% to 80% by mass. The upper limit is preferably 75% by mass or less and more preferably 70% by mass or less. The lower limit is preferably 5% by mass or more and more preferably 10% by mass or more.

In a case where the resin a is the resin having a repeating unit having a graft chain, it is preferable that the resin a further includes a repeating unit having an acid group. According to this aspect, a composition having more excellent curing properties can be obtained. In addition, the repeating unit having an acid group is preferably at least one repeating unit selected from the repeating unit represented by Formula (2-1) or the repeating unit represented by Formula (2-2) described above (the repeating unit (2)). In addition, a content of the repeating unit (2) in the total mass of the resin a is preferably 1% to 80% by mass. The upper limit is preferably 75% by mass or less and more preferably 70% by mass or less. The lower limit is preferably 5% by mass or more and more preferably 10% by mass or more.

In a case where the resin a is the resin having a repeating unit having a graft chain, it is also preferable that the resin a further includes the repeating unit represented by Formula (3-1) described above. According to this aspect, the heat resistance and the tape peeling resistance can be further improved. In addition, a content of the repeating unit represented by Formula (3-1) in the total mass of the resin a is preferably 1% to 80% by mass. The upper limit is preferably 75% by mass or less and more preferably 70% by mass or less. The lower limit is preferably 5% by mass or more and more preferably 10% by mass or more.

Specific examples of the resin a include resins B-1 to B-32 and D-1 to D-11 in Examples described later, but are not limited thereto.

A weight-average molecular weight of the resin a is preferably 3,000 to 120,000, more preferably 5,000 to 120,000, and still more preferably 8,000 to 120,000. In a case where the weight-average molecular weight of the resin a is within the above-described range, an appropriate phase separation size is likely to be obtained during the film formation, and scattering properties can be further improved. The upper limit is preferably 80,000 or less and more preferably 60,000 or less. The lower limit is preferably 9,000 or more and more preferably 10,000 or more.

An ethylenically unsaturated bond-containing group value of the resin a is preferably 0.05 to 2.1 mmol/g and more preferably 0.1 to 2.0 mmol/g. In a case where the ethylenically unsaturated bond-containing group value of the resin a is within the above-described range, the curing properties are favorable, and the occurrence of undercut and the like can be further suppressed. The upper limit is preferably 1.9 mmol/g or less and more preferably 1.8 mmol/g or less. The lower limit is preferably 0.2 mmol/g or more and more preferably 0.3 mmol/g or more.

The ethylenically unsaturated bond-containing group value of resin is a numerical value representing a molar amount of ethylenically unsaturated bond-containing group values per 1 g of the solid content of the resin. As the ethylenically unsaturated bond-containing group value of the resin, a value calculated from charged raw materials is used in a case where the value can be calculated from the raw materials used for the synthesis of the resin. In addition, regarding the ethylenically unsaturated bond-containing group value of the resin, in a case where the value cannot be calculated from the raw materials used for the synthesis of the resin, a value measured using a hydrolysis method is used. Specifically, a component (a) of an ethylenically unsaturated bond-containing group site is extracted from the resin by an alkali treatment, a content of the component (a) is measured by high-performance liquid chromatography (HPLC), and the ethylenically unsaturated bond-containing group value of the resin can be calculated by the following expression. In addition, in a case where the above-described component (a) cannot be extracted from the resin by an alkali treatment, a value measured by an nuclear magnetic resonance (NMR) method is used.

Ethylenically unsaturated bond-containing group value of resin [mmol/g] = (Content of component (a) [ppm]/Molecular weight of component (a) [g/mol)/(Weighed value of resin [g] $\times$ (Concentration of solid contents of resin [% by mass]/100) $\times$ 10)

An acid value of the resin a is preferably 10 to 250 mgKOH/g and more preferably 20 to 200 mgKOH/g. In a case where the acid value of the resin a is within the above-described range, an appropriate phase separation size is likely to be obtained during the film formation, and scattering properties can be further improved. The upper limit is preferably 180 mgKOH/g or less, and more preferably 170 mgKOH/g or less. The lower limit is preferably 30 mgKOH/g or more and more preferably 40 mgKOH/g or more. In addition, in a case where the resin a is a dispersant, the acid value of the resin a is preferably 80 to 250 mgKOH/g. The upper limit is preferably 200 mgKOH/g or less, more preferably 180 mgKOH/g or less, and still more preferably 170 mgKOH/g or less. The lower limit is preferably 90 mgKOH/g or more, more preferably 100 mgKOH/g or more, and still more preferably 120 mgKOH/g or more.

In addition, in a case where the resin a is a binder, the acid value of the resin a is preferably 10 to 150 mgKOH/g. The upper limit is preferably 130 mgKOH/g or less, more preferably 110 mgKOH/g or less, and still more preferably 90 mgKOH/g or less. The lower limit is preferably 20 mgKOH/g or more, more preferably 30 mgKOH/g or more, and still more preferably 40 mgKOH/g or more.

A content of the resin a in the total solid content of the composition is preferably 5% to 70% by mass. The upper limit is preferably 60% by mass or less and more preferably 50% by mass or less. The lower limit is preferably 10% by

mass or more and more preferably 15% by mass or more.

In addition, the content of the resin a in the total amount of the resin contained in the composition is preferably 10% to 100% by mass, more preferably 20% to 100% by mass, and still more preferably 30% to 100% by mass.

The composition according to the embodiment of the present invention may contain only one kind of resin a, or may contain two or more kinds of resins a. In a case of containing two or more kinds of resins a, it is preferable that the total content of the two or more kinds of the resins a is within the above-described range.

(Resin b)

The film-forming component in the composition according to the embodiment of the present invention can further include a resin b which is a resin different from the above-described resin a. The resin b is a resin which does not correspond to the resin a. That is, the resin b is a resin not including the partial structure represented by Formula (1) described above. The resin b may be a dispersant of particles or a binder.

As the resin b, any known resin can be used. Examples of the resin include a (meth)acrylic resin, a (meth)acrylamide resin, an epoxy resin, an ene-thiol resin, a polycarbonate resin, a polyether resin, a polyarylate resin, a polysulfone resin, a polyethersulfone resin, a polyphenylene resin, a polyarylene ether phosphine oxide resin, a polyimide resin, a polyamide resin, a polyolefin resin, a cyclic olefin resin, a polyester resin, a styrene resin, a silicone resin, and a urethane resin.

A weight-average molecular weight of the resin b is preferably 2,000 to 2,000,000. The upper limit is preferably 1,000,000 or less and more preferably 500,000 or less. The lower limit is preferably 3,000 or more, more preferably 4,000 or more, and still more preferably 5,000 or more.

As the resin b, a resin having an acid group can be used. Examples of the resin having an acid group include a resin having a repeating unit having an acid group. Examples of the acid group include a carboxy group, a phosphoric acid group, a sulfo group, and a phenolic hydroxy group, and a carboxy group is preferable. An acid value of the resin having an acid group is preferably 30 to 500 mgKOH/g. The lower limit is more preferably 50 mgKOH/g or more and still more preferably 70 mgKOH/g or more. The upper limit is more preferably 400 mgKOH/g or less, still more preferably 200 mgKOH/g or less, even still more preferably 150 mgKOH/g or less, and most preferably 120 mgKOH/g or less. With regard to the resin having an acid group, reference can be made to the description in paragraphs 0558 to 0571 of JP2012-208494A (paragraphs 0685 to 0700 of the corresponding US2012/0235099A) and the description in paragraphs 0076 to 0099 of JP2012-198408A, the contents of which are incorporated herein by reference.

As the resin b, a resin including a repeating unit derived from a compound represented by Formula (ED1) and/or a compound represented by Formula (ED2) (hereinafter, these compounds will also be referred to as an "ether dimer") can be used.

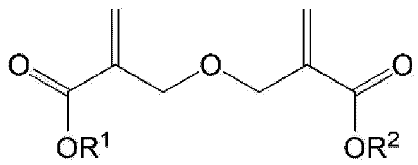

(ED1)

In Formula (ED1), $R^1$ and $R^2$ each independently represent a hydrogen atom or a hydrocarbon group having 1 to 25 carbon atoms, which may have a substituent.

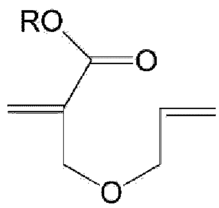

(ED2)

In Formula (ED2), R represents a hydrogen atom or an organic group having 1 to 30 carbon atoms. Specific examples of Formula (ED2) can be found in the description of JP2010-168539A.

Specific examples of the ether dimer can be found in paragraph 0317 of JP2013-029760A, the contents of which are incorporated herein by reference.

As the resin b, a resin including a repeating unit derived from a compound represented by Formula (X) can be used.

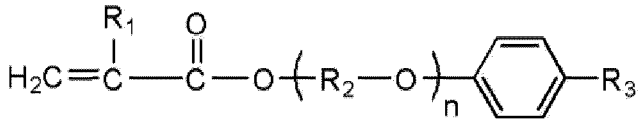

(X)

In Formula (X), $R_1$ represents a hydrogen atom or a methyl group, $R_2$ represents an alkylene group having 2 to 10 carbon atoms, and $R_3$ represents a hydrogen atom or an alkyl group having 1 to 20 carbon atoms, which may have a benzene ring. n represents an integer of 1 to 15.

As the resin b, a resin including a repeating unit having a graft chain can also be used. In a case where the resin includes a repeating unit having a graft chain, due to steric hindrance caused by the graft chain, aggregation and the like of particles in the composition can be suppressed more effectively, and excellent storage stability can be obtained. In addition, it is possible to easily form a phase-separated structure in the film during film formation. The resin including a repeating unit having a graft chain may be used as a dispersant or a binder.

The graft chain preferably includes a repeating unit having at least one structure selected from a polyether structure, a polyester structure, a poly(meth)acrylic structure, a polystyrene structure, a polyurethane structure, a polyurea structure, or a polyamide structure, more preferably includes a repeating unit having at least one structure selected from a polyether structure, a polyester structure, a poly(meth)acrylic structure, or a polystyrene structure, still more preferably includes a polyether structural repeating unit or a polyester structural repeating unit, and particularly preferably includes a polyester structural repeating unit.

Examples of the repeating unit having a graft chain include the repeating unit represented by Formula (G-100) described above.

A content of the repeating unit having a graft chain in the resin including the repeating unit having a graft chain is preferably 10% to 90% by mass. The upper limit is preferably 80% by mass or less and more preferably 70% by mass or less. The lower limit is preferably 15% by mass or more and more preferably 20% by mass or more.

It is preferable that the resin including the repeating unit having a graft chain further includes a repeating unit having an acid group. Examples of the acid group included in the repeating unit having an acid group include a carboxy group, a phosphoric acid group, a sulfo group, and a phenolic hydroxy group. Among these, a carboxy group is preferable. In addition, the repeating unit having an acid group is preferably at least one repeating unit selected from the repeating unit represented by Formula (2-1) or the repeating unit represented by Formula (2-2) described above (the repeating unit (2)). A content of the repeating unit having an acid group in the resin including the repeating unit having a graft chain is preferably 1% to 50% by mass. The upper limit is preferably 40% by mass or less and more preferably 35% by mass or less. The lower limit is preferably 3% by mass or more and more preferably 5% by mass or more.

The resin including a repeating unit having a graft chain may further include a repeating unit having a polymerizable group. Examples of the polymerizable group include an ethylenically unsaturated bond-containing group, an epoxy group, and a cyclic ether group such as an oxetane group. A content of the repeating unit having a polymerizable group in the resin including the repeating unit having a graft chain is preferably 1% to 50% by mass. The upper limit is preferably 40% by mass or less and more preferably 35% by mass or less. The lower limit is preferably 3% by mass or more and more preferably 5% by mass or more.

It is preferable that the resin including a repeating unit having a graft chain further includes a repeating unit having none of a graft chain, an acid group, and a crosslinkable group. According to this aspect, it is possible to prevent a phase separation size from being excessively large in the film, and it is possible to form a film having more excellent light scattering properties. Examples of the repeating unit having none of a graft chain, an acid group, and a crosslinkable group include the repeating unit represented by Formula (3-1) described above. A content of the repeating unit having none of a graft chain, an acid group, and a crosslinkable group in the resin including the repeating unit having a graft chain is preferably 1% to 50% by mass. The upper limit is preferably 40% by mass or less and more preferably 35% by mass or less. The lower limit is preferably 3% by mass or more and more preferably 5% by mass or more.

A weight-average molecular weight of the resin including a repeating unit having a graft chain, which is used as the resin b, is preferably 10,000 to 50,000, more preferably 12,000 to 40,000, and still more preferably 13,000 to 36,000.

As the resin b, a resin having a structure in which a plurality of polymer chains are bonded to a tri- or higher valent linking group can also be used. Examples of such a resin include a resin having a structure represented by Formula (SP-101) (hereinafter, also referred to as a resin (SP-101)). The resin (SP-101) can be preferably used as a dispersant, but may also be used as a binder.

$$\left[A^{101}-Y^{101}\right]_{n}Z^{101}\left[Y^{102}-P^{101}\right]_{m} \qquad \text{(SP-101)}$$

In the formula, $Z^{101}$ represents an (m+n)-valent linking group,

$Y^{101}$ and $Y^{102}$ each independently represent a single bond or a linking group,
$A^{101}$ represents a group including a functional group selected from a heterocyclic group, an acid group, a group having a basic nitrogen atom, a urea group, a urethane group, a group having a coordinating oxygen atom, a hydrocarbon group having 4 or more carbon atoms, an alkoxysilyl group, an epoxy group, an isocyanate group, and a hydroxy group,
$P^{101}$ represents a polymer chain,
n represents 1 to 20, m represents 2 to 20, and m + n is 3 to 21,
provided that n pieces of $Y^{101}$'s or $A^{101}$'s may be the same or different from each other, and
m pieces of $Y^{102}$'s or $P^{101}$'s may be the same or different from each other.

Details of $Z^{101}$, $A^{101}$, $Y^{101}$, $Y^{102}$, m, n, and m + n in Formula (SP-101) are the same as the contents described as $Z^{101}$, $A^{101}$, $Y^{101}$, $Y^{102}$, m, n, and m + n in Formula (SP-1) above, and preferred ranges thereof are also the same.

In Formula (SP-101), $P^{101}$ represents a polymer chain. The polymer chain represented by $P^{101}$ preferably includes a repeating unit having at least one structure selected from a polyether structure, a polyester structure, a poly(meth)acrylic structure, a polystyrene structure, a polyurethane structure, a polyurea structure, or a polyamide structure, more preferably includes a repeating unit having at least one structure selected from a polyether structure, a polyester structure, a poly(meth)acrylic structure, or a polystyrene structure, still more preferably includes a polyether structural repeating unit or a polyester structural repeating unit, and particularly preferably includes a polyester structural repeating unit.

Examples of the polyester structural repeating unit include the repeating unit having a structure represented by Formula (G-1), Formula (G-4), or Formula (G-5) described above. Examples of the polyether structural repeating unit include the repeating unit having a structure represented by Formula (G-2) described above. Examples of the poly(meth)acrylic structural repeating unit include the repeating unit having a structure represented by Formula (G-3) described above. Examples of the polystyrene structural repeating unit include the repeating unit having a structure represented by Formula (G-6) described above.

The repetition number of repeating units in $P^{101}$ is preferably 3 to 2,000. The upper limit is preferably 1,500 or less and more preferably 1,000 or less. The lower limit is preferably 5 or more and more preferably 7 or more. In addition, it is also preferable that $P^{101}$ includes a repeating unit having an acid group. In addition, a content of the repeating unit having an acid group in all repeating units constituting $P^{101}$ is preferably 10% to 80% by mass. The lower limit is preferably 15% by mass or more and more preferably 20% by mass or more. The upper limit is preferably 70% by mass or less and more preferably 60% by mass or less.

A weight-average molecular weight of the polymer chain represented by $P^{101}$ is preferably 1,000 or more and more preferably 1,000 to 10,000. The upper limit is preferably 9,000 or less, more preferably 6,000 or less, and still more preferably 3,000 or less. The lower limit is preferably 1,200 or more and more preferably 1,400 or more. The weight-average molecular weight of $P^{101}$ is a value calculated from the weight-average molecular weight of a raw material used for introducing into the polymer chain.

A weight-average molecular weight of the resin having a structure in which a plurality of polymer chains are bonded to a tri- or higher valent linking group, which is used as the resin b, is preferably 5,000 to 20,000, more preferably 6,000 to 18,000, and still more preferably 7,000 to 15,000.

Specific examples of the resin (SP-101) include polymer compounds C-1 to C-31 described in paragraphs 0196 to 0209 of JP2013-043962A, polymer compounds (C-1) to (C-61) described in paragraphs 0256 to 0269 of JP2014-177613A, and a resin having a structure described in paragraph 0061 of WO2018/163668A, the contents of which are incorporated herein by reference.

A commercially available product is also available as the resin b, and specific examples thereof include DISPERBYK series (for example, DISPERBYK-111, 2001, and the like) manufactured by BYK-Chemie Japan K.K., Solsperse series (for example, Solsperse 20000, 76500, and the like) manufactured by Lubrizol Corporation, and AJISPER series manufactured by Ajinomoto Fine-Techno Co., Inc. In addition, products described in paragraph 0129 of JP2012-137564A and products described in paragraph 0235 of JP2017-194662A can also be used as the resin b.

A content of the resin b is preferably 150 parts by mass or less, more preferably 140 parts by mass or less, and still more preferably 130 parts by mass or less with respect to 100 parts by mass of the above-described resin a. The lower limit is preferably 10 parts by mass or more and more preferably 20 parts by mass or more. The composition according to the embodiment of the present invention may contain only one kind of resin b, or may contain two or more kinds of resins b. In a case of containing two or more kinds of resins b, it is preferable that the total content of the two or more kinds of the resins b is within the above-described range. In addition, it is also possible that the composition according to the embodiment of the present invention does not substantially contain the resin b. The case where the composition according to the embodiment of the present invention does not substantially contain the resin b means that

the content of the resin b in the total solid content of the composition is 0.5% by mass or less, preferably 0.1% by mass or less and more preferably 0% by mass.

[Polymerizable monomer]

The film-forming component may contain a polymerizable monomer. As the polymerizable monomer, a well-known compound which is crosslinkable by a radical, an acid, or heat can be used. Examples of the polymerizable monomer include a compound having an ethylenically unsaturated bond-containing group and a compound having a cyclic ether group. Examples of the ethylenically unsaturated bond-containing group include a vinyl group, a (meth)allyl group, a (meth)acryloyl group, and a (meth)acryloyloxy group. Examples of the cyclic ether group include an epoxy group and an oxetanyl group. As the polymerizable monomer, a radically polymerizable monomer or a cationically polymerizable monomer is preferable, and a radically polymerizable monomer is more preferable.

In addition, the polymerizable monomer used in the present invention may be a polymerizable monomer including a ring structure, and in this case, a radically polymerizable monomer including a ring structure is more preferable. In a case of using a polymerizable monomer including a ring structure, phase separation from the resin tends to occur. In particular, the above-described effect is remarkable in a case of using a radically polymerizable monomer including a ring structure. For the reason that the above-described effect can be obtained more remarkably, the ring structure included in the polymerizable monomer is preferably an aliphatic ring. In addition, the aliphatic ring is preferably an aliphatic crosslinked ring. The aliphatic crosslinked ring is an aliphatic ring having a structure in which two or more atoms that are not adjacent to each other are linked to one aliphatic ring. Specific examples of the aliphatic crosslinked ring include a tricyclodecane ring and an adamantane ring, and a tricyclodecane ring is preferable. From the viewpoint of mobility of the monomer, the number of ring structures included in the polymerizable monomer is preferably 1 to 5, more preferably 1 to 3, and still more preferably 1. Specific examples of the radically polymerizable monomer including a ring structure include dimethylol-tricyclodecanediacrylate and 1,3-adamantananediol diacrylate.

The radically polymerizable monomer is not particularly limited as long as it is a compound which is polymerizable by the action of a radical. As the radically polymerizable monomer, a compound having an ethylenically unsaturated bond-containing group is preferable, a compound having two or more ethylenically unsaturated bond-containing groups is more preferable, and a compound having three or more ethylenically unsaturated bond-containing groups is still more preferable. The upper limit of the number of the ethylenically unsaturated bond-containing groups is, for example, preferably 15 or less and more preferably 6 or less. Examples of the ethylenically unsaturated bond-containing group include a vinyl group, a styrene group, a (meth)allyl group, a (meth)acryloyl group, and a (meth)acryloyloxy group, and a (meth)acryloyl group or a (meth)acryloyloxy group is preferable. The radically polymerizable monomer is preferably a (meth)acrylate compound having 3 to 15 functional groups and more preferably a (meth)acrylate compound having 3 to 6 functional groups. In addition, it is also preferable that the radically polymerizable monomer includes a ring structure.

The molecular weight of the radically polymerizable monomer is preferably 200 to 3000. The upper limit of the molecular weight is preferably 2500 or less and still more preferably 2000 or less. The lower limit of the molecular weight is preferably 250 or more and still more preferably 300 or more.

In addition, it is also preferable that the radically polymerizable monomer is a compound having a group having an ethylenically unsaturated bond-containing group which has a boiling point at 100°C or higher under normal pressure and has at least one ethylene group capable of addition polymerization. Examples of the radically polymerizable monomer include: a monofunctional acrylate or methacrylate such as polyethylene glycol mono(meth)acrylate, polypropylene glycol mono(meth)acrylate, or phenoxyethyl (meth)acrylate; polyethylene glycol di(meth)acrylate, trimethylol ethane tri(meth)acrylate, neopentyl glycol di(meth)acrylate, pentaerythritol tri(meth)acrylate, pentaerythritol tetra(meth)acrylate, dipentaerythritol penta(meth)acrylate, dipentaerythritol hexa(meth)acrylate, hexanediol (meth)acrylate, trimethylol propane tri(acryloyloxypropyl)ether, or tri(acryloyloxyethyl)isocyanurate; and mixtures of the above-described compounds. Among these, pentaerythritol tetra(meth)acrylate is preferable.

In addition, as the radically polymerizable monomer, a compound represented by any one of the following Formulae (MO-1) to (MO-5) can also be suitably used. In a case where T in the formulae represents an oxyalkylene group, a terminal thereof on a carbon atom side in T is bonded to R.

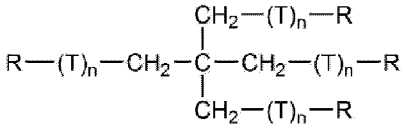

(MO-1)

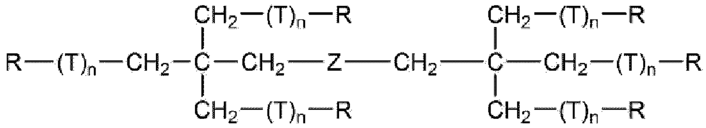

(MO-2)

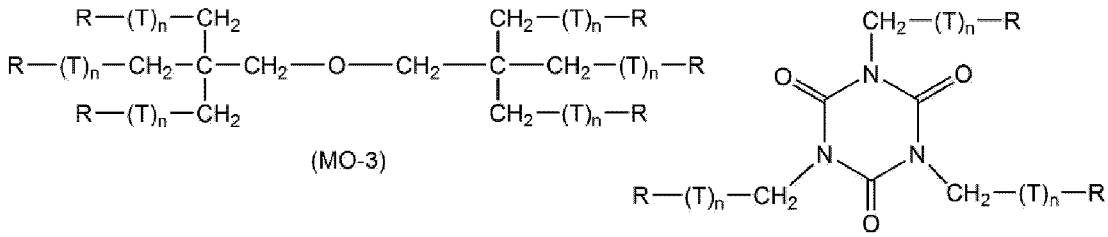

(MO-3)

(MO-4)

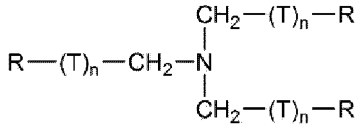

(MO-5)

R:

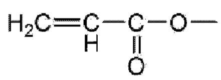 , 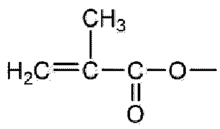 , 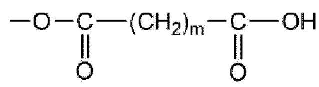

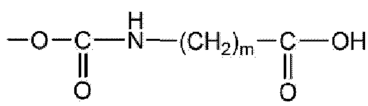 , —OH , $—CH_3$

T: $-(CH_2)_m-$ , $-OCH_2-$ , $-OCH_2CH_2-$ , $-OCH_2CH_2CH_2-$ , $-OCH_2CH_2CH_2CH_2-$ ,

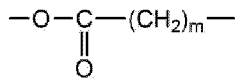 , 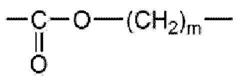 , 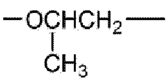 , 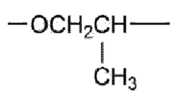

Z:

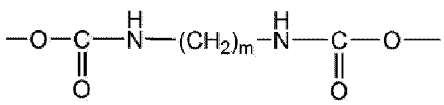 , —O—

In the formulae, n represents 0 to 14, and m represents 1 to 8. A plurality of R's and a plurality of T's which are present in the same molecule may be the same as or different from each other. At least one of a plurality of R's which are present in each of the compounds represented by Formula (MO-1) to (MO-5) represents a group represented by $-OC(=O)CH=CH_2$ or $-OC(=O)C(CH_3)=CH_2$. Specific examples of the compounds represented by Formulae (MO-1) to (MO-5) include compounds described in paragraphs 0248 to 0251 of JP2007-269779A, the content of which is incorporated herein by reference.

As the radically polymerizable monomer, dipentaerythritol tri(meth)acrylate (as a commercially available product, KAYARAD D-330 manufactured by Nippon Kayaku Co., Ltd.), dipentaerythritol tetra(meth)acrylate (as a commercially available product, KAYARAD D-320 manufactured by Nippon Kayaku Co., Ltd.), dipentaerythritol penta(meth)acrylate (as a commercially available product, KAYARAD D-310 manufactured by Nippon Kayaku Co., Ltd.), dipentaerythritol hexa(meth)acrylate (as a commercially available product, KAYARAD DPHA manufactured by Nippon Kayaku Co., Ltd. and NK ESTER A-DPH-12E manufactured by Shin-Nakamura Chemical Co., Ltd.), a compound having a structure in which a (meth)acryloyl group thereof is bonded through an ethylene glycol residue and/or a propylene glycol residue (for example, SR454 and SR499 available from Sartomer Japan Inc.), diglycerin ethylene oxide (EO)-modified (meth)acrylate (as a commercially available product, M-460 manufactured by TOAGOSEI CO., LTD.), pentaerythritol tetra(meth)acrylate (NK ESTER A-TMMT manufactured by Shin-Nakamura Chemical Co., Ltd.), 1,6-hexanediol diacrylate (KAYARAD HDDA manufactured by Nippon Kayaku Co., Ltd.), KAYARAD RP-1040 (manufactured by Nippon Kayaku

Co., Ltd.), ARONIX TO-2349 (manufactured by TOAGOSEI CO., LTD.), NK OLIGO UA-7200 (manufactured by Shin-Nakamura Chemical Co., Ltd.), 8UH-1006 and 8UH-1012 (manufactured by Taisei Fine Chemical Co., Ltd.), Light Acrylate POB-A0 (manufactured by KYOEISHA CHEMICAL Co., Ltd.), or the like can also be used.

In addition, as the radically polymerizable monomer, it is also preferable to use a trifunctional (meth)acrylate compound such as trimethylolpropane tri(meth)acrylate, trimethylolpropane propyleneoxide-modified tri(meth)acrylate, trimethylolpropane ethyleneoxide-modified tri(meth)acrylate, isocyanuric acid ethyleneoxide-modified tri(meth)acrylate, and pentaerythritol tri(meth)acrylate. Examples of a commercially available product of the trifunctional (meth)acrylate compound include ARONIX M-309, M-310, M-321, M-350, M-360, M-313, M-315, M-306, M-305, M-303, M-452, and M-450 (manufactured by TOAGOSEI CO., LTD.), NK ESTER A9300, A-GLY-9E, A-GLY-20E, A-TMM-3, A-TMM-3L, A-TMM-3LM-N, A-TMPT, and TMPT (manufactured by Shin-Nakamura Chemical Co., Ltd.), and KAYARAD GPO-303, TMPTA, THE-330, TPA-330, and PET-30 (manufactured by Nippon Kayaku Co., Ltd.).

The radically polymerizable monomer may have an acid group such as a carboxy group, a sulfo group, and a phosphoric acid group. Examples of the radically polymerizable monomer having an acid group include an ester of an aliphatic polyhydroxy compound and an unsaturated carboxylic acid. Examples of a commercially available product include ARONIX series (for example, M-305, M-510, or M-520, manufactured by Toagosei Co., Ltd.). The acid value of the radically polymerizable monomer having an acid group is preferably 0.1 to 40 mgKOH/g. The lower limit is preferably 5 mgKOH/g or more. The upper limit thereof is preferably 30 mgKOH/g or less.

Examples of the cationically polymerizable monomer include a compound having a cationically polymerizable group. Examples of the cationically polymerizable group include a cyclic ether group such as an epoxy group or an oxetanyl group. As the cationically polymerizable monomer, a compound having a cyclic ether group is preferable, and a compound having an epoxy group (also referred to as an "epoxy compound") is more preferable.

The molecular weight of the cationically polymerizable monomer is preferably 200 to 3000. The upper limit of the molecular weight is preferably 2500 or less and still more preferably 2000 or less. The lower limit of the molecular weight is preferably 250 or more and still more preferably 300 or more.

Examples of the epoxy compound include a compound having one or more epoxy groups in one molecule. Among these, a compound having two or more epoxy groups in one molecule is preferable. The number of epoxy groups in one molecule is preferably 1 to 100. The upper limit of the number of epoxy groups may be, for example, 10 or less or 5 or less. The lower limit of the epoxy group is preferably 2 or more.

Examples of the epoxy compound include a compound represented by the following Formula (EP1).

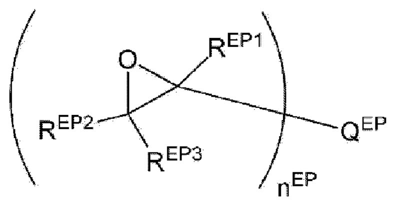

(EP1)

In Formula (EP1), $R^{EP1}$ to $R^{EP3}$ each independently represent a hydrogen atom, a halogen atom, or an alkyl group. The alkyl group may have a cyclic structure or may have a substituent. $R^{EP1}$ and $R^{EP2}$, or $R^{EP2}$ and $R^{EP3}$ may be bonded to each other to form a ring structure. $Q^{EP}$ represents a single bond or an $n^{EP}$-valent organic group. $R^{EP1}$ to $R^{EP3}$ may be bonded to $Q^{EP}$ to form a ring structure. $n^{EP}$ represents an integer of 2 or more, preferably 2 to 10 and more preferably 2 to 6. However, in a case where $Q^{EP}$ is a single bond, $n^{EP}$ is 2. The details of $R^{EP1}$ to $R^{EP3}$, and $Q^{EP}$ can be found in paragraphs 0087 and 0088 of JP2014-089408A, the content of which is incorporated herein by reference. Specific examples of the compound represented by Formula (EP1) include a compound described in paragraph 0090 of JP2014-089408A and a compound described in paragraph 0151 of JP2010-054632A, the contents of which are incorporated herein by reference.

As the cationically polymerizable monomer, a commercially available product can also be used. Examples of the commercially available product include ADEKA GLYCILOL series manufactured by Adeka Corporation (for example, ADEKA GLYCILOL ED-505) and EPOLEAD series manufactured by Daicel Corporation (for example, EPOLEAD GT401).

A content of the polymerizable monomer is preferably 0.1% to 40% by mass in the total solid content of the composition. The lower limit is preferably 0.5% by mass or more and more preferably 1% by mass or more. The upper limit is preferably 30% by mass or less and more preferably 20% by mass or less. As the polymerizable monomer, one kind may be used alone, or two or more kinds may be used in combination. In a case where two or more polymerizable monomers are used in combination, it is preferable that the total content of the two or more polymerizable monomers is within the above-described range. In addition, in a case where two or more polymerizable monomers are used in combination, two or more radically polymerizable monomers may be used in combination, or a radically polymerizable monomer and a cationically polymerizable monomer may be used in combination.

In addition, the total content of the polymerizable monomer and the resin in the total solid content of the composition is preferably 10% to 90% by mass. The upper limit is preferably 80% by mass or less, more preferably 75% by mass or less, and still more preferably 70% by mass or less. The lower limit is preferably 20% by mass or more and more preferably 30% by mass or more.

In addition, the ratio of the polymerizable monomer to the resin is preferably 10 to 400 parts by mass of the polymerizable monomer with respect to 100 parts by mass of the resin. The lower limit is preferably 15 parts by mass or more and more preferably 20 parts by mass or more. The upper limit is preferably 380 parts by mass or less and more preferably 350 parts by mass or less.

<<Solvent>>

The composition according to the embodiment of the present invention includes a solvent. Examples of the solvent include an organic solvent. Basically, the solvent is not particularly limited as long as it satisfies the solubility of the respective components and the application properties of the composition. Examples of the organic solvent include an ester-based solvent, a ketone-based solvent, an alcohol-based solvent, an amide-based solvent, an ether-based solvent, and a hydrocarbon-based solvent. The details of the organic solvent can be found in paragraph 0223 of WO2015/166779A, the content of which is incorporated herein by reference. In addition, an ester-based solvent in which a cyclic alkyl group is substituted or a ketone-based solvent in which a cyclic alkyl group is substituted can also be preferably used. Specific examples of the organic solvent include acetone, methyl ethyl ketone, cyclohexane, cyclohexanone, cyclopentanone, ethyl acetate, butyl acetate, cyclohexyl acetate, ethylene dichloride, tetrahydrofuran, toluene, ethylene glycol monomethyl ether, ethylene glycol monoethyl ether, ethylene glycol dimethyl ether, propylene glycol monomethyl ether, propylene glycol monoethyl ether, acetyl acetone, diacetone alcohol, ethylene glycol monomethyl ether acetate, ethylene glycol ethyl ether acetate, ethylene glycol monoisopropyl ether, ethylene glycol monobutyl ether acetate, 3-methoxypropanol, 2-methoxyethanol, diethylene glycol monomethyl ether, diethylene glycol monoethyl ether, diethylene glycol dimethyl ether, diethylene glycol diethyl ether, propylene glycol monomethyl ether acetate, propylene glycol monoethyl ether acetate, 3-methoxy propyl acetate, N,N-dimethylformamide, dimethyl sulfoxide, γ-butyrolactone, methyl lactate, ethyl lactate, butyl diglycol acetate, 3-methoxy butyl acetate, 3-methoxy-N,N-dimethylpropanamide, 3-butoxy-N,N-dimethylpropanamide, γ-butyrolactone, sulfolane, anisole, 1,4-diacetoxybutane, diethylene glycol monoethyl ether acetate, butane-1,3-diyl diacetate, dipropylene glycol methyl ether acetate, 2-methoxypropyl acetate, 2-methoxy-1-propanol, and isopropyl alcohol. Among these organic solvents, one kind can be used alone, or a mixture of two or more kinds can be used.

In the present invention, an organic solvent having a low metal content is preferably used. For example, the metal content in the organic solvent is preferably 10 mass parts per billion (ppb) or less. Optionally, an organic solvent having a metal content at a mass parts per trillion (ppt) level may be used. For example, such an organic solvent is available from Toyo Gosei Co., Ltd. (The Chemical Daily, November 13, 2015).

Examples of a method for removing impurities such as a metal from the organic solvent include distillation (such as molecular distillation and thin-film distillation) and filtration using a filter. The filter pore size of the filter used for the filtration is preferably 10 μm or less, more preferably 5 μm or less, and still more preferably 3 μm or less. As a material of the filter, polytetrafluoroethylene, polyethylene, or nylon is preferable.

The organic solvent may include an isomer (a compound having the same number of atoms and a different structure). In addition, only one kind of isomers may be included, or a plurality of isomers may be included.

The organic solvent preferably has the content of peroxides of 0.8 mmol/L or less, and more preferably, the organic solvent does not substantially contain peroxides.

The content of the solvent in the composition is preferably 10 to 95% by mass. The lower limit is preferably 20% by mass or more, more preferably 30% by mass or more, and still more preferably 40% by mass or more. The upper limit is preferably 90% by mass or less, more preferably 85% by mass or less, and still more preferably 80% by mass or less. As the solvent, one kind may be used alone, or two or more kinds may be used in combination. In a case where two or more solvents are used in combination, it is preferable that the total content of the solvents is within the above-described range.

«Photopolymerization initiator»

The composition according to the embodiment of the present invention may contain a photopolymerization initiator. Examples of the photopolymerization initiator include a photoradical polymerization initiator and a photocationic polymerization initiator. It is preferable that the photopolymerization initiator selected according to the type of the polymerizable monomer is used. In a case where a radically polymerizable monomer is used as the polymerizable monomer, it is preferable that the photoradical polymerization initiator is used as the photopolymerization initiator. In addition, in a case where a cationically polymerizable monomer is used as the polymerizable monomer, it is preferable that the

photocationic polymerization initiator is used as the photopolymerization initiator. The photopolymerization initiator is not particularly limited, and can be appropriately selected from known photopolymerization initiators. For example, a compound having photosensitivity to light in a range from an ultraviolet range to a visible range is preferable.

A content of the photopolymerization initiator in the total solid content of the composition is preferably 0.1% to 30% by mass, more preferably 0.5% to 20% by mass, and still more preferably 1% to 15% by mass. The composition according to the embodiment of the present invention may contain only one kind of photopolymerization initiator, or may contain two or more kinds of photopolymerization initiators. In a case of containing two or more kinds of photopolymerization initiators, it is preferable that the total content of the photopolymerization initiators is within the above-described range.

(Photoradical polymerization initiator)

Examples of the photoradical polymerization initiator include a halogenated hydrocarbon derivative (for example, a compound having a triazine skeleton or a compound having an oxadiazole skeleton), an acylphosphine compound, a hexaarylbiimidazole compound, an oxime compound, an organic peroxide, a thio compound, a ketone compound, an aromatic onium salt, an α-hydroxyketone compound, and an α-aminoketone compound. From the viewpoint of exposure sensitivity, as the photopolymerization initiator, a trihalomethyltriazine compound, a benzyldimethylketal compound, an α-hydroxyketone compound, an α-aminoketone compound, an acylphosphine compound, a phosphine oxide compound, a metallocene compound, an oxime compound, a hexaarylbiimidazole compound, an onium compound, a benzothiazole compound, a benzophenone compound, an acetophenone compound, a cyclopentadiene-benzene-iron complex, a halomethyl oxadiazole compound, or a 3-aryl-substituted coumarin compound is preferable, a compound selected from an oxime compound, an α-hydroxyketone compound, an α-aminoketone compound, and an acylphosphine compound is more preferable, and an oxime compound is still more preferable. In addition, as the photopolymerization initiator, compounds described in paragraphs 0065 to 0111 of JP2014-130173A, compounds described in JP6301489B, peroxide-based photopolymerization initiators described in MATERIAL STAGE, p. 37 to 60, vol. 19, No. 3, 2019, photopolymerization initiators described in WO2018/221177A, photopolymerization initiators described in WO2018/110179A, photopolymerization initiators described in JP2019-043864A, photopolymerization initiators described in JP2019-044030A, peroxide initiators described in JP2019-167313A, aminoacetophenone-based initiators described in JP2020-055992A, oxime-based photopolymerization initiators described in JP2013-190459A, polymers described in JP2020-172619A, and the compound represented by Formula 1 described in WO2020/152120A, the contents of which are incorporated herein by reference.

Examples of a commercially available product of the α-hydroxyketone compound include Omnirad 184, Omnirad 1173, Omnirad 2959, and Omnirad 127 (all of which are manufactured by IGM Resins B.V), Irgacure 184, Irgacure 1173, Irgacure 2959, and Irgacure 127 (all of which are manufactured by BASF SE). Examples of a commercially available product of the α-aminoketone compound include Omnirad 907, Omnirad 369, Omnirad 369E, and Omnirad 379EG (all of which are manufactured by IGM Resins B.V), Irgacure 907, Irgacure 369, Irgacure 369E, and Irgacure 379EG (all of which are manufactured by BASF SE). Examples of a commercially available product of the acylphosphine compound include Omnirad 819 and Omnirad TPO H (both of which are manufactured by IGM Resins B.V), Irgacure 819 and Irgacure TPO (both of which are manufactured by BASF SE).

Examples of the oxime compound include the compounds described in JP2001-233842A, the compounds described in JP2000-080068A, the compounds described in JP2006-342166A, the compounds described in J. C. S. Perkin II (1979, pp. 1653 to 1660), the compounds described in J. C. S. Perkin II (1979, pp. 156 to 162), the compounds described in Journal of Photopolymer Science and Technology (1995, pp. 202 to 232), the compounds described in JP2000-066385A, the compounds described in JP2004-534797A, the compounds described in JP2006-342166A, the compounds described in JP2017-019766A, the compounds described in JP6065596B, the compounds described in WO2015/152153A, the compounds described in WO2017/051680A, the compounds described in JP2017-198865A, the compounds described in paragraphs 0025 to 0038 of WO2017/164127A, the compounds described in WO2013/167515A, the compounds described in JP5430746B, and compounds described in JP5647738B. Specific examples of the oxime compound include 3-benzoyloxyiminobutane-2-one, 3-acetoxyiminobutane-2-one, 3-propionyloxyiminobutane-2-one, 2-acetoxyiminopentane-3-one, 2-acetoxyimino-1-phenylpropane-1-one, 2-benzoyloxyimino-1-phenylpropane-1-one, 3-(4-toluene sulfonyloxy)iminobutane-2-one, 2-ethoxycarbonyloxyimino-1-phenylpropane-1-one, and 1-[4-(phenylthio)phenyl]-3-cyclohexyl-propane-1,2-dione-2-(O-acetyloxime). Examples of a commercially available product thereof include Irgacure OXE01, Irgacure OXE02, Irgacure OXE03, and Irgacure OXE04 (all of which are manufactured by BASF), TR-PBG-304 and TR-PBG-327 (manufactured by TRONLY), and ADEKA OPTOMER N-1919 (manufactured by ADEKA Corporation; photopolymerization initiator 2 described in JP2012-014052A). In addition, as the oxime compound, it is also preferable to use a compound having no colorability or a compound having high transparency and being resistant to discoloration. Examples of a commercially available product thereof include ADEKAARKLS NCI-730, NCI-831, and NCI-930 (all of which are manufactured by ADEKA Corporation).

As the photoradical polymerization initiator, an oxime compound having a fluorene ring can also be used. Specific examples of the oxime compound having a fluorene ring include compounds described in JP2014-137466A.

As the photoradical polymerization initiator, an oxime compound having a skeleton in which at least one benzene ring of a carbazole ring is a naphthalene ring can also be used. Specific examples of such an oxime compound include the compounds described in WO2013/083505A.

As the photoradical polymerization initiator, an oxime compound having a fluorine atom can also be used. Specific examples of the oxime compound having a fluorine atom include compounds described in JP2010-262028A, Compounds 24 and 36 to 40 described in JP2014-500852A, and Compound (C-3) described in JP2013-164471A.

As the photoradical polymerization initiator, an oxime compound having a nitro group can be used. The oxime compound having a nitro group is also preferably used in the form of a dimer. Specific examples of the oxime compound having a nitro group include a compound described in paragraphs 0031 to 0047 of JP2013-114249A and paragraphs 0008 to 0012 and 0070 to 0079 of JP2014-137466A, a compound described in paragraphs 0007 to 0025 of JP4223071B, and ADEKAARKLS NCI-831 (manufactured by ADEKA Corporation).

As the photoradical polymerization initiator, an oxime compound having a benzofuran skeleton can also be used. Specific examples thereof include OE-01 to OE-75 described in WO2015/036910A.

As the photoradical polymerization initiator, an oxime compound in which a substituent having a hydroxy group is bonded to a carbazole skeleton can also be used. Examples of such a photopolymerization initiator include compounds described in WO2019/088055A.

Specific examples of the oxime compound include compounds having the following structures.

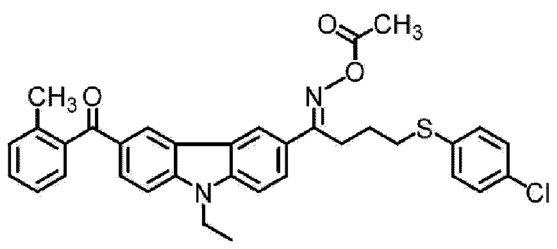

(C-1)

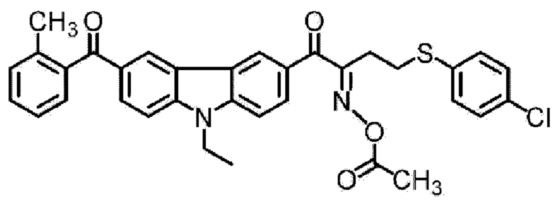

(C-2)

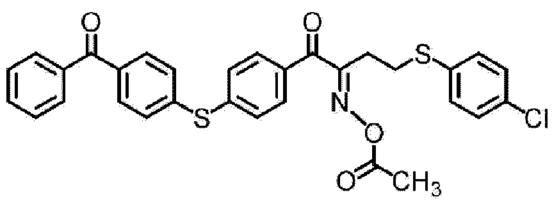

(C-3)

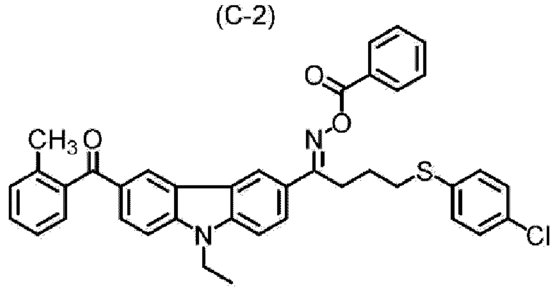

(C-4)

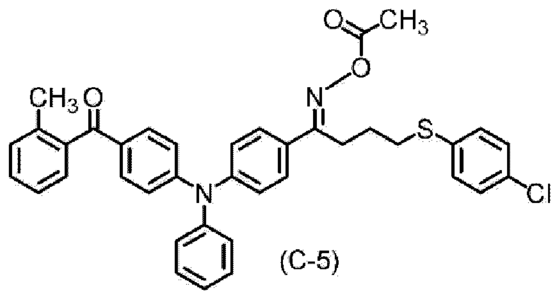

(C-5)

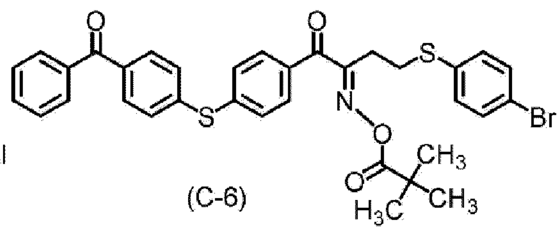

(C-6)

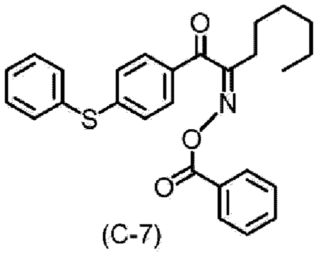

(C-7)

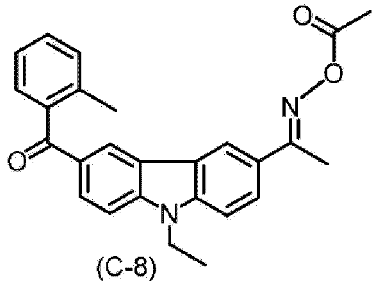

(C-8)

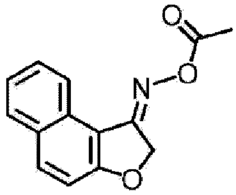

(C-9)

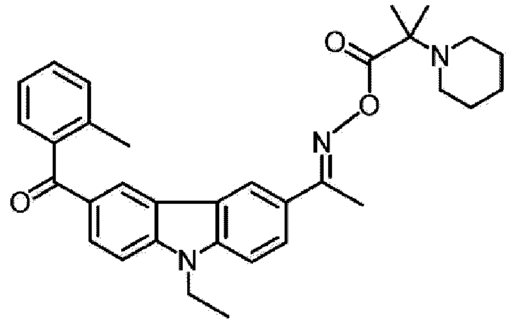

(C-10)

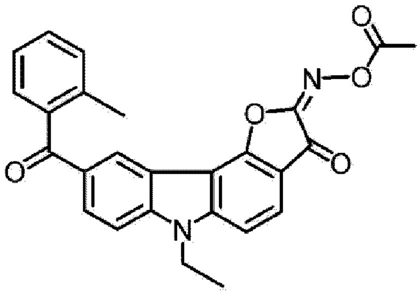

(C-11)

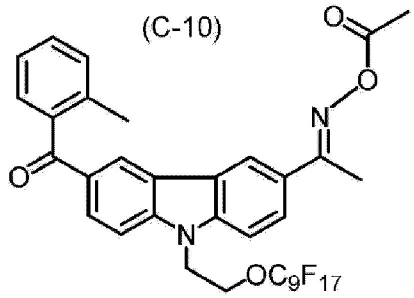

(C-12)

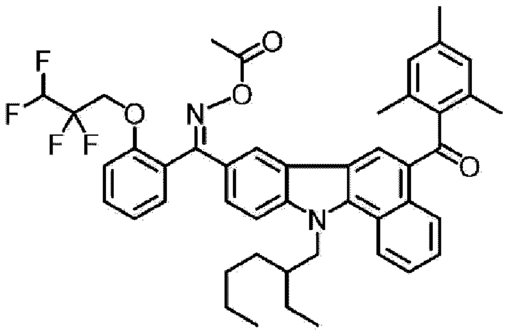

(C-13)

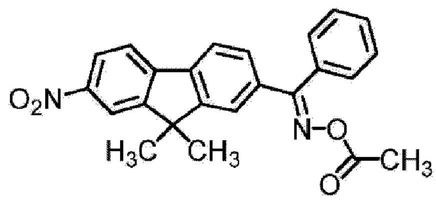

(C-14)

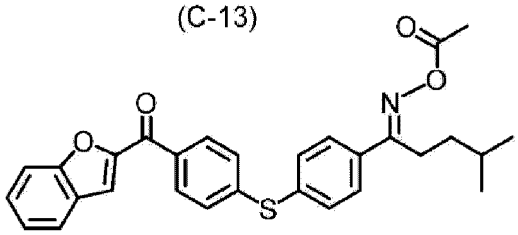

(C-15)

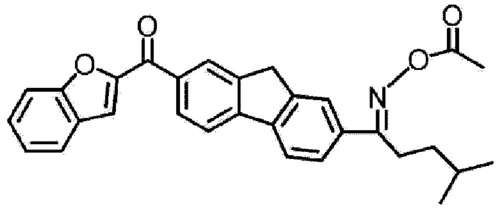

(C-16)

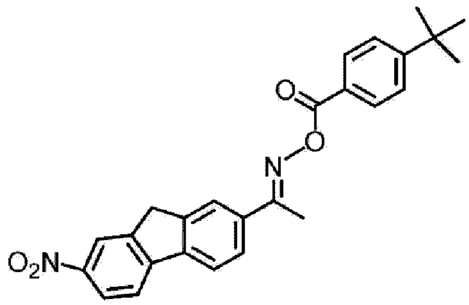

(C-17)

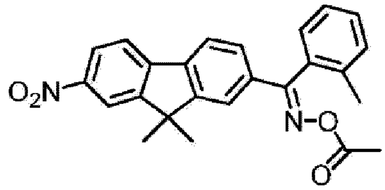

(C-18)

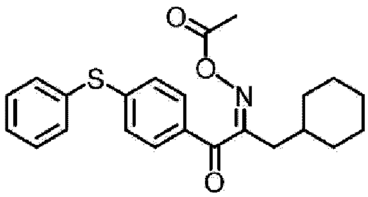

(C-19)

The oxime compound is preferably a compound having a maximal absorption wavelength in a wavelength range of 350 to 500 nm and more preferably a compound having a maximal absorption wavelength in a wavelength range of 360 to 480 nm. In addition, from the viewpoint of sensitivity, a molar absorption coefficient of the oxime compound at a wavelength of 365 nm or 405 nm is preferably high, more preferably 1000 to 300000, still more preferably 2000 to 300000, and particularly preferably 5000 to 200000. The molar absorption coefficient of a compound can be measured using a known method. For example, it is preferable that the molar absorption coefficient can be measured using a spectrophotometer (Cary-5 spectrophotometer, manufactured by Varian Medical Systems, Inc.) and ethyl acetate at a concentration of 0.01 g/L.

As the photoradical polymerization initiator, a bifunctional or tri- or higher functional photoradical polymerization initiator may be used. By using such a photoradical polymerization initiator, two or more radicals are generated from one molecule of the photoradical polymerization initiator, and as a result, good sensitivity is obtained. In addition, in a case of using a compound having an asymmetric structure, crystallinity is reduced so that solubility in a solvent or the like is improved, precipitation is to be difficult over time, and temporal stability of the resin composition can be improved. Specific examples of the bifunctional or tri- or higher functional photoradical polymerization initiator include dimers of the oxime compounds described in JP2010-527339A, JP2011-524436A, WO2015/004565A, paragraphs 0407 to 0412 of JP2016-532675A, and paragraphs 0039 to 0055 of WO2017/033680A; the compound (E) and compound (G) described in JP2013-522445A; Cmpd 1 to 7 described in WO2016/034963A; the oxime ester-based photoinitiators described in paragraph 0007 of JP2017-523465A; the photoinitiators described in paragraphs 0020 to 0033 of JP2017-167399A; the photopolymerization initiator (A) described in paragraphs 0017 to 0026 of JP2017-151342A; and the oxime ester-based photoinitiators described in JP6469669B.

A content of the photoradical polymerization initiator in the total solid content of the composition is preferably 0.1% to 30% by mass, more preferably 0.5% to 20% by mass, and still more preferably 1% to 15% by mass. The composition according to the embodiment of the present invention may contain only one kind of photopolymerization initiator, or may contain two or more kinds of photopolymerization initiators. In a case of containing two or more kinds of photopolymerization initiators, it is preferable that the total content of the photopolymerization initiators is within the above-described range.

(Photocationic polymerization initiator)

Examples of the photocationic polymerization initiator include a photoacid generator. Examples of the photoacid generator include compounds which are decomposed by light irradiation to generate an acid including: an onium salt compound such as a diazonium salt, a phosphonium salt, a sulfonium salt, or an iodonium salt; and a sulfonate compound such as imidosulfonate, oximesulfonate, diazodisulfone, disulfone, or o-nitrobenzyl sulfonate.

Examples of the photocationic polymerization initiator include compounds represented by the following Formulae (b1), (b2), and (b3).

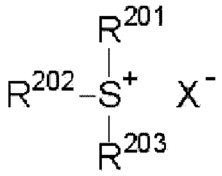

(b1)

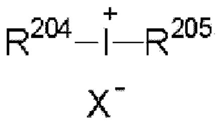

(b2)

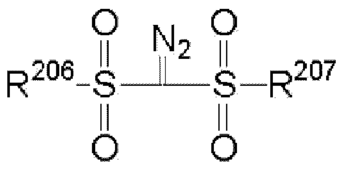

(b3)

In the formulae, $R^{201}$ to $R^{207}$ each independently represent an organic group. The number of carbon atoms in the organic group is preferably 1 to 30. Examples of the organic group include an alkyl group and an aryl group. In Formula (b 1), two of $R^{201}$ to $R^{203}$ may be bonded to each other to form a ring structure, and the ring may include an oxygen atom, a sulfur atom, an ester bond, an amide bond, or a carbonyl group. In the formulae, $X^-$ represents a non-nucleophilic anion. Examples of the non-nucleophilic anion include a sulfonate anion, a carboxylate anion, a bis(alkylsulfonyl)amide anion, a tris(alkylsulfonyl)methide anion, $BF_4^-$, $PF_6^-$, and $SbF_6^-$. The details of the compound represented by Formulae (b 1), (b2), and (b3) can be found in paragraphs 0139 to 0214 of JP2009-258603A, the content of which is incorporated herein by reference.

As the photocationic polymerization initiator, a commercially available product can also be used. Examples of the commercially available product of the photocationic polymerization initiator include ADEKAARKLS SP series manufactured by Adeka Corporation (for example, ADEKA ARKLS SP-606) and IRGACURE 250, IRGACURE 270, and IRGACURE 290 manufactured by BASF.

A content of the photocationic polymerization initiator in the total solid content of the composition is preferably 0.1% to 30% by mass, more preferably 0.5% to 20% by mass, and still more preferably 1% to 15% by mass. The composition according to the embodiment of the present invention may contain only one kind of photopolymerization initiator, or may contain two or more kinds of photopolymerization initiators. In a case of containing two or more kinds of photopolymerization initiators, it is preferable that the total content of the photopolymerization initiators is within the above-described range.

<<Pigment derivative>>

The composition according to the embodiment of the present invention may further contain a pigment derivative. Examples of the pigment derivative include a compound having a structure in which a portion of a chromophore is substituted with an acidic group, a basic group, or a phthalimidomethyl group. Examples of the acid group include a sulfo group, a carboxy group, and a quaternary ammonium salt group thereof. Examples of the basic group include an amino group. The details of the pigment derivative can be found in paragraphs 0162 to 0183 of JP2011-252065A, the content of which is incorporated herein by reference. The content of the pigment derivative is preferably 1 to 30 parts by mass and more preferably 3 to 20 parts by mass with respect to 100 parts by mass of the pigment. Among these pigment derivatives, one kind may be used alone, or two or more kinds may be used in combination. In a case where two or more pigment derivatives are used in combination, it is preferable that the total content of the pigment derivatives is within the above-described range.

<<Anti-coloiing agent>>

The composition according to the embodiment of the present invention can contain an anti-coloring agent. Examples of the anti-coloring agent include a phenol compound, a phosphite compound, and a thioether compound. Among these, a phenol compound having a molecular weight of 500 or more, a phosphite compound having a molecular weight of 500 or more, or a thioether compound having a molecular weight of 500 or more is more preferable. In addition, the anti-coloring agent is preferably a phenol compound, and more preferably a phenol compound having a molecular weight of 500 or more.

Examples of the phenol compound include a hindered phenol compound. In particular, a compound having a substituent at a position (ortho position) adjacent to a phenolic hydroxy group is preferable. As the substituent, a substituted or unsubstituted alkyl group having 1 to 22 carbon atoms is preferable. In addition, a compound having a phenol group and a phosphite group in the same molecule is also preferable.

As the phenolic hydroxy group-containing compound, in particular, a polysubstituted phenol compound is suitably used. The polysubstituted phenol compound can be classified into three types (a hindered type represented by the following Formula (A), a semi-hindered type represented by the following Formula (B), and a less-hindered type represented by the following Formula (C)) having different substitution sites and different structures in terms of reactivity to

a peroxy radical trapped for the stable generation of a phenoxy radical.

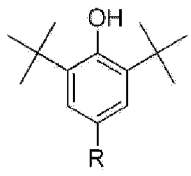
(A)

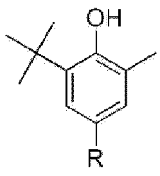
(B)

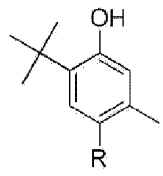
(C)

In Formulae (A) to (C), R represents a hydrogen atom or a substituent. R represents preferably a hydrogen atom, a halogen atom, an amino group which may have a substituent, an alkyl group which may have a substituent, an aryl group which may have a substituent, an alkoxy group which may have a substituent, an aryloxy group which may have a substituent, an alkylamino group which may have a substituent, an arylamino group which may have a substituent, an alkylsulfonyl group which may have a substituent, or an arylsulfonyl group which may have a substituent, and more preferably an amino group which may have a substituent, an alkyl group which may have a substituent, an aryl group which may have a substituent, an alkoxy group which may have a substituent, an aryloxy group which may have a substituent, an alkylamino group which may have a substituent, or an arylamino group which may have a substituent.

A composite anti-coloring agent in which a plurality of structures represented by Formulae (A) to (C) described above, having an antioxidant function, are present in the same molecule is still more preferable. Specifically, a compound in which 2 to 4 structures represented by Formulae (A) to (C) described above, having an antioxidant function, are present in the same molecule is preferable. Among these, the semi-hindered type represented by Formula (B) is more preferable. Representative examples of a commercially available product of (A) include SUMILIZER BHT (manufactured by Sumitomo Chemical Co., Ltd.), IRGANOX 1010 and 1222 (manufactured by BASF), and ADEKA STAB AO-20, AO-50, and AO-60 (manufactured by Adeka Corporation). Representative examples of a commercially available product of (B) include SUMILIZER BBM-S (manufactured by Sumitomo Chemical Co., Ltd.), IRGANOX 245 (manufactured by BASF), and ADEKA STAB AO-80 (manufactured by Adeka Corporation). Representative examples of a commercially available product of (C) include ADEKA STAB AO-30 and AO-40 (manufactured by Adeka Corporation).

Examples of the phosphite compound and the thioether compound include compounds described in paragraphs 0213 and 0214 of WO2017/159910A and commercially available products. In addition to the above-described representative examples, examples of a commercially available product of the anti-coloring agent include ADEKA STAB AO-50F, ADEKA STAB AO-60G, and ADEKA STAB AO-330 (manufactured by Adeka Corporation). In addition, as the anti-coloring agent, compounds described in paragraphs 0211 to 0223 of JP2015-034961 can also be used.

A content of the anti-coloring agent in the total solid content of the composition is preferably 0.01% to 20% by mass, more preferably 0.1% to 15% by mass, and still more preferably 0.3% to 5% by mass. As the anti-coloring agent, one kind may be used alone, or two or more kinds may be used in combination. In a case where two or more kinds thereof are used in combination, it is preferable that the total content of the two or more kinds thereof is within the above-described range.

«Ultraviolet absorber»

The composition according to the embodiment of the present invention can contain an ultraviolet absorber. Examples of the ultraviolet absorber, include a conjugated diene compound, an aminobutadiene compound, a methyldibenzoyl compound, a coumarin compound, a salicylate compound, a benzophenone compound, a benzotriazole compound, an acrylonitrile compound, and a hydroxyphenyltriazine compound. Specific examples of such a compound include compounds described in paragraphs 0038 to 0052 of JP2009-217221A, paragraphs 0052 to 0072 of JP2012-208374A, paragraphs 0317 to 0334 of JP2013-068814A, and paragraphs 0061 to 0080 of JP2016-162946A, the contents of which are incorporated herein by reference. Examples of a commercially available product of the ultraviolet absorber include UV-503 (manufactured by Daito Chemical Co., Ltd.), Tinuvin series and Uvinul series manufactured by BASF SE, and Sumisorb series manufactured by Sumika Chemtex Co., Ltd. In addition, examples of the benzotriazole compound include MYUA series manufactured by Miyoshi Oil & Fat Co., Ltd. (The Chemical Daily, February 1, 2016). In addition, as the ultraviolet absorber, compounds described in paragraphs 0049 to 0059 of JP6268967B, compounds described in paragraphs 0059 to 0076 of WO2016/181987A, and thioaryl group-substituted benzotriazole type ultraviolet absorbers described in WO2020/137819A can also be used.

A content of the ultraviolet absorber in the total solid content of the composition is preferably 0.1% to 10% by mass, more preferably 0.1% to 7% by mass, still more preferably 0.1% to 5% by mass, and particularly preferably 0.1% to 3% by mass. As the ultraviolet absorber, one kind may be used alone, or two or more kinds may be used in combination.

In a case where two or more kinds thereof are used in combination, it is preferable that the total content of the two or more kinds thereof is within the above-described range.

<<Silane coupling agent>>

The composition according to the embodiment of the present invention may contain a silane coupling agent. In the present specification, the silane coupling agent refers to a silane compound having a functional group other than a hydrolyzable group. In addition, the hydrolyzable group refers to a substituent directly linked to a silicon atom and capable of forming a siloxane bond due to at least one of a hydrolysis reaction or a condensation reaction. Examples of the hydrolyzable group include a halogen atom, an alkoxy group, and an acyloxy group, and an alkoxy group is preferable. That is, it is preferable that the silane coupling agent is a compound having an alkoxysilyl group. Examples of the functional group other than a hydrolyzable group include a vinyl group, a (meth)allyl group, a (meth)acryloyl group, a (meth)acryloyloxy group, a mercapto group, an epoxy group, an oxetanyl group, an amino group, an ureide group, a sulfide group, an isocyanate group, and a phenyl group. Among these, an amino group, a (meth)acryloyl group, a (meth)acryloyloxy group, or an epoxy group is preferable. Specific examples of the silane coupling agent include N-β-aminoethyl-γ-aminopropyl methyldimethoxysilane (trade name: KBM-602, manufactured by Shin-Etsu Chemical Co., Ltd.), N-β-aminoethyl-γ-aminopropyl trimethoxysilane (trade name: KBM-603, manufactured by Shin-Etsu Chemical Co., Ltd.), N-β-aminoethyl-γ-aminopropyl triethoxysilane (trade name: KBE-602, manufactured by Shin-Etsu Chemical Co., Ltd.), γ-aminopropyl trimethoxysilane (trade name: KBM-903, manufactured by Shin-Etsu Chemical Co., Ltd.), γ-aminopropyl triethoxysilane (trade name: KBE-903, manufactured by Shin-Etsu Chemical Co., Ltd.), 3-methacryloxypropyl methyldimethoxysilane (trade name: KBM-502, manufactured by Shin-Etsu Chemical Co., Ltd.), and 3-methacryloxypropyl trimethoxysilane (trade name: KBM-503, manufactured by Shin-Etsu Chemical Co., Ltd.). In addition, specific examples of the silane coupling agent include a compound described in paragraphs 0018 to 0036 of JP2009-288703A and a compound described in paragraphs 0056 to 0066 of JP2009-242604A, the contents of which are incorporated herein by reference.

A content of the silane coupling agent in the total solid content of the composition is preferably 0.01% to 10% by mass, more preferably 0.1% to 7% by mass, and still more preferably 1% to 5% by mass. As the silane coupling agent, one kind may be used alone, or two or more kinds may be used in combination. In a case where two or more kinds thereof are used in combination, it is preferable that the total content of the two or more kinds thereof is within the above-described range.

«Polymerization inhibitor»

The composition according to the embodiment of the present invention can contain a polymerization inhibitor. Examples of the polymerization inhibitor include hydroquinone, p-methoxyphenol, di-tert-butyl-p-cresol, pyrogallol, tert-butyl catechol, 1,4-benzoquinone, 4,4'-thiobis(3-methyl-6-tert-butylphenol), 2,2'-methylenebis(4-methyl-6-t-butylphenol), and an N-nitrosophenylhydroxylamine salt (an ammonium salt, a cerous salt, or the like), and p-methoxyphenol is preferable. A content of the polymerization inhibitor in the total solid content of the composition is preferably 0.0001% to 5% by mass and more preferably 0.0001% to 1% by mass.

<<Chain transfer agent>>

The composition according to the embodiment of the present invention can contain a chain transfer agent. As the chain transfer agent, the compound described in paragraph 0225 of WO2017/159190A can be used. A content of the chain transfer agent in the total solid content of the composition is preferably 0.2% to 5.0% by mass and more preferably 0.4% to 3.0% by mass. In addition, the content of the chain transfer agent is preferably 1 to 40 parts by mass and more preferably 2 to 20 parts by mass with respect to 100 parts by mass of the polymerizable monomer. As the chain transfer agent, one kind may be used alone, or two or more kinds may be used in combination. In a case where two or more kinds thereof are used in combination, it is preferable that the total content of the two or more kinds thereof is within the above-described range.

<<Sensitizer>>

The composition according to the embodiment of the present invention may further contain a sensitizer. It is preferable that the sensitizer is a compound sensitizing the photopolymerization initiator by an electron migration mechanism or an energy-transfer mechanism. Examples of the sensitizer include a compound having an absorption in a range of 300 to 450 nm. With regard to the sensitizer, the details can be found in the description of paragraphs 0231 to 0253 of JP2010-106268A (corresponding to paragraphs 0256 to 0273 of US2011/0124824A), the content of which is incorporated herein by reference. A content of the antioxidant in the total solid content of the composition is preferably 0.1% to 20% by mass and more preferably 0.5% to 15% by mass. As the sensitizer, one kind may be used alone, or two or more kinds may be used in combination. In a case where two or more kinds thereof are used in combination, it is preferable that the total content of the two or more kinds thereof is within the above-described range.

<<Co-sensitizer>>

The composition according to the embodiment of the present invention can further contain a co-sensitizer. It is preferable that the co-sensitizer is a compound which has a function of further improving sensitivity of the photopolymerization initiator or the sensitizer to radioactive ray, or of suppressing inhibition of polymerization of the polymerizable monomer due to oxygen. With regard to the co-sensitizer, the details can be found in the description of paragraphs 0254 to 0257 of JP2010-106268A (corresponding to paragraphs 0277 to 0279 of US2011/0124824A), the content of which is incorporated herein by reference. A content of the co-sensitizer in the total solid content of the composition is preferably 0.1% to 30% by mass, more preferably 1% to 25% by mass, and still more preferably 1.5% to 20% by mass. As the co-sensitizer, one kind may be used alone, or two or more kinds may be used in combination. In a case where two or more kinds thereof are used in combination, it is preferable that the total content of the two or more kinds thereof is within the above-described range.

<<Surfactant>>

The composition according to the embodiment of the present invention may contain various surfactants from the viewpoint of further improving suitability for application. As the surfactant, various surfactants such as a fluorine-based surfactant, a nonionic surfactant, a cationic surfactant, an anionic surfactant, and a silicone-based surfactant can be used. The surfactant is preferably a silicone-based surfactant or a fluorine-based surfactant.

The fluorine content in the fluorine-based surfactant is preferably 3 to 40% by mass, more preferably 5 to 30% by mass, and still more preferably 7 to 25% by mass. The fluorine-based surfactant in which the fluorine content is in the above-described range is effective from the viewpoints of the uniformity in the thickness of the coating film and liquid saving properties, and the solubility thereof in the composition is also excellent.

Examples of the fluorine-based surfactant include surfactants described in paragraphs 0060 to 0064 of JP2014-041318A (paragraphs 0060 to 0064 of the corresponding WO2014/017669A) and the like, surfactants described in paragraphs 0117 to 0132 of JP2011-132503A, and surfactants described in JP2020-008634A, the contents of which are incorporated herein by reference. Examples of a commercially available product of the fluorine-based surfactant include: MEGAFACE F-171, F-172, F-173, F-176, F-177, F-141, F-142, F-143, F-144, F-437, F-475, F-477, F-479, F-482, F-554, F-555-A, F-556, F-557, F-558, F-559, F-560, F-561, F-565, F-563, F-568, F-575, F-780, EXP, MFS-330, R-01, R-40, R-40-LM, R-41, R-41-LM, RS-43, R-43, TF-1956, RS-90, R-94, RS-72-K, and DS-21 (all of which are manufactured by DIC Corporation); FLUORAD FC430, FC431, and FC171 (all of which are manufactured by Sumitomo 3M Ltd.); SURFLON S-382, SC-101, SC-103, SC-104, SC-105, SC-1068, SC-381, SC-383, S-393, and KH-40 (all of which are manufactured by Asahi Glass Co., Ltd.); POLYFOX PF636, PF656, PF6320, PF6520, and PF7002 (all of which are manufactured by OMNOVA Solutions Inc.); and FTERGENT 208G, 215M, 245F, 601AD, 601ADH2, 602A, 610FM, 710FL, 710FM, 710FS, and FTX-218 (all of which are manufactured by NEOS COMPANY LIMITED).

As the fluorine-based surfactant, an acrylic compound, which has a molecular structure having a functional group containing a fluorine atom and in which, by applying heat to the molecular structure, the functional group containing a fluorine atom is broken to volatilize a fluorine atom, can also be suitably used. Examples of such a fluorine-based surfactant include MEGAFACE DS series manufactured by DIC Corporation (The Chemical Daily, February 22, 2016; Nikkei Business Daily, February 23, 2016) such as MEGAFACE DS-21.

It is also preferable that a polymer of a fluorine atom-containing vinyl ether compound having a fluorinated alkyl group or a fluorinated alkylene ether group, and a hydrophilic vinyl ether compound is used as the fluorine-based surfactant. Examples of such a fluorine-based surfactant include fluorine-based surfactants described in JP2016-216602A, the contents of which are incorporated herein by reference.

As the fluorine-based surfactant, a block polymer can also be used. As the fluorine-based surfactant, a fluorine-containing polymer compound including a repeating unit derived from a (meth)acrylate compound having a fluorine atom and a repeating unit derived from a (meth)acrylate compound having 2 or more (preferably 5 or more) alkyleneoxy groups (preferably ethyleneoxy groups or propyleneoxy groups) can also be preferably used. In addition, fluorine-containing surfactants described in paragraphs 0016 to 0037 of JP2010-032698A, or the following compounds are also exemplified as the fluorine-based surfactant used in the present invention.

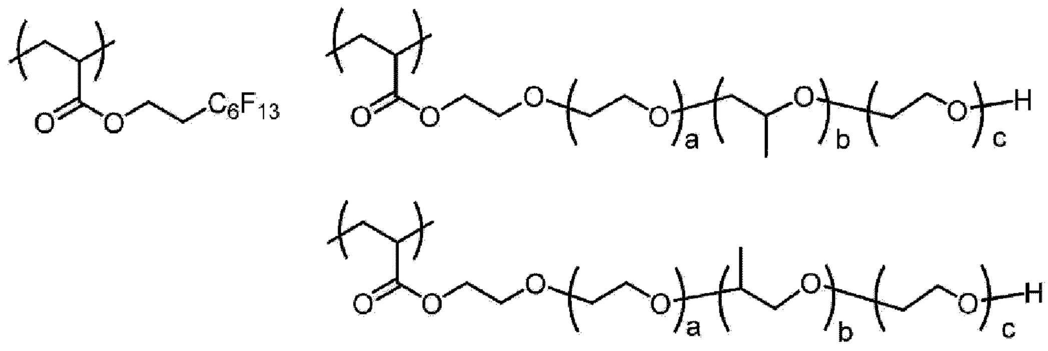

62% 38%

a+c=14
b=17

A weight-average molecular weight of the compound is preferably 3,000 to 50,000 and, for example, 14,000. In the compound, "%" representing the proportion of a repeating unit is mol%.

In addition, as the fluorine-based surfactant, a fluorine-containing polymer having an ethylenically unsaturated bond-containing group at a side chain can also be used. Specific examples thereof include compounds described in paragraphs 0050 to 0090 and paragraphs 0289 to 0295 of JP2010-164965A, and MEGAFACE RS-101, RS-102, RS-718K, and RS-72-K manufactured by DIC Corporation. In addition, as the fluorine-based surfactant, a compound described in paragraphs 0015 to 0158 of JP2015-117327A can also be used.

In addition, from the viewpoint of environmental regulation, it is also preferable to use a surfactant described in WO2020/084854A as a substitute for the surfactant having a perfluoroalkyl group having 6 or more carbon atoms.

In addition, it is also preferable to use a fluorine-containing imide salt compound represented by Formula (fi-1) as the surfactant.

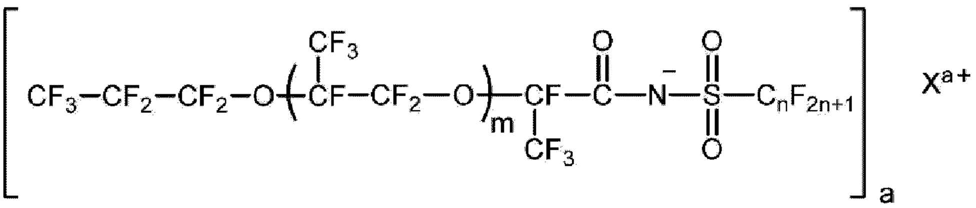

(fi-1)

In Formula (fi-1), m represents 1 or 2, n represents an integer of 1 to 4, a represents 1 or 2, and $X^{a+}$ represents an a-valent metal ion, a primary ammonium ion, a secondary ammonium ion, a tertiary ammonium ion, a quaternary ammonium ion, or $NH_4^+$.

Examples of the nonionic surfactant include glycerol, trimethylolpropane, trimethylolethane, an ethoxylate and propoxylate thereof (for example, glycerol propoxylate or glycerol ethoxylate), polyoxyethylene lauryl ether, polyoxyethylene stearyl ether, polyoxyethylene oleyl ether, polyoxyethylene octylphenyl ether, polyoxyethylene nonylphenyl ether, polyethylene glycol dilaurate, polyethylene glycol distearate, sorbitan fatty acid esters, PLURONIC L10, L31, L61, L62, 10R5, 17R2, and 25R2 (manufactured by BASF SE), TETRONIC 304, 701, 704, 901, 904, and 150R1 (manufactured by BASF SE), SOLSPERSE 20000 (manufactured by Lubrizol Japan Ltd.), NCW-101, NCW-1001, and NCW-1002 (all of which are manufactured by FUJIFILM Wako Pure Chemical Corporation), PIONIN D-6112, D-6112-W, and D-6315 (all of which are manufactured by Takemoto Oil&Fat Co., Ltd.), and OLFINE E1010 and SURFYNOL 104, 400, and 440 (all of which are manufactured by Nissin Chemical Co., Ltd.).

Examples of the silicone-based surfactant include DOWSII, SH8400, SH 8400 FLUID, FZ-2122, 67 Additive, 74 Additive, M Additive, and SF 8419 OIL (all of which are manufactured by Dow·TORAY); TSF-4300, TSF-4445, TSF-4460, and TSF-4452 (all of which are manufactured by Momentive Performance Materials Inc.); KP-341, KF-6000, KF-6001, KF-6002, and KF-6003 (all of which are manufactured by Shin-Etsu Chemical Co., Ltd.); and BYK-307, BYK-322, BYK-323, BYK-330, BYK-333, BYK-3760, and BYK-UV3510 (all of which are manufactured by BYK-Chemie).

In addition, as the silicone-based surfactant, a compound having the following structure can also be used.

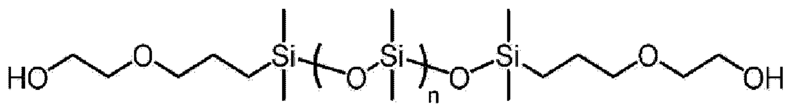

A content of the surfactant in the total solid content of the composition is preferably 0.001% to 2.0% by mass and more preferably 0.005% to 1.0% by mass. As the surfactant, one kind may be used alone, or two or more kinds may be used in combination. In a case where two or more kinds thereof are used in combination, it is preferable that the total content of the two or more kinds thereof is within the above-described range.

<<Other additives>>

Furthermore, a well-known additive such as a plasticizer or a sensitization agent may be added to the composition in order to improve physical properties of the film. Examples of the plasticizer include dioctyl phthalate, didodecyl phthalate, triethylene glycol dicaprylate, dimethyl glycol phthalate, tricresyl phosphate, dioctyl adipate, dibutyl sebacate, and triacetyl glycerin.

<Storage container>

A storage container of the composition according to the embodiment of the present invention is not particularly limited, and a well-known storage container can be used. In addition, as the storage container, it is also preferable to use a multilayer bottle having an interior wall constituted with six layers from six kinds of resins or a bottle having a 7-layer structure from 6 kinds of resins for the purpose of suppressing infiltration of impurities into raw materials or compositions. Examples of such a container include the containers described in JP2015-123351A. In addition, for the purpose of preventing metal elution from the container interior wall, improving storage stability of the composition, and suppressing the alteration of components, it is also preferable that the container interior wall is formed of glass, stainless steel, or the like.

<Method of preparing composition>

The composition according to the embodiment of the present invention can be prepared by mixing the above-described components with each other. During the preparation of the composition, the respective components may be mixed with each other collectively, or may be mixed with each other sequentially after at least dissolved or dispersed in a solvent. In addition, during mixing, the order of addition or working conditions are not particularly limited.

In addition, it is preferable that a process of dispersing the particles is provided in order to prepare the composition. Examples of a mechanical force used for dispersing the particles in the process of dispersing the particles include compression, squeezing, impact, shearing, and cavitation. Specific examples of these processes include a beads mill, a sand mill, a roll mill, a ball mill, a paint shaker, a microfluidizer, a high-speed impeller, a sand grinder, a flow jet mixer, high-pressure wet atomization, and ultrasonic dispersion. In addition, in the pulverization of the particles in a sand mill (beads mill), it is preferable to perform a treatment under the condition for increasing a pulverization efficiency by using beads having small diameters; increasing the filling rate of the beads; or the like. Incidentally, it is preferable to remove coarse particles by filtration, centrifugation, or the like after the pulverization treatment. In addition, as the process and the dispersing machine for dispersing the particles, the process and the dispersing machine described in "Dispersion Technology Comprehension, published by Johokiko Co., Ltd., July 15, 2005", "Actual comprehensive data collection on dispersion technology and industrial application centered on suspension (solid/liquid dispersion system), published by Publication Department, Management Development Center, October 10, 1978", and paragraph 0022 of JP2015-157893A can be suitably used. In addition, in the process of dispersing the particles, the particles may be miniaturized in a salt milling step. A material, a device, process conditions, and the like used in the salt milling step can be found in, for example, JP2015-194521A and JP2012-046629A.

During the preparation of the composition, it is preferable that the composition is filtered through a filter, for example, in order to remove foreign matter or to reduce defects. As the filter, any filter which is used in the related art for filtering or the like can be used without any particular limitation. Examples of a material of the filter include: a fluororesin such as polytetrafluoroethylene (PTFE); a polyamide resin such as nylon (for example, nylon-6 or nylon-6,6); and a polyolefin resin (including a polyolefin resin having a high density and an ultrahigh molecular weight) such as polyethylene or polypropylene (PP). Among these materials, polypropylene (including high-density polypropylene) or nylon is preferable.

The pore size of the filter is preferably 0.01 to 10.0 μm, more preferably 0.05 to 3.0 μm, and still more preferably about 0.1 to 2.0 μm. With regard to the pore size value of the filter, reference can be made to a nominal value of filter

manufacturers. As the filter, various filters provided by Nihon Pall Corporation (DFA4201NIEY and the like), Toyo Roshi Kaisha., Ltd., Nihon Entegris K.K. (formerly Nippon Microlith Co., Ltd.), Kitz Micro Filter Corporation, and the like can be used.

It is preferable that a fibrous filter material is used as the filter. Examples of the fibrous filter material include polypropylene fiber, nylon fiber, and glass fiber. Examples of a commercially available product include SBP type series (SBP008 and the like), TPR type series (TPR002, TPR005, and the like), or SHPX type series (SHPX003 and the like), all manufactured by Roki Techno Co., Ltd.

In a case where a filter is used, a combination of different filters (for example, a first filter and a second filter) may be used. In this case, the filtering using each of the filters may be performed once, or twice or more. In addition, a combination of filters having different pore sizes in the above-described range may be used. In addition, the filtering using the first filter may be performed only on the dispersion liquid, and the filtering using the second filter may be performed on a mixture of the dispersion liquid and other components.

<Film>

The film according to the embodiment of the present invention is a film formed of the above-described composition according to the embodiment of the present invention.

The maximum value of transmittance of the film according to the embodiment of the present invention with respect to light in a wavelength range of 400 to 700 nm is preferably 80% or less, more preferably 70% or less, still more preferably 60% or less, and particularly preferably 50% or less. The lower limit of the maximum value of the above-described transmittance is preferably 1% or more, more preferably 5% or more, still more preferably 10% or more, even more preferably 15% or more, and particularly preferably 20% or more.

The maximum value of transmittance of the film according to the embodiment of the present invention with respect to light in a wavelength range of 400 to 1000 nm is preferably 80% or less, more preferably 75% or less, still more preferably 70% or less, even more preferably 60% or less, and particularly preferably 50% or less. The lower limit of the maximum value of the above-described transmittance is preferably 1% or more, more preferably 5% or more, still more preferably 10% or more, even more preferably 15% or more, and particularly preferably 20% or more.

From the viewpoint of light scattering properties, it is preferable that a phase-separated structure composed of a first phase including the above-described particles P1 (particles having a refractive index of 2.0 or more and an average primary particle diameter of 200 nm or less) and a second phase having a lower content of the above-described particles P1 than the first phase is formed in the film according to the embodiment of the present invention. In addition, the above-described phase-separated structure is preferably a sea-island structure or a co-continuous phase structure. By forming these phase-separated structures, light can be effectively scattered between the first phase and the second phase, and particularly excellent light scattering properties can be easily obtained. In the sea-island structure, the second phase may form the sea and the first phase may form the island, or the first phase may form the sea and the second phase may form the island. The case where the first phase forms the sea and the second phase forms the island is preferable from the viewpoint of transmittance. The case where the first phase forms the island and the second phase forms the sea is preferable from the viewpoint of angle dependence.

A haze of the film according to the embodiment of the present invention based on JIS K 7136 is preferably 30% to 100%. The upper limit is preferably 99% or less, more preferably 95% or less, and still more preferably 90% or less. The lower limit is preferably 35% or more, more preferably 40% or more, and still more preferably 50% or more. In a case where the haze of the film is within the above-described range, a sufficient light scattering ability can be obtained while securing a sufficient light transmission amount.

The value of L* of the film according to the embodiment of the present invention in the L*a*b* color system of CIE 1976 is preferably 35 to 100. The value of L* is preferably 40 or higher, more preferably 50 or higher, and still more preferably 60 or higher. According to this aspect, a film having excellent whiteness can be formed. In addition, the value of L* is preferably 95 or lower, more preferably 90 or lower, and still more preferably 85 or lower. According to this aspect, a film having appropriate visible transparency can be formed.

In addition, the value of a* is preferably -15 or more, more preferably -10 or more, and still more preferably -5 or more. In addition, the value of a* is preferably 10 or lower, more preferably 5 or lower, and still more preferably 0 or lower. According to this aspect, a film having excellent whiteness can be formed.

In addition, the value of b* is preferably -35 or more, more preferably -30 or more, and still more preferably -25 or more. In addition, the value of b* is preferably 20 or lower, more preferably 10 or lower, and still more preferably 0 or lower. According to this aspect, a film having excellent whiteness can be formed.

A thickness of the film according to the embodiment of the present invention is preferably 1 to 40 μm. The upper limit of the film thickness is preferably 30 μm or less, more preferably 20 μm or less, and still more preferably 15 μm or less. The lower limit of the film thickness is preferably 2 μm or more, more preferably 4 μm or more, and still more preferably 5 μm or more. In a case where the film thickness is within the above-described range, a sufficient light

scattering ability can be obtained. Furthermore, an effect of improving a device optical sensitivity by reducing the thickness of a sensor and suppressing crosstalk can also be expected.

The film according to the embodiment of the present invention has high light scattering properties, and is preferably used as a light scattering film. For example, the film according to the embodiment of the present invention can be suitably used for a scattering layer for a light emitting element, a scattering layer for a display element, a scattering layer for an ambient optical sensor, and the like.

The composition according to the embodiment of the present invention and the film obtained from the composition can also be suitably used for a head-mounted display. The head-mounted display includes a display element, an eyepiece unit, a light source, a projection unit, and the like, and can be used at any position inside, between, and among them. Examples of the head-mounted display include head-mounted displays described in JP2019-061199A, JP2021-032975A, JP2019-032434A, JP2018-018077A, JP2016-139112A, US2021/0063745A, CN112394509B, US10921499B, KR10-2018-0061467A, JP2018-101034A, JP2020-101671A, TW2020-28805A, and the like.

<Method for producing film>

The film according to the embodiment of the present invention can be formed through a step of applying the composition according to the embodiment of the present invention to a support. Examples of the support include a substrate formed of a material such as silicon, non-alkali glass, soda glass, PYREX (registered trade name) glass, or quartz glass. For example, an organic film or an inorganic film may be formed on the substrate. Examples of a material of the organic film include a resin. In addition, as the support, a substrate formed of the resin can also be used. In addition, a charge coupled device (CCD), a complementary metal-oxide semiconductor (CMOS), a transparent conductive film, or the like may be formed on the support. In addition, a black matrix that separates pixels from each other may be formed on the support. In addition, optionally, an undercoat layer may be provided on the support to improve adhesiveness with a layer above the support, to prevent diffusion of materials, or to make a surface of the substrate flat. In addition, in a case where a glass substrate is used as the support, it is preferable that an inorganic film is formed on the glass substrate or the glass substrate may be dealkalized to be used.

As a method of applying the composition to the support, a well-known method can be used. Examples thereof include a dropping method (drop casting); a slit coating method; a spray method; a roll coating method; a spin coating method (spin coating); a cast coating method; a slit and spin method; a pre-wet method (for example, a method described in JP2009-145395A), various printing methods such as an inkjet (for example, on-demand type, piezo type, thermal type), a discharge printing such as nozzle jet, a flexo printing, a screen printing, a gravure printing, a reverse offset printing, and a metal mask printing; a transfer method using molds and the like; and a nanoimprinting method. The application method using an ink jet method is not particularly limited, and examples thereof include a method (in particular, pp. 115 to 133) described in "Extension of Use of Ink Jet - Infinite Possibilities in Patent-" (February, 2005, S.B. Research Co., Ltd.) and methods described in JP2003-262716A, JP2003-185831A, JP2003-261827A, JP2012-126830A, and JP2006-169325A. From the viewpoint of suitability for application, the application using a spin coating method is preferably spin coating at 300 to 6000 rpm and more preferably spin coating at 400 to 3000 rpm. In addition, the temperature of the support during spin coating is preferably 10°C to 100°C and more preferably 20°C to 70°C. In a case where the temperature of the support is in the above-described range, a film having excellent application uniformity is likely to be formed. In a case where the drop casting method is used, it is preferable that a drop range of the composition in which a photoresist is used as a partition wall is formed on the support such that a film having a predetermined uniform thickness can be obtained. A desired film thickness can be obtained by controlling the drop amount and concentration of solid contents of the composition and the area of the drop range.

The composition layer formed on the support may be dried (pre-baked). For example, it is preferable that the film is dried under pre-baking conditions of a temperature of 60°C to 150°C and 30 seconds to 15 minutes.

The method of producing the film according to the embodiment of the present invention may further include a step of forming a pattern. Examples of a pattern forming method include a pattern forming method using a photolithography method and a pattern forming method using a dry etching method. In a case where the film according to the embodiment of the present invention is used as a flat film, the step of forming a pattern is not necessarily performed. Hereinafter, the step of forming a pattern will be described in detail.

(Case where pattern is formed using photolithography method)

It is preferable that the pattern forming method using a photolithography method includes: a step (exposure step) of exposing the composition layer, which is formed by applying the composition according to the embodiment of the present invention, in a patterned manner; and a step (development step) of forming a pattern by removing a non-exposed portion of the composition layer for development. Optionally, the pattern forming method may further include a step (post-baking step) of baking the developed pattern. Hereinafter, the respective steps will be described.

<<Exposure step>>

In the exposure step, the composition layer is exposed in a patterned manner. For example, the composition layer can be exposed in a pattern shape using an exposure device such as a stepper through a mask having a predetermined mask pattern. Thus, the exposed portion can be cured. Examples of the radiation (light) which can be used during the exposure include g-rays and i-rays. In addition, light (preferably light having a wavelength of 180 to 300 nm) having a wavelength of 300 nm or less can also be used. Examples of the light having a wavelength of 300 nm or less include KrF-rays (wavelength: 248 nm) and ArF-rays (wavelength: 193 nm), and KrF-rays (wavelength: 248 nm) are preferable.

In addition, in a case of exposure, the composition layer may be irradiated with light continuously to expose the composition layer, or the composition layer may be irradiated with light in a pulse to expose the composition layer (pulse exposure). The pulse exposure refers to an exposing method in which light irradiation and resting are repeatedly performed in a short cycle (for example, millisecond-level or less). In a case of the pulse exposure, the pulse width is preferably 100 nanoseconds (ns) or less, more preferably 50 nanoseconds or less, and still more preferably 30 nanoseconds or less. The lower limit of the pulse width is not particularly limited, and may be 1 femtosecond (fs) or more or 10 femtoseconds or more. The frequency is preferably 1 kHz or more, more preferably 2 kHz or more, and still more preferably 4 kHz or more. The upper limit of the frequency is preferably 50 kHz or less, more preferably 20 kHz or less, and still more preferably 10 kHz or less. The maximum instantaneous illuminance is preferably 50,000,000 $W/m^2$ or more, more preferably 100,000,000 $W/m^2$ or more, and still more preferably 200,000,000 $W/m^2$ or more. In addition, the upper limit of the maximum instantaneous illuminance is preferably 1,000,000,000 $W/m^2$ or less, more preferably 800,000,000 $W/m^2$ or less, and still more preferably 500,000,000 $W/m^2$ or less. Furthermore, the pulse width is a time during which light is radiated in the pulse period. The frequency is the number of pulse periods per second. The maximum instantaneous illuminance is average illuminance within the time during which light is radiated in the pulse period. The pulse period is a period in which irradiation with light and resting are one cycle in the pulse exposure.

In addition, for example, the irradiation amount (exposure amount) is preferably 0.03 to 2.5 $J/cm^2$, more preferably 0.05 to 1.0 $J/cm^2$, and most preferably 0.08 to 0.5 $J/cm^2$. The oxygen concentration in a case of the exposure can be appropriately selected. For example, the exposure may be performed in air, in a low-oxygen atmosphere having an oxygen concentration of 19 vol% or less (for example, 15 vol%, 5 vol%, or substantially oxygen-free), or in a high-oxygen atmosphere having an oxygen concentration of more than 21 vol% (for example, 22 vol%, 30 vol%, or 50 vol%). In addition, the exposure illuminance can be appropriately set, and is preferably selected in a range of 1,000 to 100,000 $W/m^2$. Appropriate conditions of each of the oxygen concentration and the exposure illuminance may be combined, and for example, a combination of the oxygen concentration of 10% by volume and the illuminance of 10,000 $W/m^2$, a combination of the oxygen concentration of 35% by volume and the illuminance of 20,000 $W/m^2$, or the like is available.

«Development step»

Next, a pattern is formed by removing a non-exposed portion of the exposed composition layer by development. The non-exposed portion of the composition layer can be removed by development using a developer. As a result, a non-exposed portion of the composition layer in the exposure step is eluted into the developer, and only the photocured portion remains on the support. The temperature of the developer is preferably, for example, 20°C to 30°C. The development time is preferably 20 to 180 seconds. In addition, in order to further improve residues removing properties, a step of shaking the developer off per 60 seconds and supplying a new developer may be repeated multiple times.

Examples of the developer include an organic solvent and an alkali developer, and an alkali developer is preferably used. As the alkali developer, an alkaline aqueous solution (alkali developer) in which an alkaline agent is diluted with pure water is preferable. Examples of the alkaline agent include organic alkaline compounds such as ammonia, ethylamine, diethylamine, dimethylethanolamine, diglycol amine, diethanolamine, hydroxyamine, ethylenediamine, tetramethylammonium hydroxide, tetraethylammonium hydroxide, tetrapropylammonium hydroxide, tetrabutylammonium hydroxide, ethyltrimethylammonium hydroxide, benzyltrimethylammonium hydroxide, dimethylbis(2-hydroxyethyl)ammonium hydroxide, choline, pyrrole, piperidine, and 1,8-diazabicyclo[5.4.0]-7-undecene, and inorganic alkaline compounds such as sodium hydroxide, potassium hydroxide, sodium carbonate, sodium hydrogen carbonate, sodium silicate, and sodium metasilicate. In consideration of environmental aspects and safety aspects, the alkaline agent is preferably a compound having a high molecular weight. The concentration of the alkaline agent in the alkaline aqueous solution is preferably 0.001% to 10% by mass and more preferably 0.01% to 1% by mass. In addition, the developer may further contain a surfactant. Examples of the surfactant include the surfactants described above. Among these, a nonionic surfactant is preferable. From the viewpoint of transportation, storage, and the like, the developer may be first produced as a concentrated solution and then diluted to a concentration required upon the use. The dilution factor is not particularly limited and, for example, can be set to be in a range of 1.5 to 100 times. In a case where the alkaline aqueous solution is used as a developer, it is preferable that the layer is washed (rinsed) with pure water after development.

In addition, it is preferable that the rinsing is performed by supplying a rinsing liquid to the composition layer after development while rotating the support on which the composition layer after development is formed. In addition, it is preferable that the rinsing is performed by moving a nozzle discharging the rinsing liquid from a center of the support to a peripheral edge of the support. In this case, in the movement of the nozzle from the center of the support to the peripheral edge of the support, the nozzle may be moved while gradually decreasing the moving speed of the nozzle. By performing rinsing in this manner, in-plane variation of rinsing can be suppressed. In addition, the same effect can be obtained by gradually decreasing the rotating speed of the support while moving the nozzle from the center of the support to the peripheral edge of the support.

After the development, it is preferable to carry out an additional exposure treatment or a heating treatment (post-baking) after carrying out drying. The additional exposure treatment or the post-baking is a curing treatment after development in order to complete curing. The heating temperature in the post-baking is preferably, for example, 100°C to 260°C. The lower limit of the heating temperature is preferably 120°C or higher and more preferably 160°C or higher. The upper limit of the heating temperature is preferably 240°C or lower and more preferably 220°C or lower. The film after development is post-baked continuously or batchwise using a heating unit such as a hot plate, a convection oven (hot air circulation dryer), and a high-frequency heater under the above-described conditions. In a case of performing the additional exposure treatment, light used for the exposure is preferably light having a wavelength of 400 nm or less. In addition, the additional exposure treatment may be carried out by the method described in KR10-2017-0122130A.

(Case where pattern is formed using dry etching method)

The formation of a pattern using a dry etching method can be performed using a method including: applying the composition according to the embodiment of the present invention to a support to form a composition layer; curing the composition layer to form a cured composition layer; forming a patterned resist layer on the cured composition layer; and dry-etching the cured composition layer with etching gas by using the patterned resist layer as a mask. The details of the pattern formation by the dry etching method can be found in paragraphs 0010 to 0067 of JP2013-064993A, the content of which is incorporated herein by reference.

<Optical sensor>

The optical sensor according to the embodiment of the present invention includes the film according to the embodiment of the present invention. Examples of the type of the optical sensor include an ambient light sensor and an illuminance sensor, and the optical sensor is preferably used as an ambient light sensor. The ambient light sensor is a sensor which detects hue of ambient light.

It is also preferable that the optical sensor according to the embodiment of the present invention has an optical filter having at least one pixel selected from a colored pixel or a pixel of an infrared transmitting filter, in addition to the film according to the embodiment of the present invention. Examples of the colored pixel include a red pixel, a blue pixel, a green pixel, a yellow pixel, a cyan pixel, and a magenta pixel. In addition, it is preferable that the film according to the embodiment of the present invention is provided closer to a light incident side than the above-described optical filter. By providing the film according to the embodiment of the present invention closer to the light incident side than the optical filter, angle dependence can be further reduced for each pixel.

An embodiment of the optical sensor is shown with reference to the drawings. An optical sensor 1 shown in Fig. 1 is provided with an optical filter 110 having pixels 111 to 114 on a photoelectric conversion element 101. A film 121 according to the embodiment of the present invention is formed on the optical filter 110. As an example of the pixels 111 to 114 constituting the optical filter 110, a combination in which the pixel 111 is a red pixel, the pixel 112 is a blue pixel, the pixel 113 is a green pixel, and the pixel 114 is a pixel of an infrared transmitting filter can be mentioned. In the optical sensor 1 shown in Fig. 1, the optical filter 110 having four types of pixels (pixels 111 to 114) is used, but the types of pixels may be one to three types or may be five or more types. The types can be appropriately selected according to the application. In addition, a planarizing layer may be interposed between the photoelectric conversion element 101 and the optical filter 110, or between the optical filter 110 and the film 121 according to the embodiment of the present invention.

Fig. 2 shows another embodiment of the optical sensor. An optical sensor 2 shown in Fig. 2 is provided with an optical filter 110 having pixels 111 to 114 on a photoelectric conversion element 101. The optical filter 110 has the same configuration as that of the above-described embodiment. A member in which a film 122 according to the embodiment of the present invention is formed on a surface of a transparent support 130 is disposed on the optical filter 110. Examples of the transparent support 130 include a glass substrate and a resin substrate. In the optical sensor 2 shown in Fig. 2, the member in which the film 122 according to the embodiment of the present invention is formed on the surface of the transparent support 130 is disposed on the optical filter 110 at predetermined intervals, but the optical filter 110 and the member in which the film 122 according to the embodiment of the present invention is formed on the surface of

the transparent support 130 may be in contact with each other. In addition, in the optical sensor 2 shown in Fig. 2, the film 122 according to the embodiment of the present invention is formed on only one surface of the transparent support 130, but the film 122 according to the embodiment of the present invention may be formed on both surfaces of the transparent support 130. In addition, in the optical sensor 2 shown in Fig. 2, the film 122 according to the embodiment of the present invention is formed on the surface of the transparent support 130 on the optical filter 110 side, but the film 122 according to the embodiment of the present invention may be formed on the surface of the transparent support 130 opposite to the optical filter 110 side. In addition, a planarizing layer may be interposed between the photoelectric conversion element 101 and the optical filter 110, or between the film 122 according to the embodiment of the present invention and the transparent support 130. Examples

Hereinafter, the present invention will be described in more detail using Examples, but the present invention is not limited to these examples.

<Measurement of average primary particle diameter of particles>

The primary particle diameter of the particles was obtained by observing particles with a transmission electron microscope (TEM) and observing a portion (primary particle) where the particles did not aggregate. Specifically, a particle size distribution was obtained by imaging a transmission electron micrograph of primary particles using a transmission microscope and measuring a particle size distribution with an image processing device using the micrograph. The average primary particle diameter of the particles refers to the number average particle size calculated from the particle size distribution. An electron microscope (H-7000, manufactured by Hitachi, Ltd.) was used as the transmission electron microscope, and a LUZEX AP (manufactured by Nireco Corporation) was used as the image processing device.

<Measurement of refractive index of particles>

A dispersion liquid was prepared using the particles, a resin (dispersant) having a known refractive index, and propylene glycol monomethyl ether acetate. Next, the prepared dispersion liquid and a resin having a known refractive index were mixed with each other to prepare coating liquids in which the concentrations of the particles in the total solid content of the coating liquids was 10% by mass, 20% by mass, 30% by mass, and 40% by mass. Using each of the coating liquids, a film having a thickness of 300 nm was formed on a silicon wafer, and the refractive index of the obtained film was measured by ellipsometry (LAMBDA ACE RE-3300, manufactured by SCREEN Holdings Co., Ltd.). Next, the concentration and refractive index of the particles were plotted on a graph to calculate the refractive index of the particles.

<Measurement of specific gravity of particles>

50 g of particles were put into a 100 mL volumetric flask. Subsequently, 100 mL of water was weighed using another 100 mL graduated cylinder. Thereafter, the weighed water was put into the volumetric flask to the extent that the particles were immersed, and then ultrasonic waves were applied to the volumetric flask to allow the particles and water to blend in. Next, additional water was added thereto until the marked line of the volumetric flask was reached, and the specific gravity was calculated as 50 g/(volume of water remaining in volumetric flask).

<Measurement of weight-average molecular weight>

The weight-average molecular weight of a resin was measured by gel permeation chromatography (GPC) according to the following conditions.

Type of column: a column in which TOSOH TSK gel Super HZM-H, TOSOH TSK gel Super HZ4000, and TOSOH TSK gel Super HZ2000 were linked to each other
Developing solvent: tetrahydrofuran
Column temperature: 40°C
Flow rate (sample injection volume): 1.0 μL (sample concentration: 0.1% by mass)
Device name: HLC-8220 GPC (manufactured by Tosoh Corporation)
Detector: refractive index (RI) detector
Calibration curve base resin: a polystyrene resin

<Measurement of ethylenically unsaturated bond-containing group value>

The ethylenically unsaturated bond-containing group value of resin was calculated from raw materials used for the synthesis of the resin.

<Measuring method of acid value>

The acid value indicates the mass of potassium hydroxide required to neutralize an acidic component per 1 g of solid content. A measurement sample was dissolved in a mixed solvent including tetrahydrofuran and water at a ratio (tetrahydrofuran/water) of 9/1, and the obtained solution was neutralized and titrated with a 0.1 mol/L sodium hydroxide aqueous solution at 25°C using a potentiometric titrator (trade name: AT-510, manufactured by Kyoto Electronics Manufacturing Co., Ltd.). An inflection point of a titration pH curve was set as a titration end point, and the acid value was calculated from the following expression.

$$A=56.11 \times Vs \times 0.5 \times f/w$$

A: acid value (mgKOH/g)
Vs: amount (mL) of the 0.1 mol/L sodium hydroxide aqueous solution used for the titration
f: titer of the 0.1 mol/L sodium hydroxide aqueous solution
w: mass (g) of the measurement sample (expressed in terms of solid contents)

<Method for synthesizing resin>

(Synthesis Example 1) Synthesis of resin B-5

29.0 g (0.20 mol) of p-vinylbenzoic acid (PVBA), 15.4 g (0.09 mol) of benzyl methacrylate (BzMA), 111.1 g (0.04 mmol) of a macromonomer MM-1, and 66.6 g of 1-methoxy-2-propanol (MFG) were charged into a three-neck flask. The macromonomer MM-1 was a 50% by mass propylene glycol monomethyl ether acetate solution of a compound having the following structure.

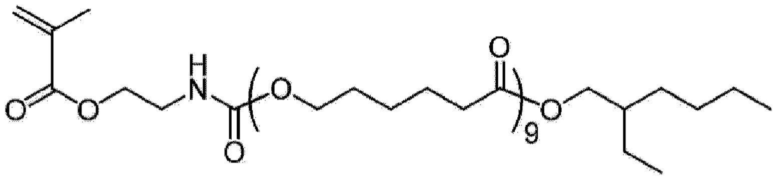

MM-1

Next, the atmosphere in the three-neck flask was purged with nitrogen at room temperature to reduce the oxygen concentration to 1% or less, and the solution was heated to 80°C and stirred (nitrogen flow rate: 50 mL/min, stirring rate: 250 rpm). After temperature stabilization, 0.90 g (4.46 mmol) of 1-dodecanethiol and 0.90 g (3.91 mmol) of dimethyl 2,2'-azobis(isobutyrate) were added thereto, and the mixture was stirred for 2 hours. 0.90 g (3.91 mmol) of dimethyl 2,2'-azobis(isobutyrate) was added thereto, and the mixture was stirred for another 2 hours. Next, 0.90 g (3.91 mmol) of dimethyl 2,2'-azobis(isobutyrate) was added thereto, and the mixture was heated to 90°C and stirred for 3 hours. 63.49 g of MFG was added to dilute the mixture, and then the mixture was cooled to room temperature to obtain a 35% by mass solution of a prepolymer B-5' (yield amount: 289 g, weight-average molecular weight: $2.5 \times 10^4$, acid value: 110 mgKOH/g).

Next, 0.59 g (3.80 mmol) of 2,2,6,6-tetramethylpiperidine 1-oxyl (TEMPO), 11.00 g (55.00 mmol) of 4-hydroxybutyl acrylate glycidyl ether (4HBAGE), and 2.96 g (9.00 mmol) of tetrabutylammonium bromide were added to the prepolymer B-5', and the mixture was stirred at 90°C for 48 hours at an oxygen concentration of 20% or more, thereby obtaining a resin B-5 having the following structure (yield amount: 290.0 g, weight-average molecular weight: $2.8 \times 10^4$, acid value: 70.0 mgKOH/g, ethylenically unsaturated bond-containing group value (hereinafter, also referred to as C=C value): 0.05 mmol/g). In the following structural formulae, the numerical value described together with the main chain indicates a mass ratio, and the numerical value described together with the side chain indicates the number of repeating units.

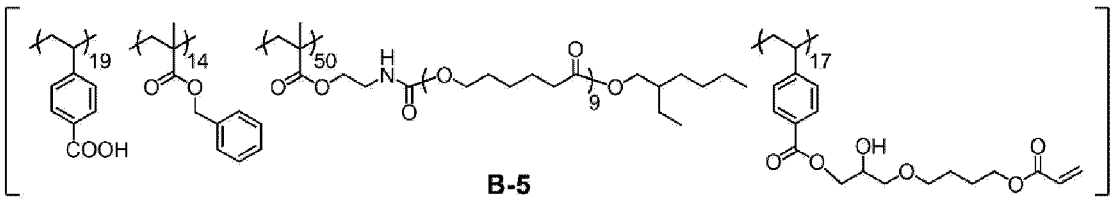

B-5

(Synthesis Examples 2 to 11) Synthesis of resins B-1 to B-4 and B-6 to B-11

Resins B-1 to B-4 and B-6 to B-11 having the following structures were respectively synthesized in the same manner as in Synthesis Example 1, except that, in Synthesis Example 1, a proportion of the raw materials was changed. In the following structural formula, n1, n2, n3, and n4 are mass ratios. The weight-average molecular weight of the resin was controlled by the amount of 1-dodecanethiol.

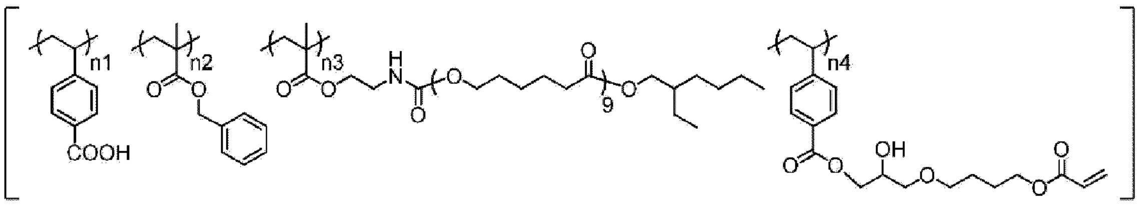

n1/n2/n3/n4 = 18/30/50/2 (**B-1**)
19/1/7/73 (**B-2**)
19/62/12/7 (**B-3**)
19/10/8/63 (**B-4**)
19/14/50/17 (**B-5**)
19/14/50/17 (**B-6**)
19/14/50/17 (**B-7**)
19/14/50/17 (**B-8**)
19/14/50/17 (**B-9**)
4/29/50/17 (**B-10**)
27/3/50/20 (**B-11**)

(Synthesis Example 12) Synthesis of resin B-12

A resin B-12 having the following structure (weight-average molecular weight: $2.8 \times 10^4$, acid value: 70.0 mgKOH/g, C=C value: 0.5 mmol/g) was synthesized in the same manner as in Synthesis Example 1, except that, in Synthesis Example 1, CYCLOMER-M100 (manufactured by DAICEL CORPORATION) was used instead of 4HBAGE. In the following structural formulae, the numerical value described together with the main chain indicates a mass ratio, and the numerical value described together with the side chain indicates the number of repeating units.

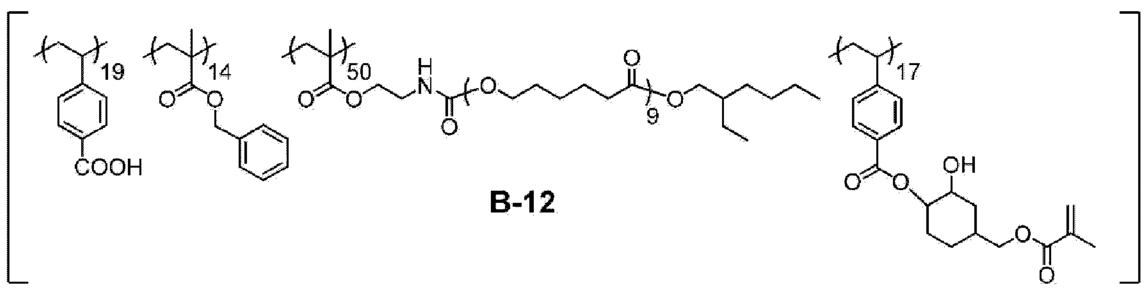

B-12

(Synthesis Example 13) Synthesis of resin B-13

-Synthesis of macromonomer MM-2-

ε-Caprolactone (1204.6 g), δ-valerolactone (212.6 g), and 2-ethyl-1-hexanol (82.5 g) were introduced into a three-neck flask, and the mixture was stirred while blowing nitrogen. Next, monobutyltin oxide (0.71 g) was added to the mixture, and the obtained mixture was heated to 90°C. After 7 hours, it was confirmed by $^1$H-nuclear magnetic resonance (NMR) that a signal derived from 2-ethyl-1-hexanol which is a raw material in the mixture had disappeared, and then the mixture was heated to 110°C. A polymerization reaction was continued at 110°C for 12 hours under nitrogen, then disappearance of signals derived from ε-caprolactone and δ-valerolactone was confirmed by $^1$H-NMR, and the temperature of the mixture was lowered to 80°C. The inside of the flask was replaced with air, and 2,6-di-t-butyl-4-methylphenol (0.40 g) was added to the mixture. Furthermore, Karenz MOI (manufactured by SHOWA DENKO K.K., 2-isocyanatoethyl methacrylate) (100.3 g) was added dropwise to the obtained mixture over 30 minute. After continuing the reaction in air for 1 hour, it was confirmed by $^1$H-NMR that a signal derived from 2-isocyanatoethyl methacrylate had disappeared. Propylene glycol monomethyl ether acetate (PGMEA) (1600.0 g) was added to the mixture to obtain a 50% by mass PGMEA solution (3200 g) of a macromonomer MM-having the following structure. The structure of the macromonomer MM-2 was confirmed by $^1$H-NMR. The number of repeating units was 20 calculated from the number of moles of the ε-caprolactone, δ-valerolactone, and 2-ethyl-1-hexanol as raw materials. The weight-average molecular weight was 6000, and the crystallization temperature was 6°C.

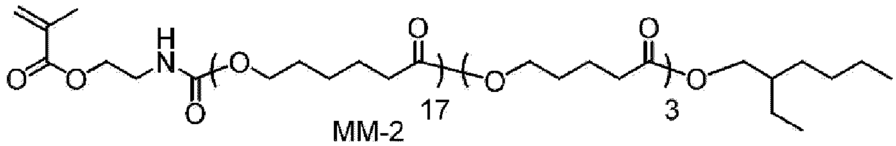

MM-2

-Synthesis of resin B-13-

A resin B-13 having the following structure (weight-average molecular weight: 2.8 × $10^4$, acid value: 70.0 mgKOH/g, C=C value: 0.35 mmol/g) was synthesized in the same manner as in Synthesis Example 1, except that, in Synthesis Example 1, NK ESTER CB-1 (manufactured by Shin-Nakamura Chemical Co., Ltd.) was used instead of PVBA and the macromonomer MM-2 was used instead of the macromonomer MM-1. In the following structural formulae, the numerical value described together with the main chain indicates a mass ratio, and the numerical value described together with the side chain indicates the number of repeating units.

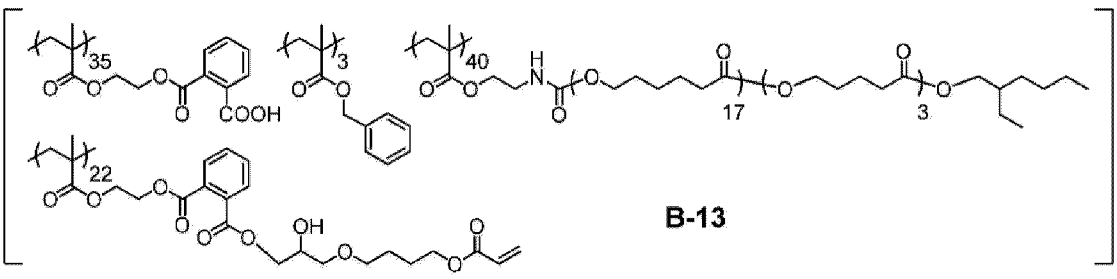

B-13

(Synthesis Example 14) Synthesis of resin B-14

A resin B-14 having the following structure (weight-average molecular weight: 2.8 × $10^4$, acid value: 70.0 mgKOH/g, C=C value: 0.5 mmol/g) was synthesized in the same manner as in Synthesis Example 1, except that, in Synthesis Example 1, benzyl acrylate was used instead of benzyl methacrylate. In the following structural formulae, the numerical value described together with the main chain indicates a mass ratio, and the numerical value described together with the side chain indicates the number of repeating units.

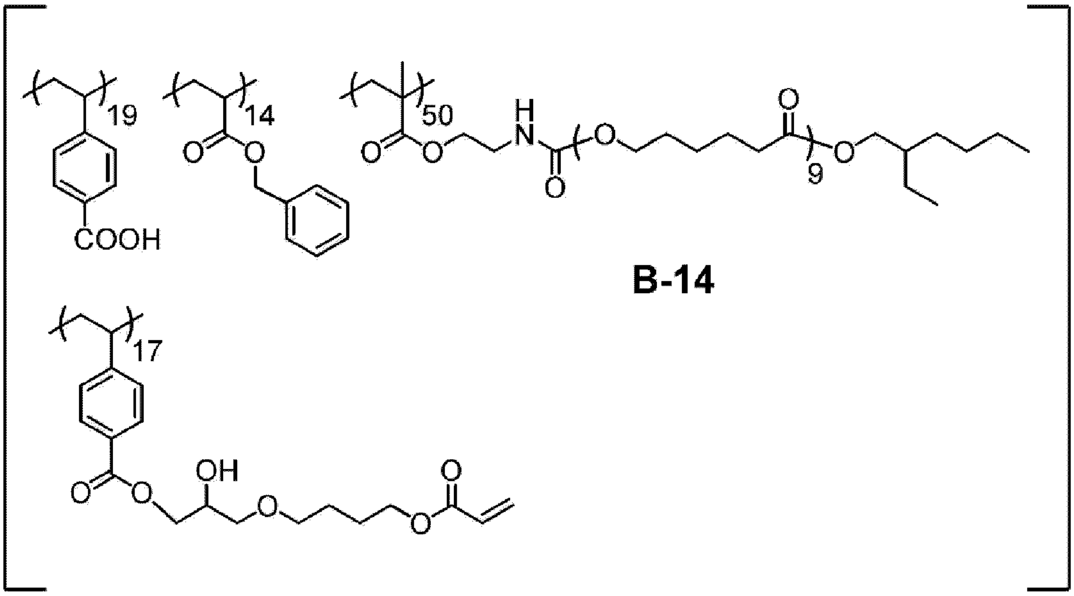

B-14

(Synthesis Example 15) Synthesis of resin B-15

-Synthesis of macromonomer MM-3

A macromonomer MM-3 was synthesized by performing the same operation as above, except that the type of the lactone compound used in the synthesis of the macromonomer MM-2 and the preparation amount thereof were changed.

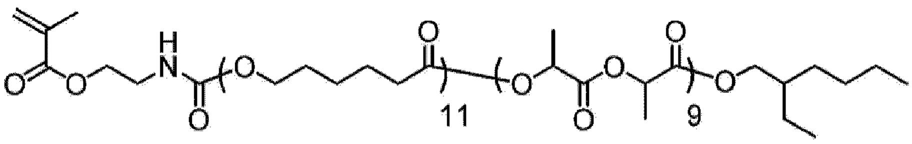

MM-3

-Synthesis of resin B-15-

A resin B-15 having the following structure (weight-average molecular weight: 2.8 × $10^4$, acid value: 70.0 mgKOH/g, C=C value: 0.5 mmol/g) was synthesized in the same manner as in Synthesis Example 1, except that, in Synthesis Example 1, styrene was used instead of benzyl methacrylate and the macromonomer MM-3 was used instead of the macromonomer MM-1. In the following structural formulae, the numerical value described together with the main chain indicates a mass ratio, and the numerical value described together with the side chain indicates the number of repeating units.

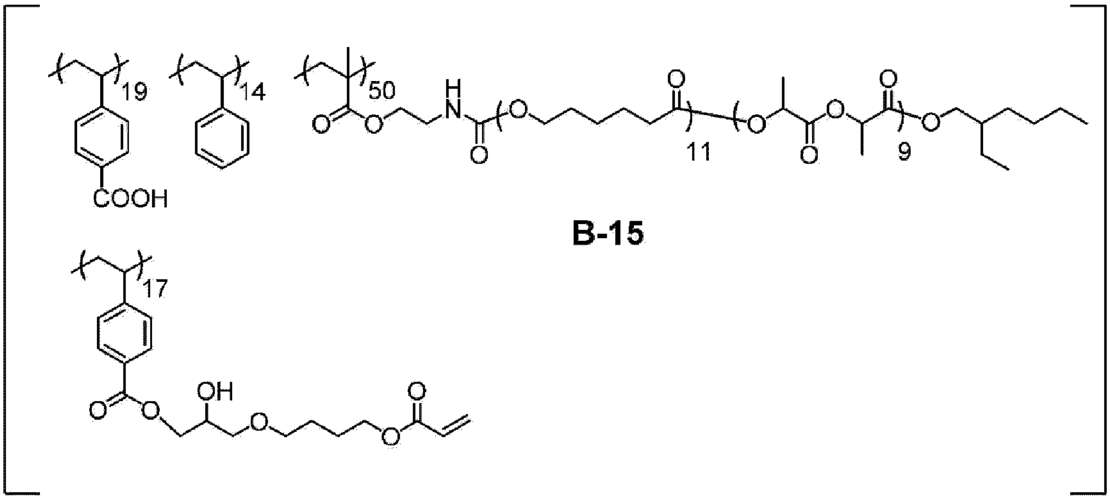

B-15

(Synthesis Example 16) Synthesis of resin B-16

-Synthesis of macromonomer MM-4

A macromonomer MM-4 was synthesized by performing the same operation as above, except that the type of the lactone compound used in the synthesis of the macromonomer MM-2 and the preparation amount thereof were changed.

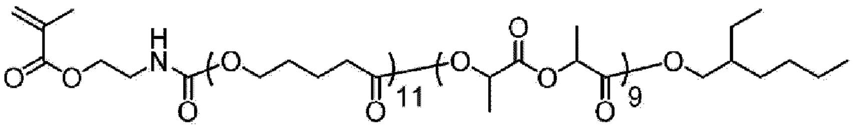

MM-4

-Synthesis of resin B-16-

A resin B-16 having the following structure (weight-average molecular weight: $2.8 \times 10^4$, acid value: 70.0 mgKOH/g, C=C value: 0.5 mmol/g) was synthesized in the same manner as in Synthesis Example 1, except that, in Synthesis Example 1, methyl methacrylate was used instead of benzyl methacrylate and the macromonomer MM-4 was used instead of the macromonomer MM-1. In the following structural formulae, the numerical value described together with the main chain indicates a mass ratio, and the numerical value described together with the side chain indicates the number of repeating units.

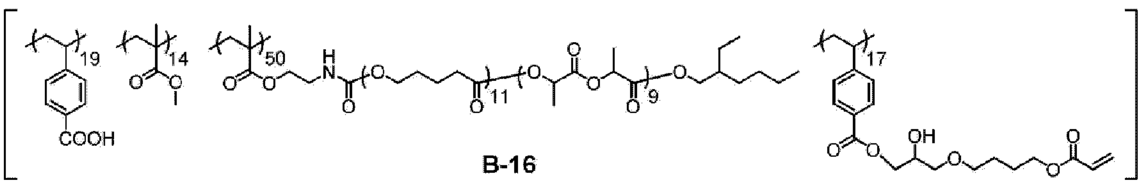

B-16

(Synthesis Example 17) Synthesis of resin B-17

-Synthesis of macromonomer MM-5

A macromonomer MM-5 was synthesized by performing the same operation as above, except that the type of the lactone compound (ε-caprolactone and δ-valerolactone) used in the synthesis of the macromonomer MM-2 and the preparation amount thereof were changed.

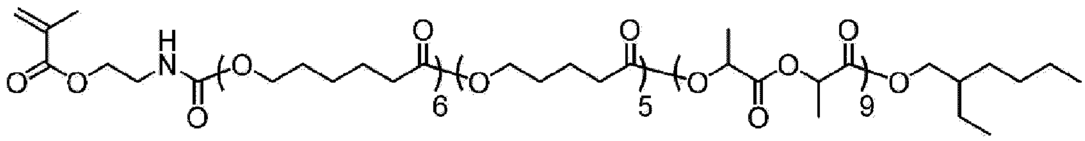

MM-5

-Synthesis of resin B-17-

A resin B-17 having the following structure (weight-average molecular weight: 2.8 × $10^4$, acid value: 70.0 mgKOH/g, C=C value: 0.5 mmol/g) was synthesized in the same manner as in Synthesis Example 1, except that, in Synthesis Example 1, 2-hydroxyethyl acrylate was used instead of benzyl methacrylate and the macromonomer MM-5 was used instead of the macromonomer MM-1. In the following structural formulae, the numerical value described together with the main chain indicates a mass ratio, and the numerical value described together with the side chain indicates the number of repeating units.

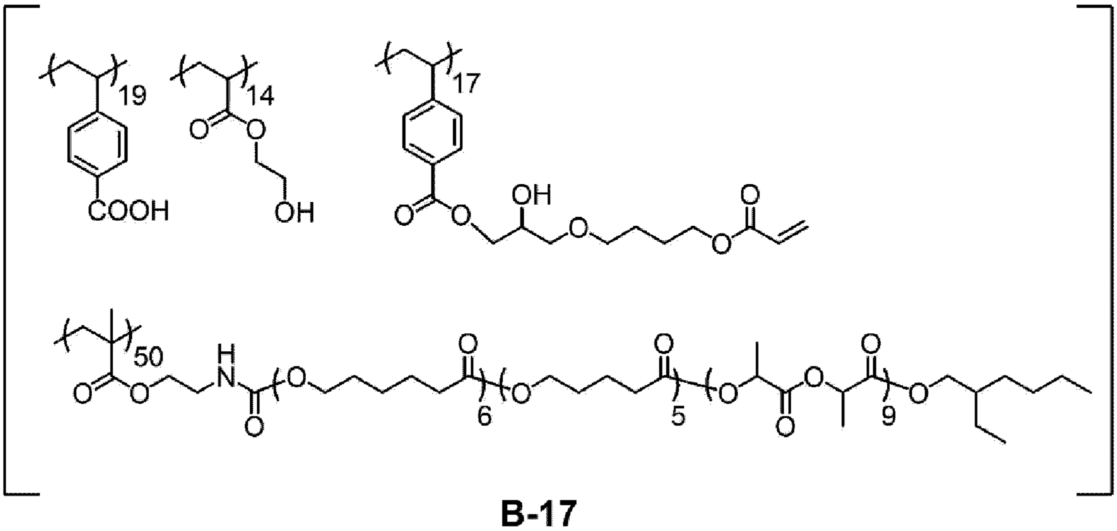

**B-17**

(Synthesis Example 18) Synthesis of resin B-18

A resin B-18 having the following structure (weight-average molecular weight: 2.8 × $10^4$, acid value: 70.0 mgKOH/g, C=C value: 0.5 mmol/g) was synthesized in the same manner as in Synthesis Example 1, except that, in Synthesis Example 1, N-butylacrylamide was used instead of benzyl methacrylate and the macromonomer MM-2 was used instead of the macromonomer MM-1. In the following structural formulae, the numerical value described together with the main chain indicates a mass ratio, and the numerical value described together with the side chain indicates the number of repeating units.

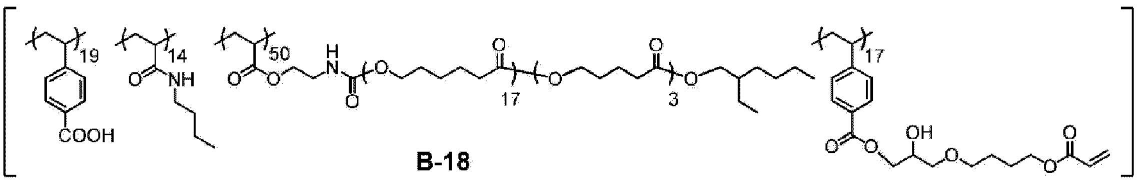

**B-18**

(Synthesis Example 19) Synthesis of resin B-19

A resin B-19 having the following structure (weight-average molecular weight: 2.7 × $10^4$, acid value: 70.0 mgKOH/g, C=C value: 0.5 mmol/g) was synthesized in the same manner as in Synthesis Example 1, except that, in Synthesis Example 1, glycidyl acrylate was used instead of 4HBAGE. In the following structural formulae, the numerical value described together with the main chain indicates a mass ratio, and the numerical value described together with the side chain indicates the number of repeating units.

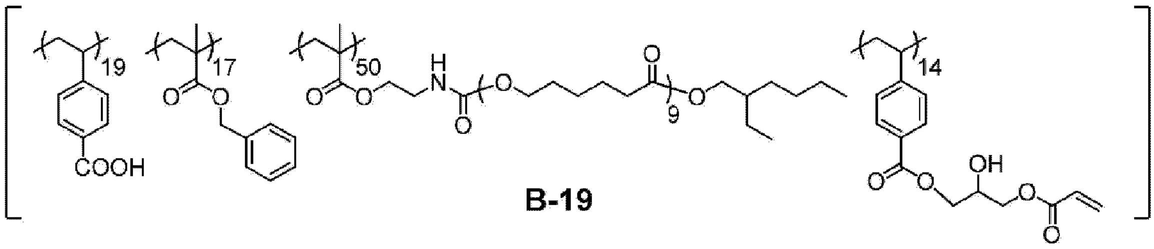

B-19

(Synthesis Example 20) Synthesis of resin B-20

A resin B-20 having the following structure (weight-average molecular weight: 2.7 × $10^4$, acid value: 70.0 mgKOH/g, C=C value: 0.5 mmol/g) was synthesized in the same manner as in Synthesis Example 1, except that, in Synthesis Example 1, glycidyl methacrylate was used instead of 4HBAGE. In the following structural formulae, the numerical value described together with the main chain indicates a mass ratio, and the numerical value described together with the side chain indicates the number of repeating units.

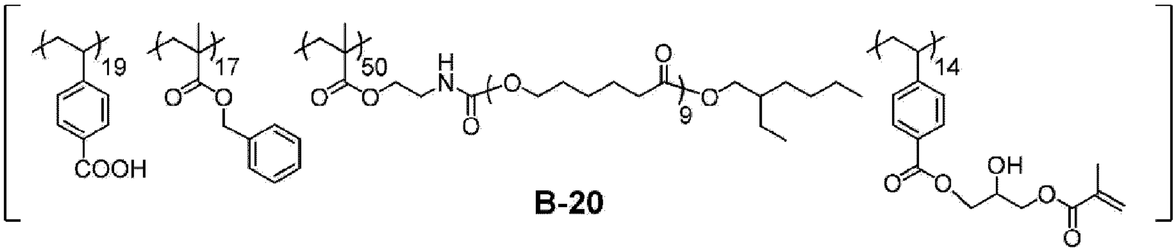

B-20

(Synthesis Example 21) Synthesis of resin B-21

A resin B-21 having the following structure (weight-average molecular weight: 2.8 × $10^4$, acid value: 70.0 mgKOH/g, C=C value: 0.5 mmol/g) was synthesized in the same manner as in Synthesis Example 1, except that, in Synthesis Example 1, 1,2-epoxy-9-decene was used instead of 4HBAGE. In the following structural formulae, the numerical value described together with the main chain indicates a mass ratio, and the numerical value described together with the side chain indicates the number of repeating units.

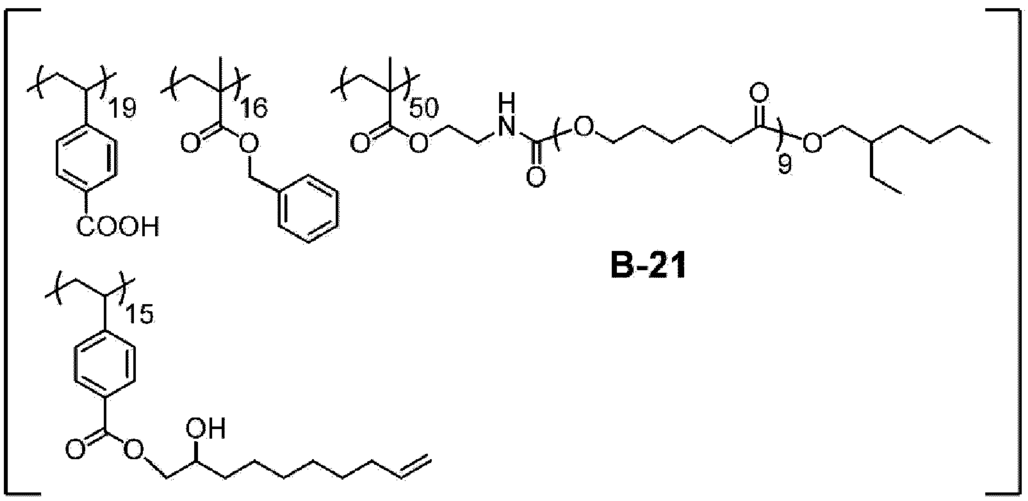

B-21

(Synthesis Example 22) Synthesis of resin B-22

A prepolymer B-22' was synthesized by the same synthesis method except that, in the synthesis of the prepolymer B-5' in Synthesis Example 1, 4-vinylbenzoic acid (27.7 g, 0.189 mol), the macromonomer MM-1 (106.1 g, 0.04 mol), benzyl methacrylate (19.3 g, 0.11 mol), and 2-hydroxyethyl acrylate (6.0 g, 0.05 mol) were used as raw materials. 1-isocyanato-4-vinylbenzene (7.6 g, 0.05 mol) was added to the prepolymer B-22', and the mixture was stirred at 80°C

for 1 h to synthesize a resin B-22 having the following structure (weight-average molecular weight: 2.8 × $10^4$, acid value: 70.0 mgKOH/g, C=C value: 0.5 mmol/g).

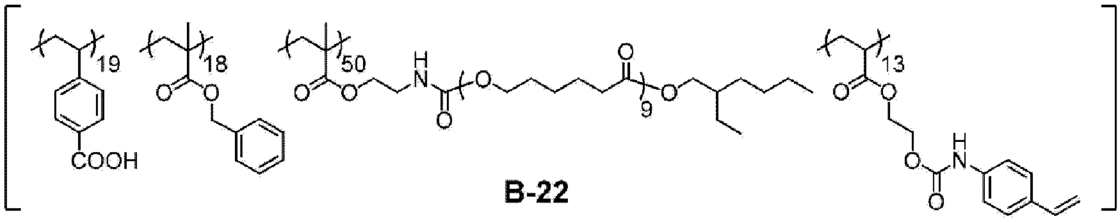

B-22

(Synthesis Example 23) Synthesis of resin B-23

A resin B-23 having the following structure (weight-average molecular weight: 2.8 × $10^4$, acid value: 70.0 mgKOH/g, C=C value: 0.5 mmol/g) was synthesized by the same synthesis method, except that, in Synthesis Example 22, a proportion of the raw materials of the prepolymer was changed and 4-maleimidophenyl isocyanate was used.

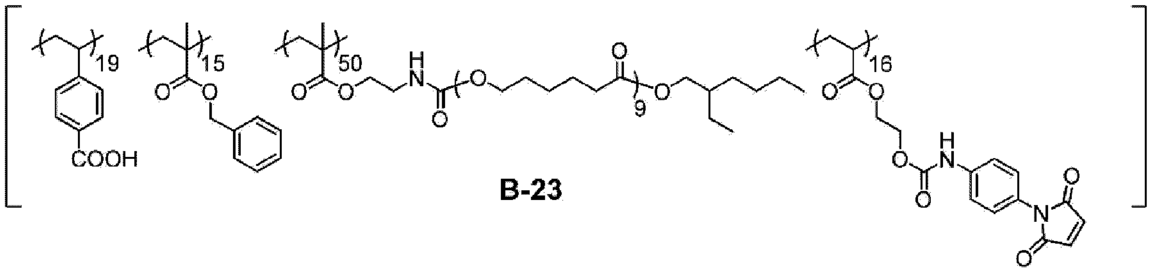

B-23

(Synthesis Example 24) Synthesis of resin B-24

A resin B-24 having the following structure (weight-average molecular weight: 2.8 × $10^4$, acid value: 70.0 mgKOH/g, C=C value: 0.5 mmol/g) was synthesized in the same manner as in Synthesis Example 1, except that, in Synthesis Example 1, allyl glycidyl ether was used instead of 4HBAGE. In the following structural formulae, the numerical value described together with the main chain indicates a mass ratio, and the numerical value described together with the side chain indicates the number of repeating units.

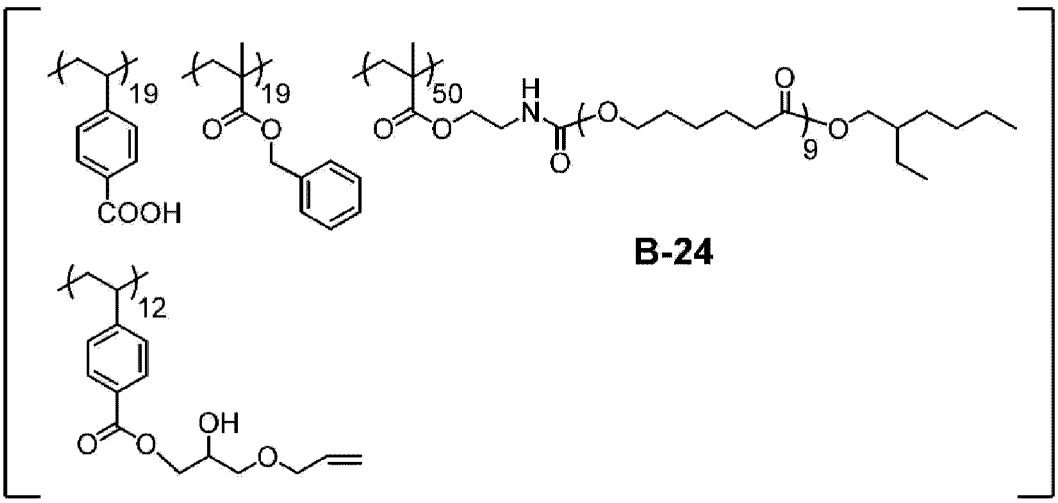

B-24

(Synthesis Example 25) Synthesis of resin B-25

A resin B-25 having the following structure (weight-average molecular weight: 2.8 × $10^4$, acid value: 70.0 mgKOH/g, C=C value: 0.5 mmol/g) was synthesized in the same manner as in Synthesis Example 1, except that, in

Synthesis Example 1, 1,2-epoxy-4-vinylcyclohexane was used instead of 4HBAGE. In the following structural formulae, the numerical value described together with the main chain indicates a mass ratio, and the numerical value described together with the side chain indicates the number of repeating units.

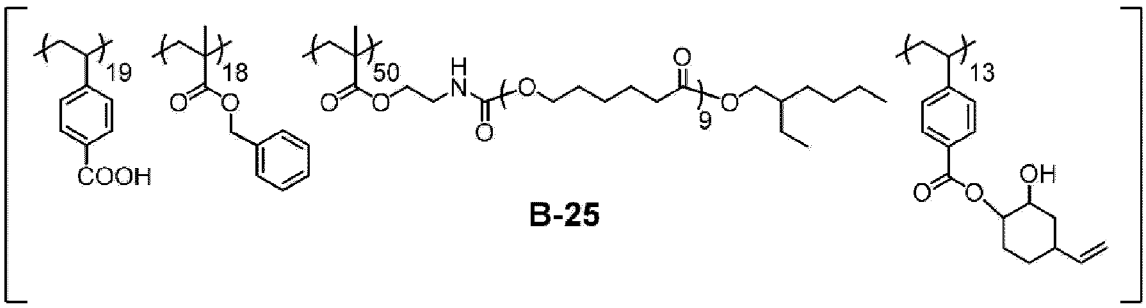

B-25

(Synthesis Example 26) Synthesis of resin B-26

-Synthesis of compound C-1-

5.0 g of glycidol (manufactured by Sigma-Aldrich Corporation), 53 g of butyl acetate, 0.04 g of p-methoxyphenol, 14.5 g of Karenz BEI (manufactured by SHOWA DENKO K.K.), and 0.04 g of NEOSTANN U-600 (manufactured by Nitto Kasei Co., Ltd.) were charged into a 200 mL three-neck flask, and the temperature was slowly raised to 60°C. After continuing the polymerization reaction at 60°C for 4 hours, the disappearance of a signal derived from Karenz BEI was confirmed by $^{1}H$-NMR, and 50 g of water was added thereto and the mixture was stirred. The organic layer obtained by separating the mixture and discarding the aqueous layer was washed again with 50 g of water. 3 g of magnesium sulfate was added to the washed organic layer, the washed organic layer was filtered, and 2,6-di-t-butyl-4-methylphenol (0.4 g) was added thereto and concentrated, thereby obtaining 12 g of a compound C-1.

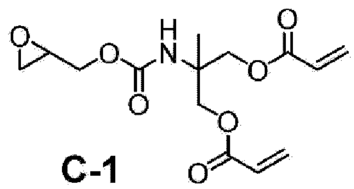

C-1

-Synthesis of resin B-26-

A resin B-26 having the following structure (weight-average molecular weight: $2.8 \times 10^4$, acid value: 70.0 mgKOH/g, C=C value: 0.5 mmol/g) was synthesized in the same manner as in Synthesis Example 1, except that, in Synthesis Example 1, the compound C-1 was used instead of 4HBAGE. In the following structural formulae, the numerical value described together with the main chain indicates a mass ratio, and the numerical value described together with the side chain indicates the number of repeating units.

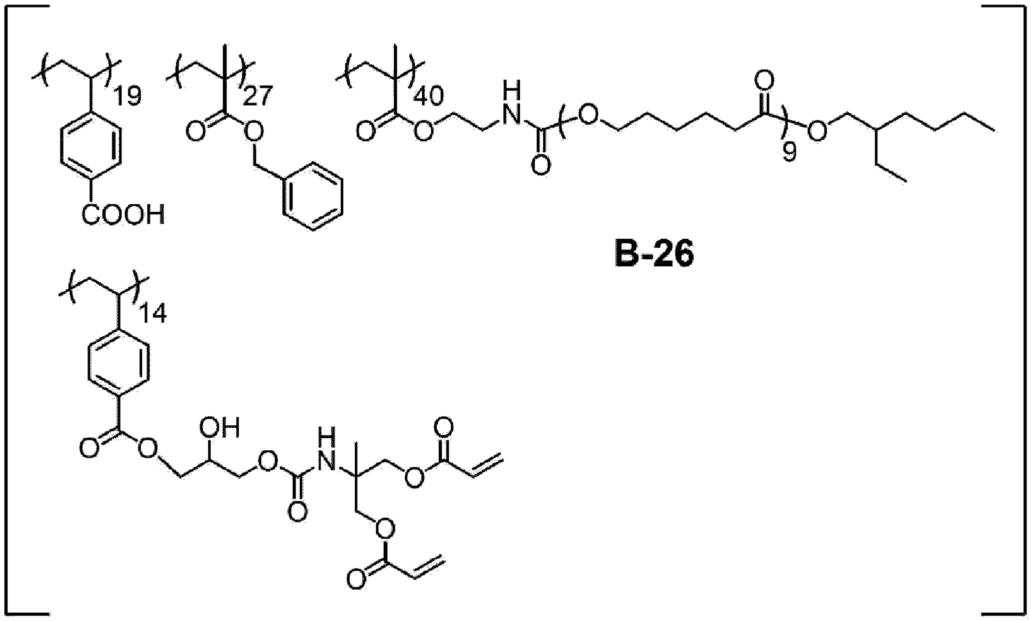

B-26

(Synthesis Example 27) Synthesis of resin B-27

A resin B-27 having the following structure (weight-average molecular weight: $2.8 \times 10^4$, acid value: 70.0 mgKOH/g, C=C value: 0.5 mmol/g) was synthesized in the same manner as in Synthesis Example 1, except that, in Synthesis Example 1, a compound m-1 (compound having the following structure) was used instead of p-vinylbenzoic acid (PVBA). In the following structural formulae, the numerical value described together with the main chain indicates a mass ratio, and the numerical value described together with the side chain indicates the number of repeating units.

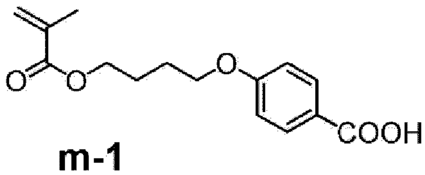

m-1

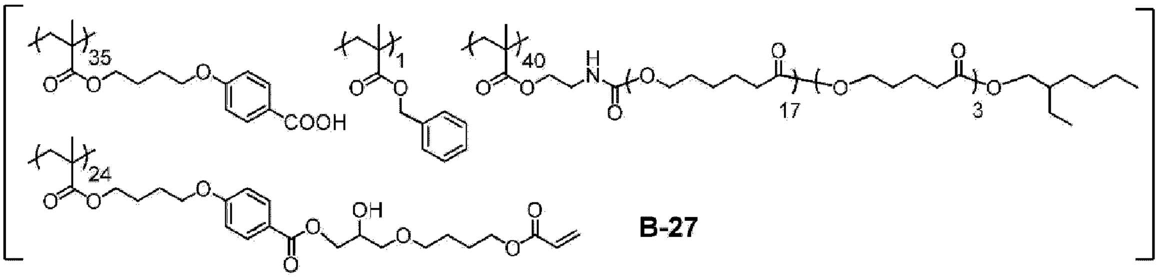

B-27

(Synthesis Example 28) Synthesis of resin B-28

-Synthesis of compound C-2-

60.0 g of 4-vinylphenol (manufactured by FUJIFILM Wako Pure Chemical Corporation), 85.6 g of 2-bromopropionyl chloride (manufactured by Tokyo Chemical Industry Co., Ltd.), and 100 g of methylene chloride were charged into a 500 mL three-neck flask, and the mixture was reacted at room temperature for 4 hours. After the reaction and then separating layers with water, the organic layer was taken out and crystallized with hexane, and the precipitated solid was filtered to obtain 140 g of a compound C-2.

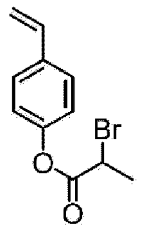

C-2

-Synthesis of prepolymer B-28'-

A prepolymer B-28' (35% by mass solution) having the following structure was synthesized in the same manner as in Synthesis Example 1, except that, in Synthesis Example 1, styrene and the compound C-2 were used instead of benzyl methacrylate, and the ratios thereof were changed. In the following structural formulae, the numerical value described together with the main chain indicates a mass ratio, and the numerical value described together with the side chain indicates the number of repeating units.

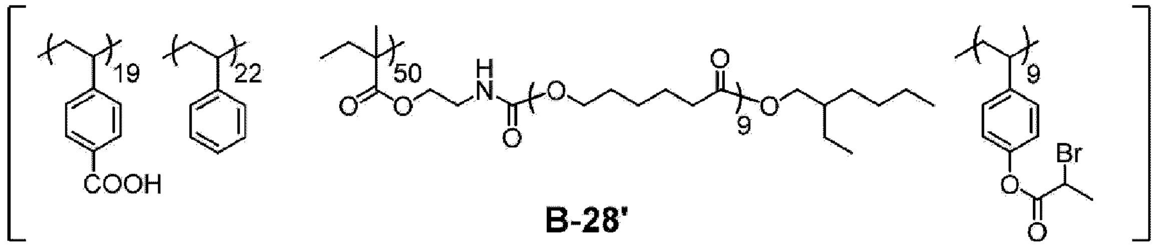

B-28'

-Synthesis of resin B-28-

Aresin-B-28 (weight-average molecular weight: 2.8 × $10^4$, acid value: 70.0 mgKOH/g, C=C value: 0.5 mmol/g) was synthesized by adding 6.00 g of diazabicycloundecene (DBU) to 300 g of the solution of the prepolymer B-28', stirring the mixture at room temperature for 2 hours, and separating layers with 500 mL of water and 200 mL of 0.1 N hydrochloric acid. In the following structural formulae, the numerical value described together with the main chain indicates a mass ratio, and the numerical value described together with the side chain indicates the number of repeating units.

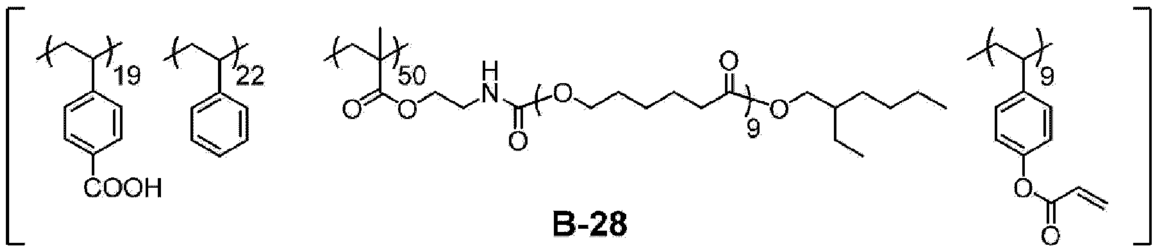

B-28

(Synthesis Example 29) Synthesis of resin B-29

A resin B-29 having the following structure (weight-average molecular weight: 2.8 × $10^4$, acid value: 70.0 mgKOH/g, C=C value: 0.5 mmol/g) was synthesized in the same manner as in Synthesis Example 28, except that, in Synthesis Example 28, methacrylic acid was used instead of p-vinylbenzoic acid (PVBA). In the following structural formulae, the numerical value described together with the main chain indicates a mass ratio, and the numerical value described together with the side chain indicates the number of repeating units.

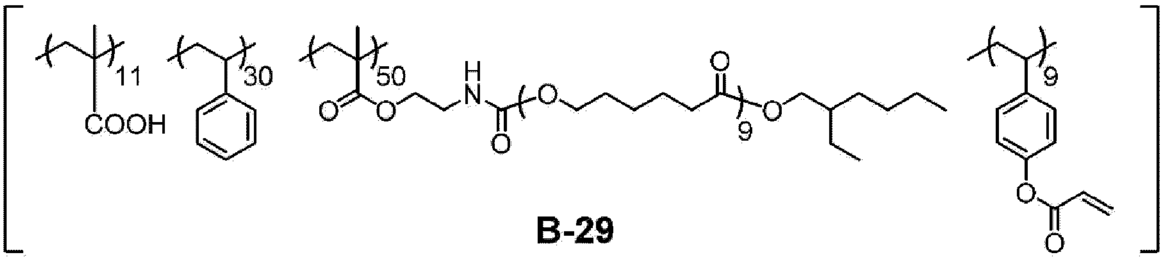

B-29

(Synthesis Example 30) Synthesis of resin B-30

A resin B-30 having the following structure (weight-average molecular weight: 2.8 × $10^4$, acid value: 70.0 mgKOH/g, C=C value: 0.5 mmol/g) was synthesized in the same manner as in Synthesis Example 1, except that, in Synthesis Example 1, methyl methacrylate was used instead of the macromonomer MM-1. In the following structural formulae, the numerical value described together with the main chain indicates a mass ratio, and the numerical value described together with the side chain indicates the number of repeating units.

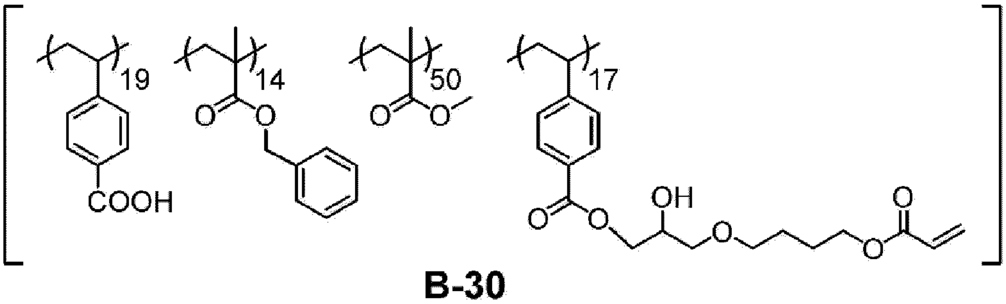

B-30

(Synthesis Example 31) Synthesis of resin B-31

-Synthesis of macromonomer MM-6-

435.8 g of methyl methacrylate, 412.6 g of butyl methacrylate, 38.5 g of 3-mercaptopropionic acid, and 4.20 g of a polymerization initiator (V-601, manufactured by FUJIFILM Wako Pure Chemical Corporation) were charged into a 3000 mL graduated cylinder, and the mixture was dissolved in 570.0 g of butyl butyrate to prepare a monomer solution. 713.0 g of PGMEA was charged into a 5000mL three-neck flask and stirred at 80°C, the above-described monomer solution was added dropwise thereto over 2 hours, and the mixture was further stirred at 80°C for 2 hours. 4.20 g of the polymerization initiator (V-601, manufactured by FUJIFILM Wako Pure Chemical Corporation) was further added thereto, and the mixture was heated to 95°C and further stirred for 2 hours. 62.0 g of glycidyl methacrylate, 2.0 g of 4-hydroxy-2,2,6,6-tetramethylpiperidine 1-oxyl free radical, and 26.0 g of tetrabutylammonium bromide were further added to the obtained solution, and the mixture was further stirred at 100°C for 3 hours. The obtained reaction solution was reprecipitated with methanol to synthesize a macromonomer MM-6.

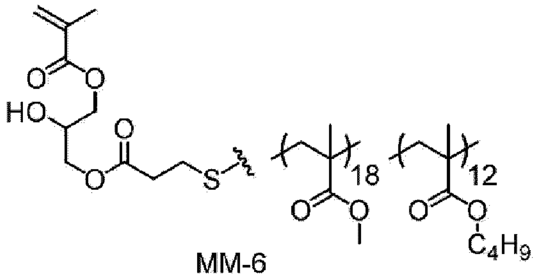

MM-6

A resin B-31 having the following structure was synthesized in the same manner as in Synthesis Example 1, except that, in Synthesis Example 1, the macromonomer MM-6 was used instead of the macromonomer MM-1. In the following structural formulae, the numerical value described together with the main chain indicates a mass ratio, and the numerical value described together with the side chain indicates the number of repeating units.

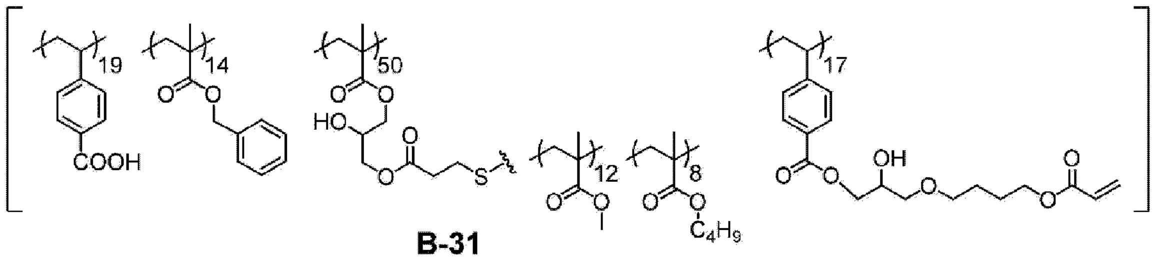

B-31

(Synthesis Example 32) Synthesis of resin B-32

-Synthesis of compound C-4-

C-4 having the following structure was synthesized by the same method, except that, in the synthesis of C-2 in Synthesis Example 28, 4-vinylbenzylamine was instead of 4-vinylphenol.

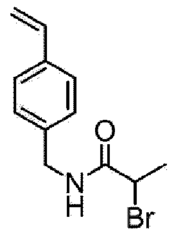

C-4

-Synthesis of resin B-32-

B-32 having the following structure was synthesized by the same method except that, in the synthesis of B-28 in Synthesis Example 28, C-4 was used instead of C-2, and a proportion of the raw materials was changed.

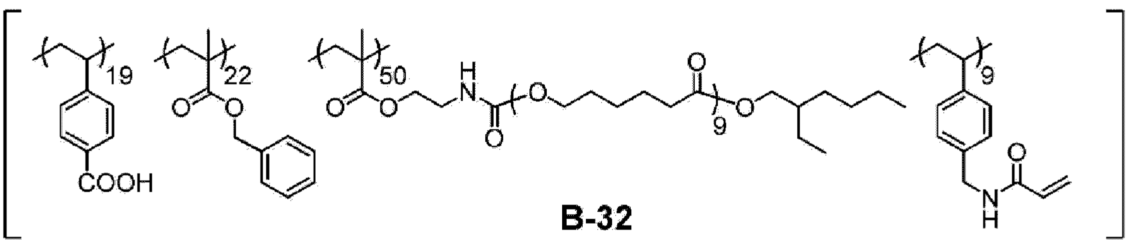

B-32

(Synthesis Example 33) Synthesis of resin b-1

b-1 having the following structure (weight-average molecular weight: 2.8 × $10^4$, acid value: 70.0 mgKOH/g) was synthesized by the same method except that, in the synthesis of the prepolymer B-5' in Synthesis Example 1, the proportion of the raw materials was changed. In the following structural formula, the numerical value added to the main chain is a mass ratio.

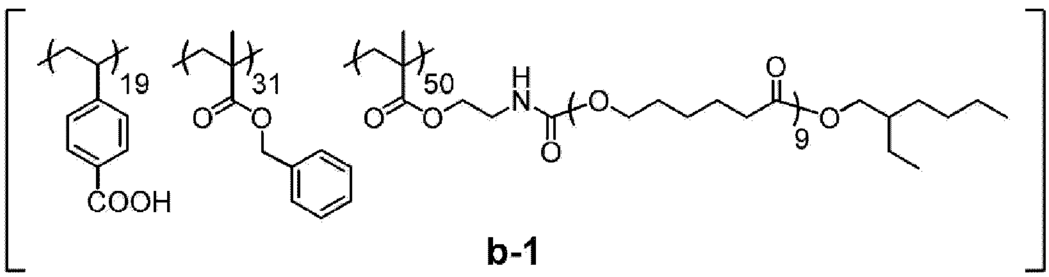

b-1

(Synthesis Example 34) Synthesis of resin D-1

-Synthesis of intermediate D-1"-

94.84 g (0.12 mol) of dipentaerythritol hexakis(3-mercaptopropionate) (DPMP), 55.16 g (0.42 mol) of itaconic acid, and 350.00 g of MFG were charged into a three-neck flask. After purging with nitrogen at room temperature, an oxygen concentration of 1% or less was confirmed, and the mixture was heated to 80°C and stirred (nitrogen flow rate: 50 mL/min, stirring rate: 200 rpm). After temperature stabilization, 0.24 g (1.06 mmol) of dimethyl 2,2'-azobis(isobutyrate) was added thereto, and the mixture was stirred for 2 hours. Next, 0.24 g (1.06 mmol) of dimethyl 2,2'-azobis(isobutyrate) was added thereto, and the mixture was heated to 90°C and stirred for 2 hours. The mixture was cooled to room temperature to obtain a 30% by mass solution of an intermediate D-1" (yield amount: 495.90 g).

-Synthesis of prepolymer D-1'-

549.00 g of propylene glycol monomethyl ether acetate (PGMEA) was charged into a three-neck flask, and after purging with nitrogen at room temperature to set an oxygen concentration to 1% or less, the mixture was heated to 80°C and stirred (nitrogen flow rate: 50 mL/min, stirring rate: 200 rpm).

412.49 g (0.1 mol) of the intermediate D-1", 230.21 g (2.67 mol) of methacrylic acid, 1268.29 g (0.4010 mol) of the compound C-2, 937.36 g of PGMEA, and 5.281 g (23.0 mmol) of dimethyl 2,2'-azobis(isobutyrate) were charged into an Erlenmeyer flask to prepare a solution. The solution in the Erlenmeyer flask was added dropwise to the three-neck flask over 2.5 hours (dropwise addition rate: 2.80 mL/min). Next, 54.90 g of PGMEA for washing was added to the Erlenmeyer flask to wash the inside of the Erlenmeyer flask, and then PGMEA in the Erlenmeyer flask was added dropwise to the three-neck flask, followed by stirring for 2.5 hours.

Next, 5.281 g (23.0 mmol) of dimethyl 2,2'-azobis(isobutyrate) was added to the three-neck flask, and the mixture was heated to 90°C and stirred for 2 hours (nitrogen flow rate: 50 mL/min, stirring rate: 250 rpm). The mixture was cooled to room temperature to obtaining a 40% by mass solution of a prepolymer D-1' (yield amount: 3300 g, weight-average molecular weight: $1.3 \times 10^4$, acid value: 153.1 mgKOH/g).

-Synthesis of resin D-1-

D-1 having the following structure (weight-average molecular weight: $1.2 \times 10^4$, acid value: 155.0 mgKOH/g, C=C value: 0.28 mmol/g) was synthesized by the same method except that, in the synthesis of the resin B-28 in Synthesis Example 28, the prepolymer D-1' was used instead of B-28'.

(Synthesis Examples 35 to 39) Synthesis of resins D-2 to D-6

Resins D-2 to D-6 having the following structures were respectively synthesized in the same manner as in Synthesis Example 34, except that, in Synthesis Example 34, a proportion of the raw materials was changed. In the following structural formulae, the subscript number is the number of repeating units.

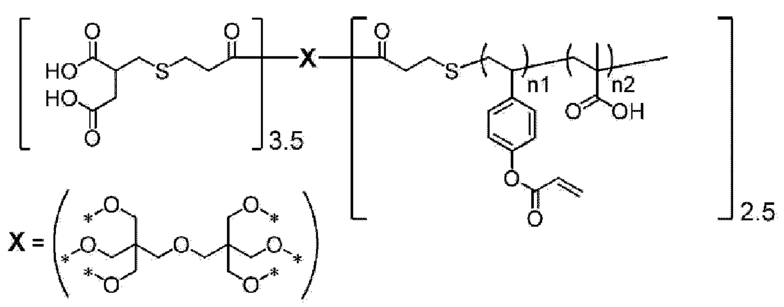

n1/n2 = 20/10 (**D-1**)
14/16 (**D-2**)
28/2 (**D-3**)
5/2 (**D-4**)
45/27 (**D-5**)
186/118 (**D-6**)

(Synthesis Example 40) Synthesis of resin D-7

-Synthesis of compound C-3-

A compound C-3 was synthesized in the same manner as the compound C-2, except that, in the synthesis of the compound C-2, 6-bromohexanoyl chloride was used instead of 2-bromopropionyl chloride.

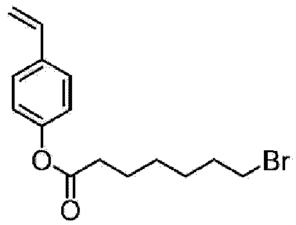

C-3

-Synthesis of resin D-7-

A resin D-7 having the following structure (weight-average molecular weight: $1.4 \times 10^4$, acid value: 158.0 mgKOH/g, C=C value: 0.28 mmol/g) was synthesized in the same manner as in Synthesis Example 34, except that, in Synthesis Example 34, the compound C-3 was used instead of the compound C-2. In the following structural formulae, the subscript number is the number of repeating units.

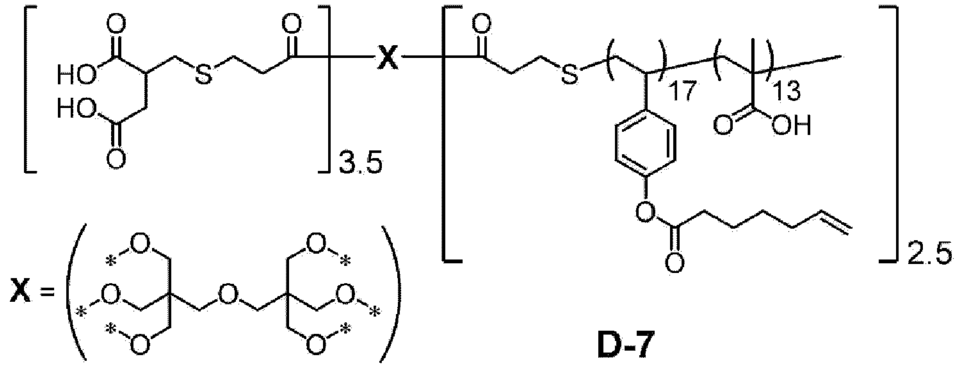

D-7

(Synthesis Example 41) Synthesis of resin D-8

A resin D-8 having the following structure (weight-average molecular weight: $1.3 \times 10^4$, acid value: 158.0 mgKOH/g, C=C value: 0.23 mmol/g) was synthesized in the same manner as in Synthesis Example 34, except that, in Synthesis Example 34, PVBA was used instead of methacrylic acid. In the following structural formulae, the subscript number is the number of repeating units.

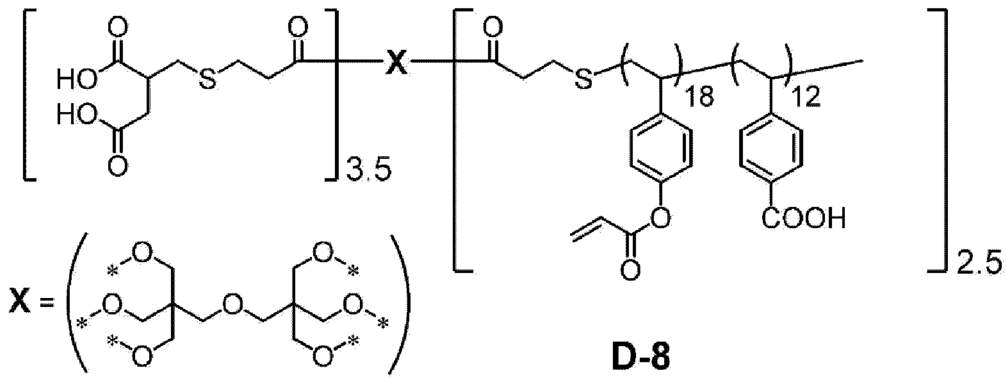

D-8

(Synthesis Example 42) Synthesis of resin D-9

A resin D-9 having the following structure (weight-average molecular weight: $1.2 \times 10^4$, acid value: 158.0 mgKOH/g, C=C value: 0.26 mmol/g) was synthesized in the same manner as in Synthesis Example 34, except that, in Synthesis Example 34, NK ESTER CB-1 (manufactured by Shin-Nakamura Chemical Co., Ltd.) was used instead of itaconic acid. In the following structural formulae, the subscript number is the number of repeating units.

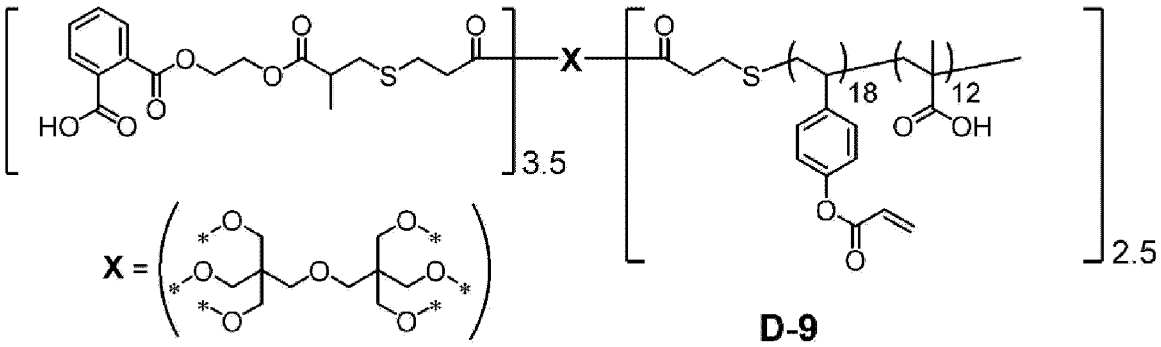

**D-9**

(Synthesis Example 43) Synthesis of resin D-10

A block polymer was synthesized using a compound which derived each component so that the compound had a formulation (type and content of the constitutional component) shown in the following chemical formula, according to Example 1 described in paragraphs 0101 and 0102 of JP2011-054439A. The synthesized block polymer was dissolved in PGMEA to prepare a resin D-10 (polymer concentration: 35% by mass) having the following structure (weight-average molecular weight: $1.2 \times 10^4$, acid value: 158.0 mgKOH/g, C=C value: 0.5 mmol/g). The resin D-10 was a block polymer in which two units on the left side and two units on the right side of b in the formula formed one block. In the following structural formula, the numerical value added to the main chain is a mass ratio.

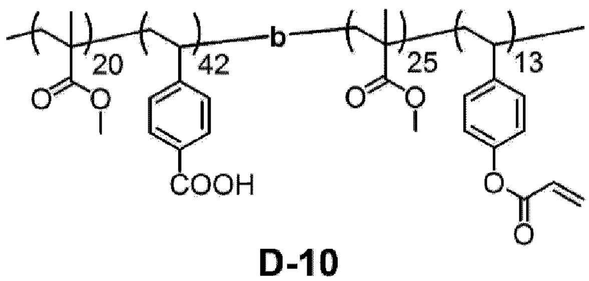

**D-10**

(Synthesis Example 44) Synthesis of resin D-11

A resin D-11 having the following structure (weight-average molecular weight: $1.2 \times 10^4$, acid value: 158.0 mgKOH/g, C=C value: 0.5 mmol/g) was synthesized in the same manner as in Synthesis Example 30, except that, in Synthesis Example 30, butyl methyl methacrylate was used instead of benzyl methyl methacrylate and methyl methacrylate, and glycidyl methacrylate was used instead of 4HBAGE. In the following structural formula, the numerical value added to the main chain is a mass ratio.

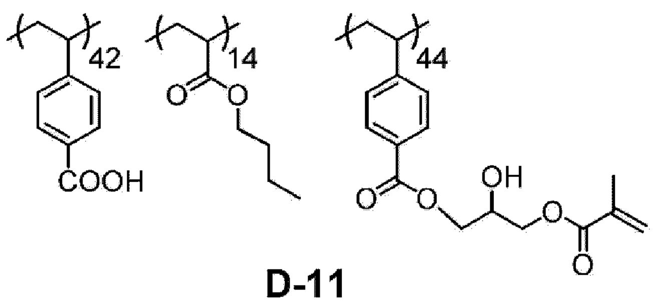

**D-11**

(Synthesis Example 45) Synthesis of resin d-1

A resin d-1 having the following structure (weight-average molecular weight: $1.2 \times 10^4$, acid value: 158.0 mgKOH/g) was synthesized in the same manner as in Synthesis Example 34, except that, in Synthesis Example 34, methyl methacrylate was used instead of the compound C-2. In the following structural formulae, the subscript number is the number of repeating units.

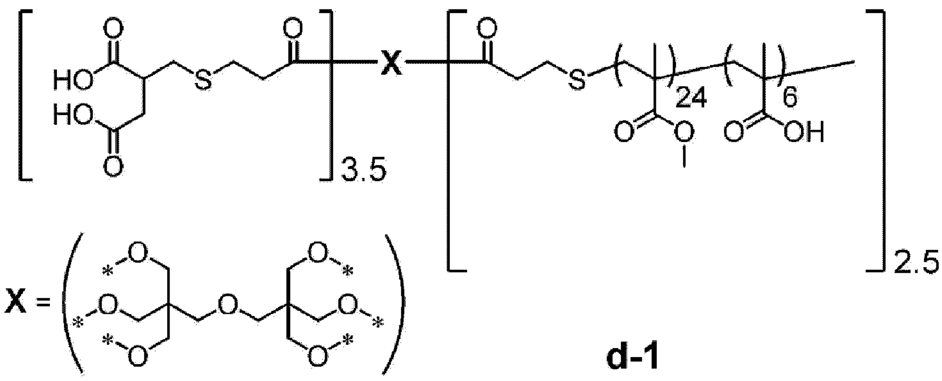

d-1

(Synthesis Example 46) Synthesis of resin d-2

A resin d-2 having the following structure (weight-average molecular weight: $1.2 \times 10^4$, acid value: 158.0 mgKOH/g) was synthesized in the same manner as in Synthesis Example 33, except that, in Synthesis Example 33, the type of the raw material was changed to methacrylic acid and lauryl methacrylate, and a proportion thereof was changed. In the following structural formula, the numerical value added to the main chain is a mass ratio.

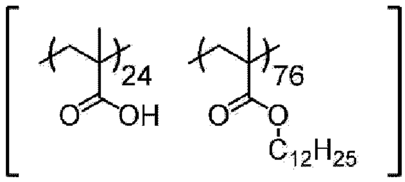

d-2

(Synthesis Example 47) Synthesis of resin T-1

A resin T-1 having the following structure (weight-average molecular weight: $2.8 \times 10^4$, acid value: 70.0 mg-KOH/g, C=C value: 0.5 mmol/g) was synthesized in the same manner as in Synthesis Example 33, except that, in Synthesis Example 33, the type of the raw material was changed to methacrylic acid and glycidyl methacrylate, and a proportion thereof was changed. In the following structural formula, the numerical value added to the main chain is a mass ratio.

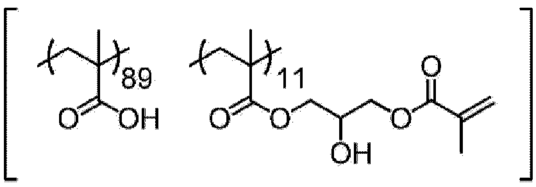

T-1

The weight-average molecular weights, acid values, and ethylenically unsaturated bond-containing group values (C=C values) of the obtained resins are shown in the following tables.

[Table 1]

| Type of polymer | Weight-average molecular weight | Acid value (mgKOH/g) | C=C value (mmol/g) |
|---|---|---|---|
| B-1 | 28000 | 70 | 0.05 |
| B-2 | 28000 | 70 | 2.1 |
| B-3 | 28000 | 70 | 0.2 |

(continued)

| Type of polymer | Weight-average molecular weight | Acid value (mgKOH/g) | C=C value (mmol/g) |
|---|---|---|---|
| B-4 | 28000 | 70 | 1.8 |
| B-5 | 28000 | 70 | 0.5 |
| B-6 | 9000 | 70 | 0.5 |
| B-7 | 15000 | 70 | 0.5 |
| B-8 | 60000 | 70 | 0.5 |
| B-9 | 100000 | 70 | 0.5 |
| B-10 | 28000 | 15 | 0.5 |
| B-11 | 28000 | 120 | 0.5 |
| B-12 | 28000 | 70 | 0.5 |
| B-13 | 28000 | 70 | 0.35 |
| B-14 | 28000 | 70 | 0.5 |
| B-15 | 28000 | 70 | 0.5 |
| B-16 | 28000 | 70 | 0.5 |
| B-17 | 28000 | 70 | 0.5 |
| B-18 | 28000 | 70 | 0.5 |
| B-19 | 27000 | 70 | 0.5 |
| B-20 | 27000 | 70 | 0.5 |
| B-21 | 28000 | 70 | 0.5 |
| B-22 | 28000 | 70 | 0.5 |
| B-23 | 28000 | 70 | 0.5 |
| B-24 | 28000 | 70 | 0.5 |
| B-25 | 28000 | 70 | 0.5 |
| B-26 | 28000 | 70 | 0.5 |
| B-27 | 28000 | 70 | 0.5 |
| B-28 | 28000 | 70 | 0.5 |
| B-29 | 28000 | 70 | 0.5 |
| B-30 | 28000 | 70 | 0.5 |
| B-31 | 28000 | 70 | 0.5 |
| B-32 | 28000 | 70 | 0.5 |
| b-1 | 28000 | 70 | 0.5 |
| T-1 | 28000 | 70 | 0.5 |

[Table 2]

| Type of polymer | Weight-average molecular weight | Acid value (mgKOH/g) | C=C value (mmol/g) |
|---|---|---|---|
| D-1 | 12000 | 155 | 0.28 |
| D-2 | 11000 | 210 | 0.23 |
| D-3 | 14000 | 100 | 0.35 |

(continued)

| Type of polymer | Weight-average molecular weight | Acid value (mgKOH/g) | C=C value (mmol/g) |
|---|---|---|---|
| D-4 | 4000 | 158 | 0.24 |
| D-5 | 25000 | 158 | 0.29 |
| D-6 | 108000 | 158 | 0.3 |
| D-7 | 14000 | 158 | 0.28 |
| D-8 | 13000 | 158 | 0.23 |
| D-9 | 12000 | 158 | 0.26 |
| D-10 | 12000 | 158 | 0.5 |
| D-11 | 12000 | 158 | 0.5 |
| d-1 | 12000 | 158 | 0 |
| d-2 | 12000 | 158 | 0 |

<Production of dispersion liquid>

By using ULTRA APEX MILL (manufactured by Kotobuki Industries Co., Ltd.) as a circulation type dispersion apparatus (beads mill), a mixed solution having the following composition shown in the following table was dispersed. In this way, a dispersion liquid was produced.

Bead diameter: diameter 0.2 mm
Bead filling rate: 65 volume%
Circumferential speed: 6 m/sec
Pump supply amount: 10.8 kg/hour
Cooling water: tap water
Beads mill circular passage inner volume: 0.15 L
Amount of mixed solution to be dispersed: 0.65 kg

[Table 3]

| | Particles | | Resin (dispersant) | | Solvent | |
|---|---|---|---|---|---|---|
| | Type | Part by mass | Type | Part by mass | Type | Part by mass |
| Dispersion liquid 1 | P-1 | 38.4 | d-1 | 11.6 | S-1 | 50.0 |
| Dispersion liquid 2 | P-2 | 38.4 | d-1 | 11.6 | S-1 | 50.0 |
| Dispersion liquid 3 | P-3 | 38.4 | d-1 | 11.6 | S-1 | 50.0 |
| Dispersion liquid 4 | P-4 | 38.4 | d-1 | 11.6 | S-1 | 50.0 |
| Dispersion liquid 5 | P-5 | 38.4 | d-1 | 11.6 | S-1 | 50.0 |
| Dispersion liquid 6 | P-6 | 38.4 | d-1 | 11.6 | S-1 | 50.0 |
| Dispersion liquid 7 | P-7 | 38.4 | d-1 | 11.6 | S-1 | 50.0 |
| Dispersion liquid 8 | P-3<br>P-4 | 19.2<br>19.2 | d-1 | 11.6 | S-1 | 50.0 |
| Dispersion liquid 9 | P-4 | 38.4 | D-1 | 11.6 | S-1 | 50.0 |
| Dispersion liquid 10 | P-4 | 38.4 | D-2 | 11.6 | S-1 | 50.0 |
| Dispersion liquid 11 | P-4 | 38.4 | D-3 | 11.6 | S-1 | 50.0 |
| Dispersion liquid 12 | P-4 | 38.4 | D-4 | 11.6 | S-1 | 50.0 |
| Dispersion liquid 13 | P-4 | 38.4 | D-5 | 11.6 | S-1 | 50.0 |

(continued)

| | Particles | | Resin (dispersant) | | Solvent | |
|---|---|---|---|---|---|---|
| | Type | Part by mass | Type | Part by mass | Type | Part by mass |
| Dispersion liquid 14 | P-4 | 38.4 | D-6 | 11.6 | S-1 | 50.0 |
| Dispersion liquid 15 | P-4 | 38.4 | D-7 | 11.6 | S-1 | 50.0 |
| Dispersion liquid 16 | P-4 | 38.4 | D-8 | 11.6 | S-1 | 50.0 |
| Dispersion liquid 17 | P-4 | 38.4 | D-9 | 11.6 | S-1 | 50.0 |
| Dispersion liquid 18 | P-4 | 38.4 | D-10 | 11.6 | S-1 | 50.0 |
| Dispersion liquid 19 | P-4 | 38.4 | D-11 | 11.6 | S-1 | 50.0 |
| Dispersion liquid 20 | P-4 | 38.4 | d-2 | 11.6 | S-1 | 50.0 |
| Dispersion liquid 21 | P-1 | 38.4 | d-1 | 11.6 | S-2 | 50.0 |
| Dispersion liquid 22 | P-1 | 38.4 | d-1 | 11.6 | S-3 | 50.0 |

The raw materials shown above in the table are as follows.

(Particles)

P-1 to P-7: particles shown in the following table

[Table 4]

| Particles | Name (manufacturer) | Type | Specific gravity [g/cm$^3$] | Refractive index | Average primary particle diameter [nm] |
|---|---|---|---|---|---|
| P-1 | TTO-51 (manufactured by ISHIHARA SANGYO KAISHA, LTD.) | Titanium oxide particles | 4.1 | 2.71 | 20 |
| P-2 | TTO-80A (manufactured by ISHIHARA SANGYO KAISHA, LTD.) | Titanium oxide particles | 4.1 | 2.71 | 60 |
| P-3 | MPT-136 (manufactured by ISHIHARA SANGYO KAISHA, LTD.) | Titanium oxide particles | 4.1 | 2.71 | 80 |
| P-4 | MPT-141 (manufactured by ISHIHARA SANGYO KAISHA, LTD.) | Titanium oxide particles | 4.1 | 2.71 | 91 |
| P-5 | Zirconeo-Cp (manufactured by ITEC Co., Ltd.) | Zirconium oxide particles | 5.7 | 2.11 | 10 |
| P-6 | CR-90-2 (manufactured by ISHIHARA SANGYO KAISHA, LTD.) | Titanium oxide particles | 4.1 | 2.71 | 250 |
| P-7 | Aluminum oxide nanoparticles (manufactured by EM Japan) | Aluminum oxide particles | 4.0 | 1.77 | 80 |

(Resin (dispersant))

D-1 to D-11, d-1, d-2: resins D-1 to D-11, d-1, and d-2 described above

(Solvent)

S-1: propylene glycol monomethyl ether acetate (PGMEA)

S-2: propylene glycol monomethyl ether (PGME)

S-3: cyclopentanone

<Preparation of composition>

Raw materials shown in the following tables were mixed with each other to prepare a composition.

[Table 5]

| | Dispersion liquid | | Resin (binder) | | Polymerizable monomer | | Photopolymerization initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 1 | Dispersion liquid 1 | 52 | B-5 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 2 | Dispersion liquid 2 | 52 | B-5 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 3 | Dispersion liquid 3 | 52 | B-5 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 4 | Dispersion liquid 4 | 52 | B-5 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 5 | Dispersion liquid 5 | 52 | B-5 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 6 | Dispersion liquid 8 | 52 | B-5 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 7 | Dispersion liquid 4 | 52 | B-5 | 8.96 | M-1 | 9.58 | I-3 | 2.70 | A-1<br>A-3 | 0.25<br>2.50 | Su-1 | 0.008 | In-1 | 0.005 | S-1 | 24 |
| Example 8 | Dispersion liquid 4 | 52 | B-5 | 8.96 | M-3 | 9.58 | I-3 | 2.70 | A-1<br>A-3 | 0.25<br>2.50 | Su-1 | 0.008 | In-1 | 0.005 | S-1 | 24 |
| Example 9 | Dispersion liquid 4 | 52 | B-5 | 8.96 | M-4 | 9.58 | I-3 | 2.70 | A-1<br>A-3 | 0.25<br>2.50 | Su-1 | 0.008 | In-1 | 0.005 | S-1 | 24 |
| Example 10 | Dispersion liquid 4 | 52 | B-5 | 8.96 | M-2 | 9.58 | I-1 | 2.70 | A-1<br>A-3 | 0.25<br>2.50 | Su-1 | 0.008 | In-1 | 0.005 | S-1 | 24 |
| Example 11 | Dispersion liquid 4 | 52 | B-5 | 8.96 | M-2 | 9.58 | I-2 | 2.70 | A-1<br>A-3 | 0.25<br>2.50 | Su-1 | 0.008 | In-1 | 0.005 | S-1 | 24 |
| Example 12 | Dispersion liquid 4 | 52 | B-5 | 8.96 | M-2 | 9.58 | I-3 | 2.70 | A-2<br>A-3 | 0.25<br>2.50 | Su-1 | 0.008 | In-1 | 0.005 | S-1 | 24 |
| Example 13 | Dispersion liquid 4 | 52 | B-5 | 8.96 | M-2 | 9.58 | I-3 | 2.70 | A-1<br>A-3 | 0.25<br>2.50 | Su-1 | 0.008 | In-2 | 0.005 | S-1 | 24 |

(continued)

| | Dispersion liquid | | Resin (binder) | | Polymerizable monomer | | Photopolymerization initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 14 | Dispersion liquid 4 | 52 | B-5 | 8.96 | M-2 | 9.58 | I-3 | 2.70 | A-1<br>A-3 | 0.25<br>2.50 | Su-1 | 0.008 | In-1 | 0.005 | S-2 | 24 |
| Example 15 | Dispersion liquid 4 | 52 | B-5 | 8.96 | M-2 | 9.58 | I-3 | 2.70 | A-1<br>A-3 | 0.25<br>2.50 | Su-1 | 0.008 | In-1 | 0.005 | S-3 | 24 |

[Table 6]

| | Dispersion liquid | | Resin (binder) | | Polymerizable monomer | | Photopolymerization initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 16 | Dispersion liquid 9 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 17 | Dispersion liquid 10 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 18 | Dispersion liquid 11 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 19 | Dispersion liquid 12 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 20 | Dispersion liquid 13 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 21 | Dispersion liquid 14 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 22 | Dispersion liquid 15 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 23 | Dispersion liquid 16 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 24 | Dispersion liquid 17 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 25 | Dispersion liquid 18 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 26 | Dispersion liquid 19 | 52 | b-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 27 | Dispersion liquid 4 | 52 | B-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 28 | Dispersion liquid 4 | 52 | B-2 | 8.96 | M-2 | 9.58 | I-3 | 2.70 | A-1<br>A-3 | 0.25<br>2.50 | Su-1 | 0.008 | In-1 | 0.005 | S-1 | 24 |

(continued)

| | Dispersion liquid | | Resin (binder) | | Polymerizable monomer | | Photopolymerization initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 29 | Dispersion liquid 4 | 52 | B-3 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 30 | Dispersion liquid 4 | 52 | B-4 | 8.96 | M-2 | 9.58 | I-3 | 2.70 | A-1<br>A-3 | 0.25<br>2.50 | Su-1 | 0.008 | In-1 | 0.005 | S-1 | 24 |

[Table 7]

| | Dispersion liquid | | Resin (binder) | | Polymerizable monomer | | Photopolymerization initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 31 | Dispersion liquid 4 | 52 | B-6 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 32 | Dispersion liquid 4 | 52 | B-7 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 33 | Dispersion liquid 4 | 52 | B-8 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 34 | Dispersion liquid 4 | 52 | B-9 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 35 | Dispersion liquid 4 | 52 | B-10 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 36 | Dispersion liquid 4 | 52 | B-11 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 37 | Dispersion liquid 4 | 52 | B-12 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 38 | Dispersion liquid 4 | 52 | B-13 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 39 | Dispersion liquid 4 | 52 | B-14 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 40 | Dispersion liquid 4 | 52 | B-15 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 41 | Dispersion liquid 4 | 52 | B-16 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 42 | Dispersion liquid 4 | 52 | B-17 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 43 | Dispersion liquid 4 | 52 | B-18 | 8.96 | M-2 | 9.58 | I-3 | 2.70 | A-1<br>A-3 | 0.25<br>2.50 | Su-1 | 0.008 | In-1 | 0.005 | S-1 | 24 |

(continued)

| | Dispersion liquid | | Resin (binder) | | Polymerizable monomer | | Photopolymerization initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 44 | Dispersion liquid 4 | 52 | B-19 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 45 | Dispersion liquid 4 | 52 | B-20 | 8.96 | M-2 | 9.58 | I-3 | 2.70 | A-1<br>A-3 | 0.25<br>2.50 | Su-1 | 0.008 | In-1 | 0.005 | S-1 | 24 |

[Table 8]

| | Dispersion liquid | | Resin (binder) | | Polymerizable monomer | | Photopolymerization initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 46 | Dispersion liquid 4 | 52 | B-21 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 47 | Dispersion liquid 4 | 52 | B-22 | 8.96 | M-2 | 9.58 | 1-3 | 2.70 | A-1<br>A-3 | 0.25<br>2.50 | Su-1 | 0.008 | In-1 | 0.005 | S-1 | 24 |
| Example 48 | Dispersion liquid 4 | 52 | B-23 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 49 | Dispersion liquid 4 | 52 | B-24 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 50 | Dispersion liquid 4 | 52 | B-25 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 51 | Dispersion liquid 4 | 52 | B-26 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 52 | Dispersion liquid 4 | 52 | B-27 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 53 | Dispersion liquid 4 | 52 | B-28 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 54 | Dispersion liquid 4 | 52 | B-29 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 55 | Dispersion liquid 4 | 52 | B-30 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 56 | Dispersion liquid 4 | 52 | B-31 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 57 | Dispersion liquid 20 | 52 | B-5 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 58 | Dispersion liquid 21 | 52 | B-5 | 8.96 | M-2 | 9.58 | 1-3 | 2.70 | A-1<br>A-3 | 0.25<br>2.50 | Su-1 | 0.008 | In-1 | 0.005 | S-1 | 24 |

(continued)

| | Dispersion liquid | | Resin (binder) | | Polymerizable monomer | | Photopolymerization initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 59 | Dispersion liquid 22 | 52 | B-5 | 8.96 | M-2 | 9.58 | 1-3 | 2.70 | A-1<br>A-3 | 0.25<br>2.50 | Su-1 | 0.008 | In-1 | 0.005 | S-1 | 24 |
| Example 60 | Dispersion liquid 9 | 52 | B-5 | 8.96 | M-2 | 9.58 | 1-3 | 2.70 | A-1<br>A-3 | 0.25<br>2.50 | Su-1 | 0.008 | In-1 | 0.005 | S-1 | 24 |

[Table 9]

| | Dispersion liquid | | Resin (binder) | | Polymerizable monomer | | Photopolymerization initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 61 | Dispersion liquid 4 | 60 | B-5 | 8.96 | M-2 | 5.58 | I-3 | 2.70 | A-1<br>A-3 | 0.25<br>2.50 | Su-1 | 0.008 | In-1 | 0.005 | S-1 | 20 |
| Example 62 | Dispersion liquid 4 | 52 | B-5 | 15.96 | M-2 | 7.58 | I-3 | 2.70 | A-1<br>A-3 | 0.25<br>2.50 | Su-1 | 0.008 | In-1 | 0.005 | S-1 | 19 |
| Example 63 | Dispersion liquid 4 | 55 | B-5 | 10.96 | M-2 | 7.58 | I-3 | 2.70 | A-1<br>A-3 | 0.25<br>2.50 | Su-1 | 0.008 | In-1 | 0.005 | S-1 | 21 |
| Example 64 | Dispersion liquid 4 | 48 | B-5 | 8.96 | M-2 | 11.58 | I-3 | 2.70 | A-1<br>A-3 | 0.25<br>2.50 | Su-1 | 0.008 | In-1 | 0.005 | S-1 | 26 |
| Example 65 | Dispersion liquid 4 | 52 | B-5 | 5.96 | M-2 | 10.58 | I-3 | 2.70 | A-1<br>A-3 | 0.25<br>2.50 | Su-1 | 0.008 | In-1 | 0.005 | S-1 | 26 |
| Example 66 | Dispersion liquid 4 | 48 | B-5 | 5.96 | M-2 | 12.58 | I-3 | 2.70 | A-1<br>A-3 | 0.25<br>2.50 | Su-1 | 0.008 | In-1 | 0.005 | S-1 | 28 |
| Example 67 | Dispersion liquid 4 | 52 | B-5 | 8.96 | M-2 | 9.58 | 1-4 | 2.70 | A-1<br>A-3 | 0.25<br>2.50 | Su-1 | 0.008 | In-1 | 0.005 | S-1 | 24 |
| Example 68 | Dispersion liquid 4 | 52 | B-5 | 8.96 | M-2 | 9.58 | I-3 | 2.70 | A-1<br>A-3 | 0.25<br>2.50 | Su-2 | 0.008 | In-1 | 0.005 | S-1 | 24 |
| Example 69 | Dispersion liquid 4 | 52 | B-32 | 8.96 | M-2 | 9.58 | I-3 | 2.70 | A-1<br>A-3 | 0.25<br>2.50 | Su-1 | 0.008 | In-1 | 0.005 | S-1 | 24 |
| Example 70 | Dispersion liquid 4 | 52 | B-5 | 8.96 | M-2 | 9.58 | I-3<br>1-4 | 2.56<br>0.14 | A-1<br>A-3 | 0.25<br>2.50 | Su-1 | 0.008 | In-1 | 0.005 | S-1 | 24 |
| Comparative Example 1 | Dispersion liquid 20 | 52 | T-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Comparative Example 2 | Dispersion liquid 6 | 52 | T-1 | 8.96 | M-2 | 9.58 | I-3 | 2.70 | A-1<br>A-3 | 0.25<br>2.50 | Su-1 | 0.008 | In-1 | 0.005 | S-1 | 24 |
| Comparative Example 3 | Dispersion liquid 7 | 52 | T-1 | 8.96 | M-2 | 9.58 | I-3 | 2.70 | A-1<br>A-3 | 0.25<br>2.50 | Su-1 | 0.008 | In-1 | 0.005 | S-1 | 24 |

The raw materials shown above in the table are as follows.

(Dispersion liquid)

Dispersion liquids 1 to 22: dispersion liquids 1 to 22 described above

(Resin (binder resin))

B-1 to B-32, b-1, T-1: resins B-1 to B-32, b-1, and T-1 described above

(Polymerizable Monomer)

M-1: KAYARAD DPHA (manufactured by Nippon Kayaku Co., Ltd., dipentaerythritol hexa(meth)acrylate)
M-2: KAYARAD RP-1040 (manufactured by Nippon Kayaku Co., Ltd., compound having the following structure)

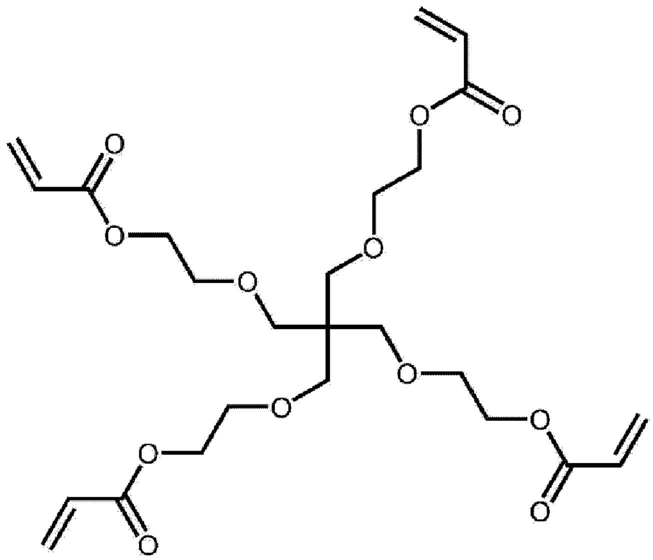

M-3: NK ESTER A-TMMT (manufactured by Shin-Nakamura Chemical Co., Ltd.)
M-4: Light Acrylate DCP-A (manufactured by KYOEISHA CHEMICAL Co., Ltd., dimethyloltricyclodecane diacrylate)

(Photopolymerization initiator)

1-1: Irgacure OXE01 (manufactured by BASF)
1-2: Omnirad 369 (manufactured by IGM Resins B.V)
1-3: Omnirad TPO H (manufactured by IGM Resins B.V.)
1-4: Irgacure OXE03 (manufactured by BASF)

(Additive)

A-1: ADEKA STAB AO-80 (manufactured by Adeka Corporation, anti-coloring agent)
A-2: Irganox 1010 (manufactured by BASF, anti-coloring agent)
A-3: compound having the following structure (silane coupling agent)

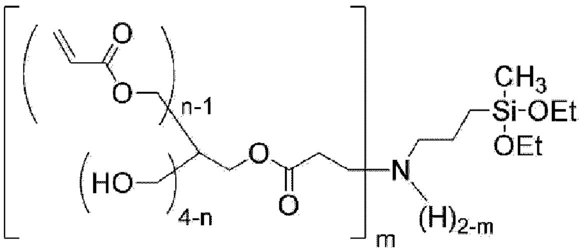

n = 4,3,2
(n=4 main reactant)

m = 2 or 1
(m=2 main product)

(Surfactant)

Su-1: KF-6001 (manufactured by Shin-Etsu Chemical Co., Ltd.; silicone-based surfactant having the following structure)

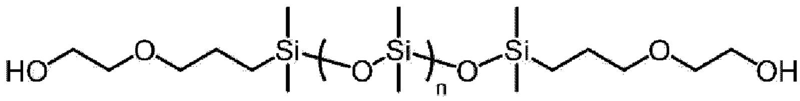

Su-2: SH8400 (manufactured by Dow TORAY; silicone-based surfactant)

(Polymerization inhibitor)

In-1: p-methoxyphenol
In-2: 1,4-benzoquinone

(Solvent)

S-1: propylene glycol monomethyl ether acetate (PGMEA)
S-2: propylene glycol monomethyl ether (PGME)
S-3: cyclopentanone

<Evaluation of curing properties>

Each of the compositions was applied to an 8-inch (= 203.2 mm) glass wafer with an undercoat layer (manufactured by Fujifilm Electronic Materials Co., Ltd., CT-4000L, thickness: 0.1 μm) using a spin coater such that the thickness after post-baking was 8 μm. The coating film was heat-treated (pre-baked) using a hot plate at 120°C for 2 minutes.

Next, using an i-ray stepper exposure device FPA-3000 i5+ (manufactured by Canon Inc.), the coating film was exposed by irradiating the coating film with light having a wavelength of 365 nm through a mask with a 300 μm square opening portion at an exposure amount of 1700 mJ/cm$^2$. The glass wafer with the film after exposure was placed on a horizontal rotary table of a spin-shower developing machine (DW-30 Type, manufactured by Chemitronics Co., Ltd.), and subjected to a puddle development at 23°C for 60 seconds using an alkali developer (CD-2060, manufactured by Fujifilm Electronic Materials Co., Ltd.). Next, the glass wafer after the puddle development was fixed on the horizontal rotary table by a vacuum chuck method, a rinse treatment (23 seconds × 2 times) was performed by supplying pure water from above a rotation center in shower-like from an ejection nozzle while rotating the glass wafer at a rotation speed of 50 rpm by a rotating device, and then the glass wafer was spin-dried. Next, a heating treatment (post-baking) was performed for 5 minutes using a hot plate at 220°C to form a colored pattern (pattern size: 300 μm).

The obtained pattern was evaluated for undercut and tape peeling resistance to evaluate curing properties.

(Undercut)

The pattern (film) formed on the glass wafer was imaged with an optical microscope, and a region where the pattern (film) was in close contact with the glass wafer was specified from a shade of color to calculate an area S2 of the region where the pattern (film) was in close contact with the glass wafer.
An area ratio Y (= S2/S1) of the area S2 of the region where the pattern was in close contact with the glass wafer to an area S1 (= 300 μm × 300 μm) of the pattern was calculated, and an average value × of undercut lengths was calculated by the following expression.

$$\text{Area ratio Y} = (300 - 2x)^2/(300 \times 300)$$

-Evaluation standard-

5: average value of undercut lengths was less than 5 μm.
4: average value of undercut lengths was 5 μm or more and less than 10 μm.
3: average value of undercut lengths was 10 μm or more and less than 15 μm.
2: average value of undercut lengths was 15 μm or more and less than 20 μm.
1: average value of undercut lengths was 20 μm or more.

(Tape peeling resistance)

An ultraviolet curable tape (D-510TT, manufactured by LINTEC Corporation) was attached to a surface of the pattern formed on the glass wafer, the ultraviolet curable tape was cured by irradiation with light at an exposure amount of 1000 mJ/cm$^2$ using an exposure machine (Portable Cure 100, manufactured by SEN LIGHTS Co., Ltd.), and then the tape was peeled off from the surface of the pattern to perform tape peeling resistance.
A pattern peeling rate was calculated from the number of patterns on the glass wafer before and after the tape peeling resistance test, and the tape peeling resistance was evaluated based on the following standard.

$$\text{Pattern peeling rate} = ((A1 - A2)/A1) \times 100$$

A1: number of patterns formed on the glass wafer before the tape peeling resistance test
A2: number of patterns formed on the glass wafer after the tape peeling resistance test

-Evaluation standard-

5: pattern peeling rate was less than 10%.
4: pattern peeling rate was 10% or more and less than 20%.
3: pattern peeling rate was 20% or more and less than 30%.
2: pattern peeling rate was 30% or more and less than 40%.
1: pattern peeling rate was 40% or more.

<Evaluation of light scattering properties>

Each of the compositions was applied to an 8-inch (= 203.2 mm) glass wafer with an undercoat layer (manufactured by Fujifilm Electronic Materials Co., Ltd., CT-4000L, thickness: 0.1 μm) using a spin coater such that the thickness after post-baking was 8 μm. The coating film was heat-treated (pre-baked) using a hot plate at 120°C for 2 minutes. Next, using an i-ray stepper exposure device FPA-3000 i5+ (manufactured by Canon Corporation), the coating film was exposed to light having a wavelength of 365 nm at an exposure amount of 1000 mJ/cm$^2$. Thereafter, a heating treatment (post-baking) was performed for 5 minutes used a hot plate at 220°C to form a film having a thickness of 8 μm.
A transmittance of the obtained film to light in a wavelength range of 400 to 1000 nm was measured using a spectrophotometer (U-4100, manufactured by manufactured by Hitachi High-Tech Corporation), and the maximum value ($T_{max}$) of the transmittance in the range and an absolute value (transmittance difference ΔT) of a difference between a

transmittance ($T_{940}$) to light having a wavelength of 940 nm and a transmittance ($T_{450}$) to light having a wavelength of 450 nm were calculated.

$$\text{Transmittance difference } \Delta T = |T_{940} - T_{450}|$$

-Evaluation standard for transmittance difference ΔT

5: transmittance difference ΔT was less than 15%.
4: transmittance difference ΔT was 15% or more and less than 25%.
3: transmittance difference ΔT was 25% or more and less than 30%.
2: transmittance difference ΔT was 30% or more and less than 35%.
1: transmittance difference ΔT was 35% or more.

-Evaluation standard for maximum value $T_{max}$ of transmittance-

5: maximum value $T_{max}$ of the transmittance was 60% or less.
4: maximum value $T_{max}$ of the transmittance was more than 60% and 70% or less.
3: maximum value $T_{max}$ of the transmittance was more than 70% and 75% or less.
2: maximum value $T_{max}$ of the transmittance was more than 75% and 80% or less.
1: maximum value $T_{max}$ of the transmittance was more than 80%.

<Evaluation of heat resistance>

The film produced above was heated at 265°C for 5 minutes. The transmittance of the film after heating was measured, the maximum value of variation of transmittance was determined, and then the heat resistance was evaluated based on the following standard. In addition, the measurement of transmittance was performed 5 times for each sample, and the average value of the 3 times result except the maximum value and the minimum value was adopted. In addition, the maximum value of the variation of transmittance means a variation of transmittance of the film in a wavelength which has the largest variation of transmittance in a range of 400 to 1000 nm before and after heating.

(Evaluation standard)

5: maximum value of variation of transmittance was 1% or less.
4: maximum value of variation of transmittance was more than 1% and 2% or less.
3: maximum value of variation of transmittance was more than 2% and 4% or less.
2: maximum value of variation of transmittance was more than 4% and 5% or less.
1: maximum value of variation of transmittance was more than 5%.

[Table 10]

| | Curing properties | | Light scattering properties | | Heat resistance |
|---|---|---|---|---|---|
| | Undercut | Tape peeling resistance | Maximum value of transmittance $T_{max}$ | Transmittance difference ΔT | |
| Example 1 | 3 | 3 | 3 | 3 | 4 |
| Example 2 | 4 | 4 | 5 | 5 | 4 |
| Example 3 | 4 | 4 | 5 | 5 | 4 |
| Example 4 | 4 | 4 | 5 | 5 | 4 |

(continued)

| | Curing properties | | Light scattering properties | | Heat resistance |
|---|---|---|---|---|---|
| | Undercut | Tape peeling resistance | Maximum value of transmittance $T_{max}$ | Transmittance difference $\Delta T$ | |
| Example 5 | 3 | 3 | 2 | 2 | 4 |
| Example 6 | 4 | 4 | 5 | 5 | 4 |
| Example 7 | 4 | 4 | 5 | 5 | 4 |
| Example 8 | 4 | 4 | 5 | 5 | 4 |
| Example 9 | 3 | 3 | 5 | 5 | 4 |
| Example 10 | 4 | 4 | 5 | 5 | 4 |
| Example 11 | 4 | 4 | 5 | 5 | 4 |
| Example 12 | 4 | 4 | 5 | 5 | 4 |
| Example 13 | 4 | 4 | 5 | 5 | 4 |
| Example 14 | 4 | 4 | 5 | 5 | 4 |
| Example 15 | 4 | 4 | 5 | 5 | 4 |
| Example 16 | 4 | 4 | 5 | 5 | 4 |
| Example 17 | 3 | 4 | 4 | 4 | 4 |
| Example 18 | 5 | 5 | 4 | 4 | 4 |
| Example 19 | 3 | 3 | 4 | 4 | 4 |
| Example 20 | 4 | 4 | 5 | 5 | 4 |
| Example 21 | 4 | 4 | 4 | 4 | 4 |
| Example 22 | 2 | 2 | 5 | 5 | 4 |
| Example 23 | 4 | 4 | 5 | 5 | 5 |
| Example 24 | 4 | 4 | 5 | 5 | 4 |
| Example 25 | 4 | 4 | 2 | 2 | 4 |
| Example 26 | 4 | 4 | 2 | 2 | 4 |
| Example 27 | 3 | 3 | 5 | 5 | 4 |
| Example 28 | 4 | 3 | 5 | 5 | 3 |
| Example 29 | 4 | 4 | 5 | 5 | 4 |
| Example 30 | 4 | 4 | 5 | 5 | 4 |
| Example 31 | 3 | 3 | 4 | 4 | 4 |
| Example 32 | 4 | 4 | 5 | 5 | 4 |
| Example 33 | 4 | 4 | 5 | 5 | 4 |
| Example 34 | 4 | 4 | 4 | 4 | 4 |
| Example 35 | 5 | 5 | 3 | 3 | 4 |

[Table 11]

| | Curing properties | | Light scattering properties | | Heat resistance |
|---|---|---|---|---|---|
| | Undercut | Tape peeling resistance | Maximum value of transmittance $T_{max}$ | Transmittance difference $\Delta T$ | |
| Example 36 | 3 | 3 | 4 | 4 | 4 |
| Example 37 | 3 | 3 | 5 | 5 | 4 |
| Example 38 | 4 | 4 | 5 | 5 | 4 |
| Example 39 | 4 | 4 | 5 | 5 | 4 |
| Example 40 | 4 | 4 | 5 | 5 | 4 |
| Example 41 | 4 | 4 | 5 | 5 | 4 |
| Example 42 | 4 | 4 | 5 | 5 | 4 |
| Example 43 | 4 | 4 | 5 | 5 | 4 |
| Example 44 | 4 | 4 | 5 | 5 | 4 |
| Example 45 | 3 | 3 | 5 | 5 | 4 |
| Example 46 | 2 | 2 | 5 | 5 | 4 |
| Example 47 | 2 | 3 | 5 | 5 | 4 |
| Example 48 | 2 | 3 | 5 | 5 | 4 |
| Example 49 | 2 | 3 | 5 | 5 | 4 |
| Example 50 | 2 | 3 | 5 | 5 | 4 |
| Example 51 | 5 | 5 | 5 | 5 | 4 |
| Example 52 | 4 | 4 | 5 | 5 | 4 |
| Example 53 | 4 | 4 | 5 | 5 | 4 |
| Example 54 | 3 | 3 | 4 | 4 | 3 |
| Example 55 | 4 | 4 | 3 | 3 | 4 |
| Example 56 | 4 | 4 | 4 | 4 | 4 |
| Example 57 | 4 | 4 | 2 | 2 | 4 |
| Example 58 | 4 | 4 | 5 | 5 | 4 |
| Example 59 | 4 | 4 | 5 | 5 | 4 |
| Example 60 | 5 | 5 | 5 | 5 | 5 |
| Example 61 | 3 | 3 | 4 | 4 | 4 |
| Example 62 | 4 | 4 | 3 | 3 | 4 |
| Example 63 | 4 | 4 | 5 | 5 | 4 |
| Example 64 | 4 | 4 | 2 | 2 | 4 |
| Example 65 | 4 | 4 | 4 | 4 | 4 |
| Example 66 | 4 | 4 | 3 | 3 | 4 |
| Example 67 | 4 | 4 | 5 | 5 | 4 |
| Example 68 | 4 | 4 | 5 | 5 | 4 |
| Example 69 | 2 | 3 | 5 | 5 | 4 |
| Example 70 | 4 | 4 | 5 | 5 | 4 |

(continued)

| | Curing properties | | Light scattering properties | | Heat resistance |
|---|---|---|---|---|---|
| | Undercut | Tape peeling resistance | Maximum value of transmittance $T_{max}$ | Transmittance difference $\Delta T$ | |
| Comparative Example 1 | 1 | 1 | 2 | 2 | 1 |
| Comparative Example 2 | 1 | 1 | 1 | 1 | 1 |
| Comparative Example 3 | 1 | 1 | 1 | 1 | 1 |

As shown in the above tables, the compositions of Examples were evaluated as good in undercut and tape peeling resistance, and were excellent in curing properties. In addition, the films formed of the compositions of Examples had excellent light scattering properties. In addition, the films formed of the compositions of Examples also had excellent heat resistance.

Each of the compositions of Examples 1 to 70 was applied to an 8-inch (= 203.2 mm) glass wafer with an undercoat layer (manufactured by Fujifilm Electronic Materials Co., Ltd., CT-4000L, thickness: 0.1 μm) using a spin coater such that the thickness after post-baking was 8 μm. The coating film was heat-treated (pre-baked) using a hot plate at 120°C for 2 minutes. Next, using an i-ray stepper exposure device FPA-3000 i5+ (manufactured by Canon Corporation), the coating film was exposed to light having a wavelength of 365 nm at an exposure amount of 1000 $mJ/cm^2$. Thereafter, a heating treatment (post-baking) was performed for 5 minutes used a hot plate at 220°C to form a film having a thickness of 8 μm. Using a scanning electron microscope (SEM) (S-4800H, manufactured by Hitachi High-Tech Corporation), a cross section of the obtained film in a thickness direction was observed (magnification: 10000 times), and the uneven distribution state of the particles was confirmed to check whether a phase-separated state was formed.

In all of the obtained films, the phase-separated structure including the first phase containing particles and the second phase having a lower content of the particles than the first phase was formed in the film.

Explanation of References

1, 2: optical sensor
101: photoelectric conversion element
111 to 114: pixels
110: optical filter
121, 122: film
130: transparent support

## Claims

**1.** A composition comprising:

particles having a refractive index of 2.0 or more and an average primary particle diameter of 200 nm or less;
a film-forming component; and
a solvent,
wherein the film-forming component includes two or more kinds of resins, or includes one or more kinds of resins and one or more kinds of polymerizable monomers, and
at least one kind of the resins includes a resin a having a partial structure represented by Formula (1),

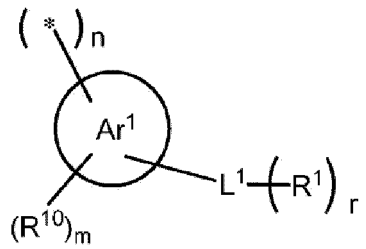

(1)

in Formula (1), $Ar^1$ represents an aromatic ring, $L^1$ represents a single bond or an (r+1)-valent linking group, $R^1$ represents an ethylenically unsaturated bond-containing group, $R^{10}$ represents a substituent, * represents a bonding site, n represents 1 or 2, m represents 0 or an integer of 1 or more, and r represents an integer of 1 or more,
provided that in a case where m is 2 or more, m pieces of $R^{10}$'s may be the same or different from each other, and in a case where r is 2 or more, r pieces of $R^1$'s may be the same or different from each other.

**2.** The composition according to claim 1,
wherein an ethylenically unsaturated bond-containing group value of the resin a is 0.1 to 2.0 mmol/g.

**3.** The composition according to claim 1 or 2,

wherein the film-forming component includes a resin as a dispersant of the particles and a resin as a binder, and at least one selected from the resin as a dispersant of the particles or the resin as a binder is the resin a.

**4.** The composition according to claim 3,
wherein the film-forming component includes 40 to 250 parts by mass of the resin as a binder with respect to 100 parts by mass of the resin as a dispersant of the particles.

**5.** The composition according to claim 1 or 2,

wherein the film-forming component includes a resin having a structure in which a plurality of polymer chains are bonded to a tri- or higher valent linking group and a resin having a repeating unit having a graft chain, and at least one selected from the resin having a structure in which a plurality of polymer chains are bonded to a tri- or higher valent linking group or the resin having a repeating unit having a graft chain is the resin a.

**6.** The composition according to claim 5,
wherein the graft chain includes a polyester structural repeating unit.

**7.** The composition according to claim 1 or 2,

wherein the resin a is a resin including at least one repeating unit selected from a repeating unit represented by Formula (1-1) or a repeating unit represented by Formula (1-2),

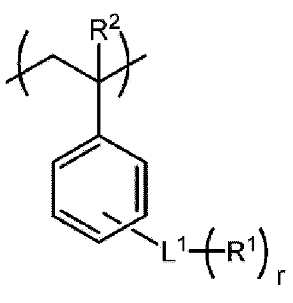

(1-1)

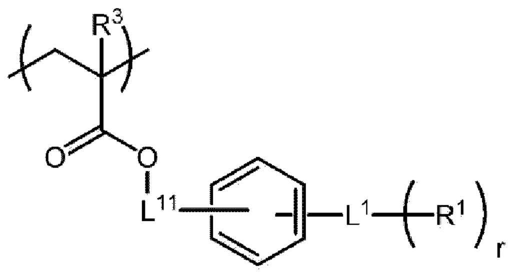

(1-2)

in the formulae, $L^1$ represents a single bond or an (r+1)-valent linking group,
$R^1$ represents an ethylenically unsaturated bond-containing group,
$R^2$ and $R^3$ each independently represent a hydrogen atom or an alkyl group,
$L^{11}$ represents a single bond or a divalent linking group, and
r represents an integer of 1 or more,
provided that in a case where r is 2 or more, r pieces of $R^1$'s may be the same or different from each other.

**8.** The composition according to claim 1 or 2,
wherein a weight-average molecular weight of the resin a is 8,000 to 120,000.

**9.** The composition according to claim 1 or 2,
wherein an acid value of the resin a is 20 to 200 mgKOH/g.

**10.** The composition according to claim 1 or 2,
wherein, in a case where a film having a thickness of 8 μm is formed by heating the composition at 200°C for 5 minutes, a phase-separated structure of a first phase containing the particles and a second phase having a lower content of the particles than the first phase is formed in the film.

**11.** The composition according to claim 10,
wherein the phase-separated structure is a sea-island structure or a co-continuous phase structure.

**12.** The composition according to claim 1 or 2,
wherein the average primary particle diameter of the particles is 100 nm or less.

**13.** The composition according to claim 1 or 2,
wherein the particles are inorganic particles.

**14.** The composition according to claim 13,
wherein the inorganic particles include at least one selected from titanium oxide particles, strontium titanate particles, barium titanate particles, zinc oxide particles, magnesium oxide particles, zirconium oxide particles, aluminum oxide particles, aluminum hydroxide particles, barium sulfate particles, or zinc sulfide particles.

**15.** A resin comprising:

at least one repeating unit selected from a repeating unit represented by Formula (1-1) or a repeating unit represented by Formula (1-2),

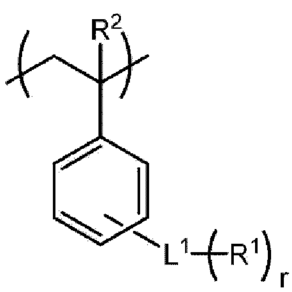

(1-1)

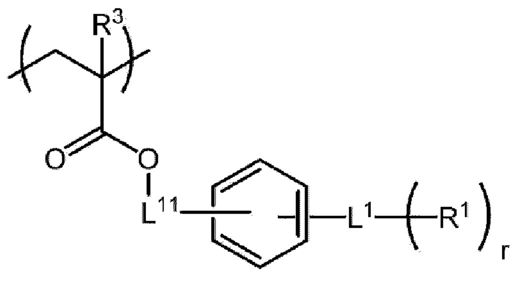

(1-2)

in the formulae, $L^1$ represents a single bond or an (r+1)-valent linking group,
$R^1$ represents an ethylenically unsaturated bond-containing group,
$R^2$ and $R^3$ each independently represent a hydrogen atom or an alkyl group,
$L^{11}$ represents a single bond or a divalent linking group, and
r represents an integer of 1 or more,
provided that in a case where r is 2 or more, r pieces of $R^1$'s may be the same or different from each other.

**16.** A film formed of the composition according to claim 1 or 2.

**17.** An optical sensor comprising: the film according to claim 16.

FIG. 1

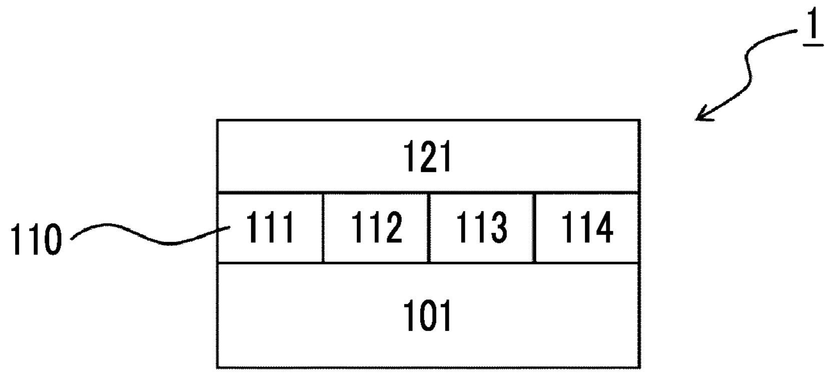


FIG. 2

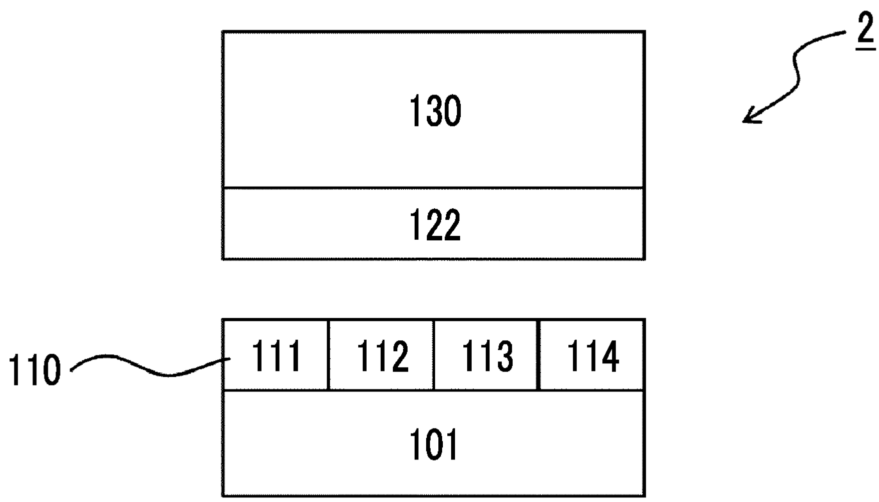

**INTERNATIONAL SEARCH REPORT**

International application No. **PCT/JP2022/035284**

**A. CLASSIFICATION OF SUBJECT MATTER**

***C08F 290/12***(2006.01)i; ***G01J 1/04***(2006.01)i; ***C08F 2/44***(2006.01)i; ***G02B 5/02***(2006.01)i
FI: C08F290/12; C08F2/44 A; G01J1/04 A; G02B5/02 B

According to International Patent Classification (IPC) or to both national classification and IPC

**B. FIELDS SEARCHED**

Minimum documentation searched (classification system followed by classification symbols)

C08F290/12; G01J1/04; C08F2/44; G02B5/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/262270 A1 (FUJIFILM CORP.) 30 December 2020 (2020-12-30) claims, paragraphs [0117]-[0125] | 1-17 |
| Y | | 1-17 |
| X | WO 2019/163505 A1 (FUJIFILM CORP.) 29 August 2019 (2019-08-29) claims, paragraphs [0029], [0038]-[0039], tables 2, 4 | 15 |
| Y | | 1-17 |
| X | WO 2018/037812 A1 (FUJIFILM CORP.) 01 March 2018 (2018-03-01) claims, paragraphs [0014], [0017]-[0036], tables 3-4, 6-8 | 15 |
| Y | | 1-17 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/035284**

| Patent document cited in search report | Publication date (day/month/year) | Patent family member(s) | Publication date (day/month/year) |
|---|---|---|---|
| WO 2020/262270 A1 | 30 December 2020 | EP 3992254 A1<br>claims, paragraphs [0136]-[0145]<br>KR 10-2022-0010539 A<br>TW 202104284 A | |
| WO 2019/163505 A1 | 29 August 2019 | US 2020/0369810 A1<br>claims, paragraphs [0053], [0086]-[0088], tables 2, 4<br>CN 111727208 A<br>TW 201936680 A | |
| WO 2018/037812 A1 | 01 March 2018 | US 2019/0185656 A1<br>claims, paragraphs [0063]-[0064], [0067]-[0131], tables 3-4, 6-8<br>EP 3505545 A1<br>KR 10-2019-0032451 A<br>TW 201831545 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019070714 A
- JP 2015067794 A
- JP 2013237593 A
- WO 2007060884 A
- JP 2014177613 A
- JP 2012208494 A
- US 20120235099 A
- JP 2012198408 A
- JP 2010168539 A
- JP 2013029760 A
- JP 2013043962 A
- WO 2018163668 A
- JP 2012137564 A
- JP 2017194662 A
- JP 2007269779 A
- JP 2014089408 A
- JP 2010054632 A
- WO 2015166779 A
- JP 2014130173 A
- JP 6301489 B
- WO 2018221177 A
- WO 2018110179 A
- JP 2019043864 A
- JP 2019044030 A
- JP 2019167313 A
- JP 2020055992 A
- JP 2013190459 A
- JP 2020172619 A
- WO 2020152120 A
- JP 2001233842 A
- JP 2000080068 A
- JP 2006342166 A
- JP 2000066385 A
- JP 2004534797 A
- JP 2017019766 A
- JP 6065596 B
- WO 2015152153 A
- WO 2017051680 A
- JP 2017198865 A
- WO 2017164127 A
- WO 2013167515 A
- JP 5430746 B
- JP 5647738 B
- JP 2012014052 A
- JP 2014137466 A
- WO 2013083505 A
- JP 2010262028 A
- JP 2014500852 A
- JP 2013164471 A
- JP 2013114249 A
- JP 4223071 B
- WO 2015036910 A
- WO 2019088055 A
- JP 2010527339 A
- JP 2011524436 A
- WO 2015004565 A
- JP 2016532675 A
- WO 2017033680 A
- JP 2013522445 A
- WO 2016034963 A
- JP 2017523465 A
- JP 2017167399 A
- JP 2017151342 A
- JP 6469669 B
- JP 2009258603 A
- JP 2011252065 A
- WO 2017159910 A
- JP 2015034961 A
- JP 2009217221 A
- JP 2012208374 A
- JP 2013068814 A
- JP 2016162946 A
- JP 6268967 B
- WO 2016181987 A
- WO 2020137819 A
- JP 2009288703 A
- JP 2009242604 A
- WO 2017159190 A
- JP 2010106268 A
- US 20110124824 A
- JP 2014041318 A
- WO 2014017669 A
- JP 2011132503 A
- JP 2020008634 A
- JP 2016216602 A
- JP 2010032698 A
- JP 2010164965 A
- JP 2015117327 A
- WO 2020084854 A
- JP 2015123351 A
- JP 2015157893 A
- JP 2015194521 A
- JP 2012046629 A
- JP 2019061199 A
- JP 2021032975 A
- JP 2019032434 A
- JP 2018018077 A
- JP 2016139112 A

- US 20210063745 A
- CN 112394509 B
- US 10921499 B
- KR 1020180061467 A
- JP 2018101034 A
- JP 2020101671 A
- TW 202028805 A
- JP 2009145395 A
- JP 2003262716 A
- JP 2003185831 A
- JP 2003261827 A
- JP 2012126830 A
- JP 2006169325 A
- KR 1020170122130 A
- JP 2013064993 A
- JP 2011054439 A

**Non-patent literature cited in the description**


- **MANABU KIYONO.** Titanium Oxide - Physical Properties and Applied Technology. Gihodo Shuppan Co., Ltd, 25 June 1991, 13-45
- Ultrafine Particles and Materials. SHOKABO Co., Ltd, 1993
- **HARUMA KAWAGUCHI.** Manufacturing & Application of Microspheres & Powders. CMC Publishing Co., Ltd, 2005
- *The Chemical Daily,* 13 November 2015
- *MATERIAL STAGE,* 2019, vol. 19 (3), 37-60
- *J. C. S. Perkin,* 1979, vol. II, 1653-1660
- *J. C. S. Perkin,* 1979, vol. II, 156-162
- *Journal of Photopolymer Science and Technology,* 1995, 202-232
- *The Chemical Daily,* 01 February 2016
- *The Chemical Daily,* 22 February 2016
- *Nikkei Business Daily,* 23 February 2016
- Dispersion Technology Comprehension. Johokiko Co., Ltd, 15 July 2005
- Actual comprehensive data collection on dispersion technology and industrial application centered on suspension (solid/liquid dispersion system). Publication Department, Management Development Center, 10 October 1978
- Extension of Use of Ink Jet - Infinite Possibilities in Patent. S.B. Research Co., Ltd, February 2005, 115-133